# EUROPEAN PATENT APPLICATION

(11) **EP 1 396 964 A2**
(43) Date of publication of application: **10.03.2004**
(21) Application number: 03017601.0
(22) Date of filing: 08.08.2003
(51) Int. Cl.: H04L 12/46

(54) **Virtual private network system**

(30) Priority: 16.10.2002 JP 2002302304; 09.08.2002 JP 2002233622
(71) Applicant: FUJITSU LIMITED, Kawasaki-shi, Kanagawa 211-8588 (JP)
(72) Inventor: Kakemizu, Mitsuaki, Fujitsu Limited, Kawasaki-shi, Kanagawa 211-8588 (JP); Yamamura, Shinya Fujitsu Nishi-Nihon Comm.Sys.Ltd., Fukuoka-shi, Fukuoka 814-8588 (JP); Wakameda, Hiroshi Fujitsu Nishi-Nihon Comm.Sys.Ltd, Fukuoka-shi, Fukuoka 814-8588 (JP); Taniguchi, Hiroyuki, Fujitsu Limited, Kawasaki-shi, Kanagawa 211-8588 (JP)
(74) Representative: HOFFMANN - EITLE

(57) **Abstract**

A home agent (HA) is endowed with a gateway function having a security function of an enterprise network. A VPN is established beforehand between the home agent arranged in a communications carrier and a security gateway within the enterprise network, when a service contract is made between the communications carrier and the enterprise. As a result, co-located mode of a mobile node (MN) is used, and VPN information according to a security level of a network that accommodates the mobile node is distributed in a location registration procedure of a mobile IP, so that a VPN that effectively uses a tunnel set-up process of the mobile IP is configured.

## Description

### Background of the Invention

### Field of the Invention

The present invention relates to a system for implementing a virtual private network between an organization network, which is a private network, and a network accommodating a mobile node, a mobile node, a home agent, and a communications controlling method.

### Description of the Related Art

In recent years, mobile environments using diverse networks typified by IMT-2000, a hot spot, a wireless LAN, etc. have been and continue to be implemented and access to an organization network, which is a private network typified by an enterprise network, via these networks has been increasing.

When an access is made from a foreign network to an organization network, a communication is normally made with an address assigned by the foreign network via a security gateway of the organization network. With regards to security, not many organization networks use this assigned address filtering method.

However, with the above described access method, different addresses are used inside and outside an organization network. Therefore, it cannot be said that a network environment similar to that in the case where a connection is directly made to the organization network is provided, and the demand for improving user convenience, and for enabling a seamless and safe communication regardless of connection status is increasing.

As a means for making a seamless communication, mobile IP defined by RFC 3220 (IP Mobility Support for IPv4) exists. However, the mobile IP is assumed to be used in networks operated with the same addressing architecture, and a move between networks having different addressing architectures is impossible. Especially, the mobile IP is normally used with a private address in an organization network, and routing in a public network such as the Internet is impossible.

At present, as a technology for transparently making routing with a private address in a public network, a virtual private network defined by RFC 2764 (A Framework for IP Based Virtual Private Networks) exists . Here, a tunnel set up between hosts is assumed to be included in a virtual private network. A method setting up a tunnel for a VPN gateway arranged in an organization network with an address assigned by a foreign network that accommodates a node, and making a communication with the node within the organization network is common.

A VPN device has a function (IPinIP) for adding an IP header, which is defined by RFC 2003 (IP Encapsulation within IP) and can be routed for a VPN communication, to a transfer IP packet. Enabling a communication, for example, with a private address or a protocol other than TCP/IP on the Internet that can originally pass only an IP packet having a global address is called "tunneling", which means that another communication is made to pass while an Internet communication is being made. Furthermore, IPSec defined by RFC 2401 (Security Architecture for the Internet Protocol) exists as a technology for encrypting and authenticating an IP packet to be tunneled so as to secure its confidentiality and safety.

To make a seamless communication with an organization network operated with a private address via a public network, routing must be made with a VPN in a public network by applying a private address in the organization network to a home address, which is a fixed address of a mobile IP.

Figs . 1 and 2 explain a method making a seamless communication with an organization network via a public network such as the Internet, according to a conventional technology.

A foreign network is a network in which a network connection service is provided by an organization different from an organization network typified by an Internet service provider, FOMA, CDMA 2000, and a hot spot, or by a carrier. Here, the hot spot is a communications network whose region is restricted, and which is configured by a wireless LAN. Examples of the hot spot include a network configured by a wireless LAN, etc. within a store, a company building, etc. Accordingly, a store or a company makes a contract with a mobile communications carrier, so that the hot spot is configured by being restricted to the store or the company building, although it is under the control of a service of the mobile communications carrier.

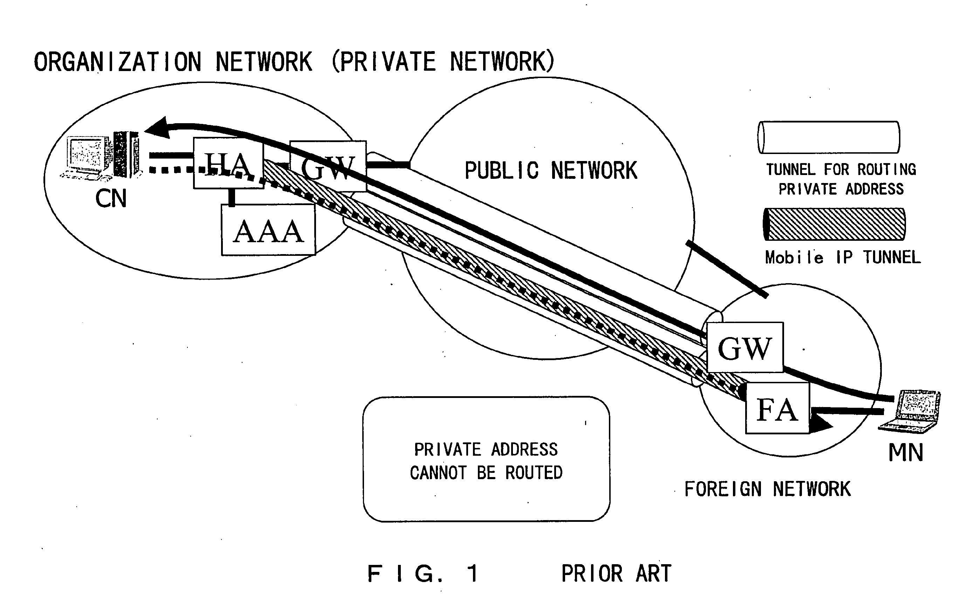

Conventionally, as shown in Fig. 1, routing with a private address cannot be made between a mobile node (MN defined by RFC 3220) and a foreign agent (FA) defined by RFC 3220, even if a VPN is established beforehand between a home agent (HA defined by RFC 3220) of an organization network and the foreign agent (FA) arranged in a foreign network. Namely, although the tunnel for making routing with a private address can be set up between the home agent (HA) and the foreign agent (FA), a communication cannot be made between the mobile node (MN) and the foreign agent (FA) if a global address assigned to the mobile node (MN) by the foreign network is not used. This is because a communication between the foreign agent (FA) and the mobile node (MN) is made via the foreign network.

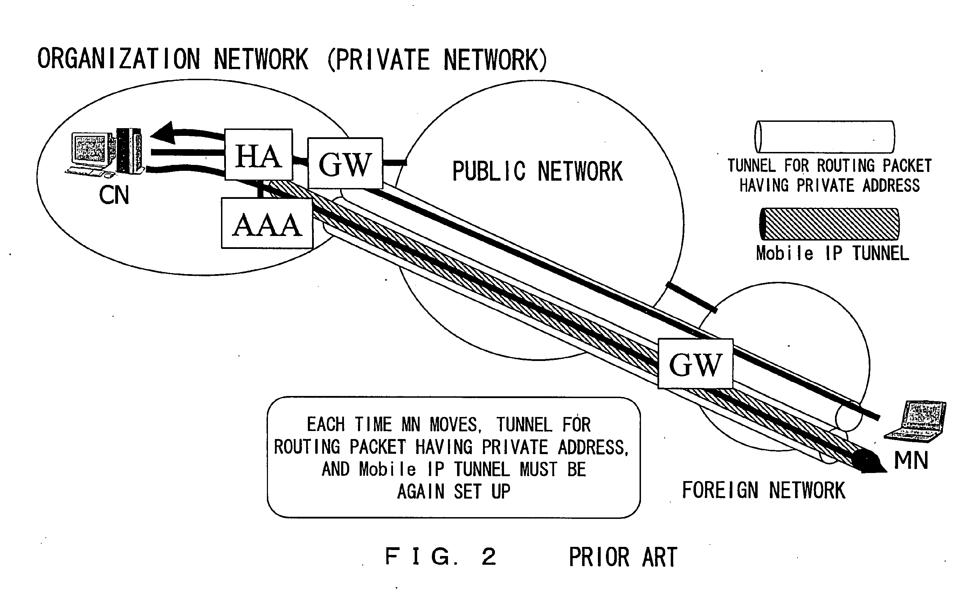

Therefore, a mobile node (MN) that supports co-located mode is used as shown in Fig. 2, so that a VPN for making routing with a private address is established between VPN gateways before a location registration is made with mobile IP, and the location registration of the mobile IP is made with the established VPN.

In this way, a communication using a private. address can be made between a home agent (HA) and a mobile node (MN). Namely, if the co-located mode is used, two-stage tunnel set-up operations for initially establishing a VPN with tunneling between a mobile node (MN) and a gateway (GW) of a network that accommodates a home agent (HA) , and for secondly setting up a mobile IP tunnel between the home agent (HA) and the mobile node (MN) with the established VPN become necessary.

The co-located mode is a mode defined by RFC 3220, in which an address assigned to a mobile node (MN) with DHCP (Dynamic Host Configuration Protocol), etc. is used as a care-of-address, and the mobile node (MN) itself sets up a mobile IP tunnel, and performs encapsulation and decapsulation.

The above described RFC 3220 describes the improvements in a protocol for routing an IP datagram to a mobile node on the Internet (see not patent Document 1).

Also, a conventional technique for providing a VPN establishment service with an IPSec tunnel between arbitrary terminals without endowing a special VPN function in cooperation with a location registration procedure of a mobile IP in a VPN system and a VPN establishing method in a mobile IP network already exists (see patent Document 1).

### [not patent Document 1]

Network Working Group, Request for Comments: 3220, Obsoletes: 2002, Category: Standards Track, C. Perkins, Ed, Nokia Research Center, January 2002, "IP Mobility Support for IPv4"

### [patent Document 1]

### Japanese Patent Application Publication No. 2002-44141

With the above described methods, routing cannot be made with a private address in a foreign network, if a foreign agent is arranged in the foreign network. At present, if a mobile node that supports the co-located mode is used, a communication with mobile IP is irrelevant to VPN establishment by the mobile node, and a tunnel for making routing with a private address, and a mobile IP tunnel must be set up. Therefore, the tunnel set-up process of the mobile IP cannot be effectively utilized, and a handover process performed when the mobile node moves is ineffective (a smooth handover cannot be made, since a time is required to establish a new path when switching is made between networks). Furthermore, since a packet must be doubly encapsulated and decapsulated during its transfer, a throughput is degraded.

According to the present invention, a home agent arranged within an organization network is endowed with a security gateway function of the organization network, or a VPN is established beforehand between a home agent arranged in a communications carrier network and a security gateway of an organization network when a service contract is made between the communications carrier and the organization, so that the co-located mode of a mobile node is used, and a mobile IP tunnel set-up process is effectively utilized by distributing VPN information to the mobile node in a mobile IP location registration procedure. As a result, an overhead of the tunnel set-up process is suppressed, routing on a public network can be made with a private address of an organization network, and a seamless and safe communication can be made with the private address unchanged.

### Summary of the Invention

An object of the present invention is to provide a system that enables a seamless and safe virtual private network service in a mobile environment inside/outside an organization network without changing a private address assigned by the organization network, etc.

A virtual private network system according to the present invention is a virtual private network system which controls a communication with a second address, is connected to a first network, and makes a communication via a second network with a first address used in the first network being a private network. The virtual private network system comprises: a first mobile unit making a communication by fixedly holding the first address; and a second unit obtaining a correspondence between the first address of the first unit and the second address for making a communication via the second network, and authenticating the first unit and forming a virtual private network between a communicating device accessing the first network and the second unit via the second network in a procedure for establishing a session that can be communicated even when said first unit moves.

A home agent according to the present invention is a home agent enabling a communication between a mobile node and a node connected to a private network according to a mobile IP. The home agent comprises: a unit establishing a virtual private network between the mobile node and the home agent; a unit authenticating an access of the mobile node; and a unit notifying the mobile node of information about the virtual private network.

A first router according to the present invention is a router enabling a communication between a mobile node and a node connected to a private network. The first router comprises: a unit detecting a care-of-address or a domain of a location registration request transmitted from the mobile node; and a communications controlling unit causing a communication between the mobile node and the node to be made via the router with a communications protocol having low secrecy between the mobile node and the router if a detected care-of-address or domain indicates a network that can guarantee secrecy of a communication, or with a communications protocol having high secrecy between the mobile node and the router if the care-of-address indicates a network that cannot fully guarantee the secrecy of the communication.

A second router according to the present invention is a router enabling a communication between a mobile node and a node connected to a private network. The second router comprises: a unit making a comparison between a care-of-address and a source address of a location registration request transmitted from the mobile node; and a communications controlling unit causing a communication between the mobile node and the node to be made via the router with a communications protocol having low secrecy between the mobile node and the router if the care-of-address does not indicate a predetermined communications carrier and matches the source address, or with a communications protocol having high secrecy between the mobile node and the router if the care-of-address mismatches the source address.

A first mobile node according to the present invention is a mobile node enabling a communication with a node connected to a private network. The first mobile node comprises: an obtaining unit obtaining information of a network to which the mobile node itself currently belongs; and a controlling unit performing a control to transmit a location registration request message to a private address of a router that manages a location of the mobile node if the obtained information of the network indicates a private network, to transmit a location registration request message to a global address of the router if the obtained information of the network indicates a predetermined communications carrier network, or to transmit a location registration request message including a request to set up a communications path having high secrecy to the global address of the router in other cases.

A second mobile node according to the present invention is a mobile node enabling a communication with a node connected to a private network. The second mobile node comprises: a unit making a comparison between a care-of-address of a network to which the mobile node currently belongs and a source address; and a communications controlling unit causing a communication between the mobile node and the node to be made via the router with a communications protocol having low secrecy between the mobile node and the router if the care-of-address does not indicate a predetermined communications carrier and matches the source address, or with a communications protocol having high secrecy between the mobile node and the router if the care-of-address mismatches the source address.

A third mobile node according to the present invention is a mobile node in a system enabling a communication between a mobile node and a node connected to a private network. The third mobile node comprises: a unit setting up a tunnel for a mobile IP communication; and a unit setting up a tunnel for a communication of the private network in a set-up procedure of the tunnel for the mobile IP communication, wherein the mobile node makes a communication by using one tunnel for a communication, which serves both as a tunnel for a mobile IP communication and as a tunnel for a private network communication.

According to the present invention, a correspondence between a first address, which is an invariant private address as a home address, and a second address, which can be used to communication and which is a care-of-address, is made, information of a virtual private network is exchanged between a mobile node and a home agent, and a virtual private network is established during a process for enabling the roaming of the mobile node, whereby a procedure for setting a mobile IP and for establishing a virtual private network is simplified. As a result, a virtual private network for a mobile node can be quickly established at the time of a handover. This causes a problem due to the conventional necessity of double encapsulation.

### Brief Description of the Drawings

Fig. 1 explains a method of making a communication with an enterprise network via a public network using a conventional technique;
Fig. 2 explains a method making a seamless communication with an enterprise network via a public network using a conventional technique;
Fig. 3 is a block diagram showing the functions of the present invention;
Figs. 4A and 4B show the details of a DIAMETER protocol (No. 1);
Figs. 5A to 5C show the details of the DIAMETER protocol (No. 2);
Fig. 6 shows the details of the DIAMETER protocol (No. 3);
Fig. 7 shows the details of the DIAMETER protocol (No. 4);
Fig. 8 shows the details of the DIAMETER protocol (No. 5);
Fig. 9 shows the details of the DIAMETER protocol (No. 6) ;
Fig. 10 shows the details of the DIAMETER protocol (No. 7);
Fig . 11A and 11B show the details of the DIAMETER protocol (No. 8);
Fig. 12 shows the details of the DIAMETER protocol (No. 9);
Fig. 13 shows the details of the DIAMETER protocol (No. 10);
Fig. 14 shows the details of the DIAMETER protocol (No. 11);
Fig. 15 shows the structure of a VPN database used in a preferred embodiment according to the present invention;
Fig. 16 shows the configuration of an IP network composed of the authentication server and the network devices, which have the functions explained with reference to Figs. 3 to 15 (No. 1);
Fig. 17 shows the configuration of an IP network composed of the authentication server and the network devices, which have the functions explained with reference to Figs. 3 to 15 (No. 2);
Fig. 18 shows the configuration of an IP network composed of the authentication server and the network devices, which have the functions explained with reference to Figs. 3 to 15 (No. 3);
Fig. 19 shows the configuration of an IP network composed of the authentication server and the network devices, which have the functions explained with reference to Figs. 3 to 15 (No. 4);
Fig. 20 shows the configuration of an IP network composed of the authentication server and the network devices, which have the functions explained with reference to Figs. 3 to 15 (No. 5);
Fig. 21 shows the configuration of an IP network composed of the authentication server and the network devices, which have the functions explained with reference to Figs. 3 to 15 (No. 6);
Fig. 22 shows the configuration of an IP network composed of the authentication server and the network devices, which have the functions explained with reference to Figs. 3 to 15 (No. 7);
Fig. 23 is a block diagram showing the functions of an AAA;
Fig. 24 shows the structure of a VPN information cache;
Fig. 25 shows the structure of a routing table;
Fig. 26 is a flowchart showing a process performed by an AAA (No. 1);
Fig. 27 is a flowchart showing a process performed by the AAA (No. 2);
Fig. 28 is a flowchart showing a process performed by the AAA (No. 3);
Fig. 29 is a block diagram showing the functions of an HA and a PCN;
Fig. 30 shows a VPN information table;
Fig. 31 is a flowchart showing a process performed by an MA (Mobile Agent) (No. 1);
Fig. 32 is a flowchart showing a process performed by the MA (Mobile Agent) (No. 2);
Fig. 33 is a flowchart showing a process performed by the MA (Mobile Agent) (No. 3);
Fig. 34 is a flowchart showing a process performed by the MA (Mobile Agent) (No. 4);
Fig. 35 is a flowchart showing a process performed by the MA (Mobile Agent) (No. 5);
Fig. 36 is a flowchart showing a process performed by the MA (Mobile Agent) (No. 6);
Fig. 37 is a flowchart showing a process performed by the MA (Mobile Agent) (No. 7);
Fig. 38 is a block diagram showing the functions of an MN;
Fig. 39 is a flowchart showing a process performed by the MN (No. 1);
Fig. 40 is a flowchart showing a process performed by the MN (No. 2);
Fig. 41 is a flowchart showing a process performed by the MN (No. 3);
Fig. 42 is a flowchart showing a process performed by the MN (No. 4);
Fig. 43 is a flowchart showing a process performed by the MN (No. 5);
Fig. 44 explains the case where a communication is made within an enterprise network, according to a preferred embodiment of the present invention (No, 1);
Fig. 45 explains the case where the communication is made within the enterprise network, according to the preferred embodiment of the present invention (No, 2);
Fig. 46 explains a path switching method in an enterprise network (No. 1);
Fig. 47 explains the path switching method in the enterprise network (No. 2);
Fig . 48 explains the path switching method in the enterprise network (No. 3);
Fig. 49 explains a communication between sites in a same management domain (No. 1);
Fig. 50 explains the communication made between the sites in the same management domain (No. 2);
Fig. 51 explains a path switching method in an enterprise network (No. 1);
Fig . 52 explains the path switching method in the enterprise network (No. 2);
Fig. 53 explains the path switching method in the enterprise network (No. 3);
Fig. 54 explains a communication made between sites in a same management domain (No. 1);
Fig. 55 explains the communication made between the sites in the same management domain (No. 2);
Fig. 56 explains a path optimization method between PCNs (No. 1);
Fig. 57 explains the path optimization method between the PCNs (No. 2);
Fig. 58 explains the path optimization method between the PCNs (No. 3);
Fig. 59 explains a communication made via a mobile communications carrier (No. 1);
Fig. 60 explains the communication made via the mobile communications carrier (No. 2);
Fig. 61 explains the communication made via the mobile communications carrier (No. 3);
Fig. 62 explains the operations of a communication made from a hot spot directly connected to a mobile communications carrier network (No. 1);
Fig. 63 explains the operations of the communication made from the hot spot directly connected to the mobile communications carrier network (No. 2);
Fig. 64 explains the operations of the communication made from the hot spot directly connected to the mobile communication carrier network (No. 3);
Fig. 65 explains the operations of a communication made from a roaming partner (No. 1);
Fig. 66 explains the operation of the communication made from the roaming partner (No. 2);
Fig. 67 explains the operation of the communication made from the roaming partner (No. 3);
Fig. 68 explains the operations performed in the case where an Internet connection is made via a proxy within an enterprise network;
Fig. 69 explains the operations of a communication made via a mobile communications carrier network (No. 1);
Fig. 70 explains the operations of the communication made via the mobile communications carrier network (No. 2);
Fig. 71 explains the operations of the communication made via the mobile communication carrier network (No. 3);
Fig. 72 explains the operations of a communication made from a hot spot directly connected to a mobile communications carrier network (No. 1);
Fig. 73 explains the operations of the communication made from the hot spot directly connected to the mobile communications carrier network (No. 2);
Fig. 74 explains the operations of the communication made from the hot spot directly connected to the mobile communications carrier network (No. 3);
Fig. 75 explains the operations of a communication made from a roaming partner (No. 1);
Fig. 76 explains the operations of the communication made from the roaming partner (No. 2); and
Fig. 77 explains the operations of the communication made from the roaming partner (No. 3).

### Description of the Preferred Embodiments

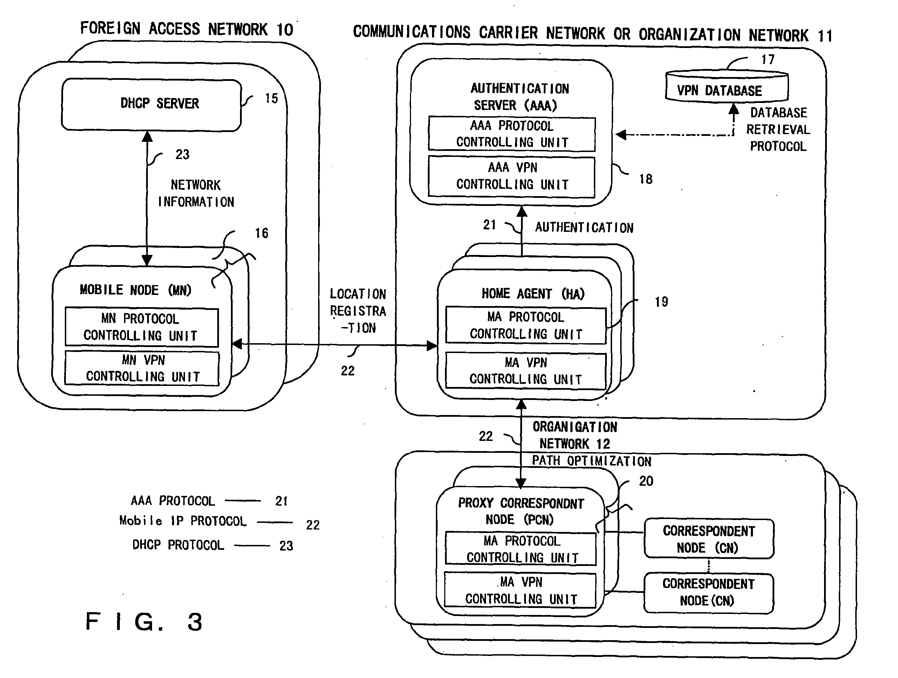

Fig. 3 is a block diagram showing the functions of the present invention.

The functions are summarized below.

### organization networks 11 and 12

The organization networks 11 and 12 are private networks that are closed within an organization such as an enterprise, a university, a government office, etc., and connected to a public network such as the Internet via a firewall. Either a private address or a global address may be used as an address format within an organization. However, an address used in the present invention is called a "private address" in the sense that it can be communicated only within an organization network. At the same time, an address that can be communicated in a public network is called a "global address". Accordingly, in mobile IP protocol, the "private address" is a home address, which corresponds to a fixed first address, whereas the "global address" is a care-of-address, which corresponds to a second address that can be used to communication.

Hereinafter, preferred embodiments according to the present invention are described by taking an enterprise network as a representative example of an organization network.

In Fig. 3, a plurality of home agents 19 are normally arranged, and perform a distributed process for one organization network 12. A set of such a plurality of home agents 19 is arranged for each different organization network 12.

### authentication server 18

The authentication server 18 is a server group that has a name (hereinafter referred to as an AAA) used by the IETF, and performs authentication, authorization, and accounting. The authentication server 18 is configured by an AAA protocol controlling unit extracting VPN information of a user who makes authentication request from a VPN database 17, and notifying an HA 19 of the VPN information with an AAA protocol 21, and an units controlling unit extracting VPN information in units of users, and determining a VPN path, in addition to the above described functions . In Fig. 3, the authentication server 18 is arranged in a communications carrier network or an enterprise network 11.

### AAA protocol 21

This is a protocol used by an AAA system. The AAA protocol can be used by every protocol that can transfer information of authentication, authorization, accounting, and a policy. In the preferred embodiments according to the present invention, a used protocol is not specified, but a DIAMETER protocol which is currently being studied by IETF is assumed to be used. To transfer new information required in the preferred embodiments according to the present invention, an extensible attribute parameter called an AVP (Attribute Value Pair) that is defined by the DIAMETER protocol is used. The extended attribute is information about VPN establishment.

### database retrieval protocol

This is a protocol for retrieving a VPN database 17. A used protocol depends on a database product that implements the VPN database 17. LDAP (Light Directory Access Protocol) or SQL is normally used. The preferred embodiments according to the present invention do not limit a retrieval protocol and the operations of the database.

### VPN database 17

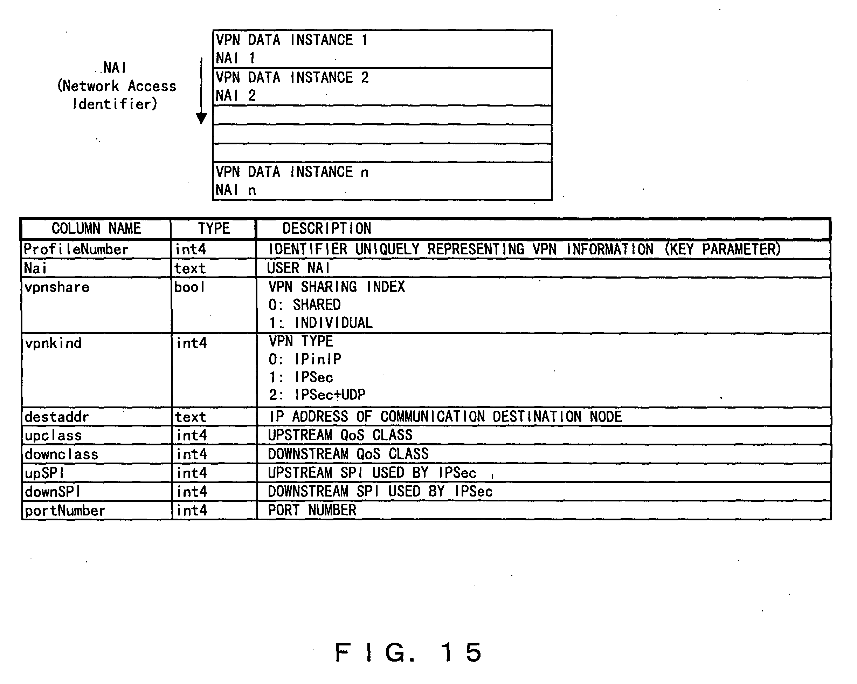

Fig. 15 exemplifies the structure of the VPN database 17 used in the preferred embodiments according to the present invention.

The VPN database 17 is a set of VPN data instances set by respective users. Each of the instances corresponds to one VPN. Each of the VPN data instances is composed of a profile number (ProfileNumber) , which is an identifier uniquely representing VPN information, a network identifier (Nai) of a user, a VPN sharing index (vpnshare) indicating whether a security relationship shared by security gateways or a security relationship specific to a user is used, a VPN type (vpnkind), an IP address (destaddr) of a communication destination terminal, an upstream QoS class (upclass) , a downstream QoS class (downclass), an upstream SPI (upSPI) used by IPSec, a downstream SPI (downSPI) used by IPSec, and an IP port number (portNumber) used for UDP encapsulation.

If the sharing index is set to 0, upclass, downclass, upSPI, and downSPI may be omissible. This database is retrieved with a user NAI. All of retrieved instances, to which address information is added, are recorded to a VPN information cache to be described later.

### DHCP protocol 23

This indicates all of network establishment protocols for nodes, which are defined by RFC 2131 and any future changes to them. A mobile node (MN 16) uses a DHCPREQUEST message, and makes a network information request to a DHCP server 15 arranged in a network, which is a foreign access network 10. The DHCP server 15 informs the mobile node (MN 16) of the network information with a DHCPACK message. The network information notified with the DHCPACK message includes an IP address of the mobile node (MN 16), a net mask, a gateway address, a domain name, a DNS address, etc. Although the preferred embodiments according to the present invention assume a DHCP protocol as an address obtaining means of the mobile node (MN 16), a protocol is not limited as long as it can obtain an IP address from a network.

### mobile IP protocol 22

This indicates all mobile IP protocols defined by RFC 3220 and any future changes to them.

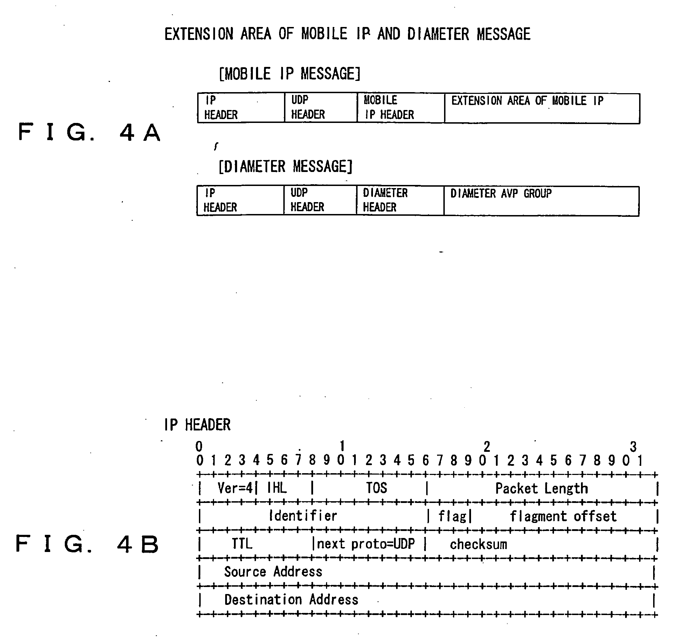

Figs. 4 to 16 show the details of the DIAMETER protocol.

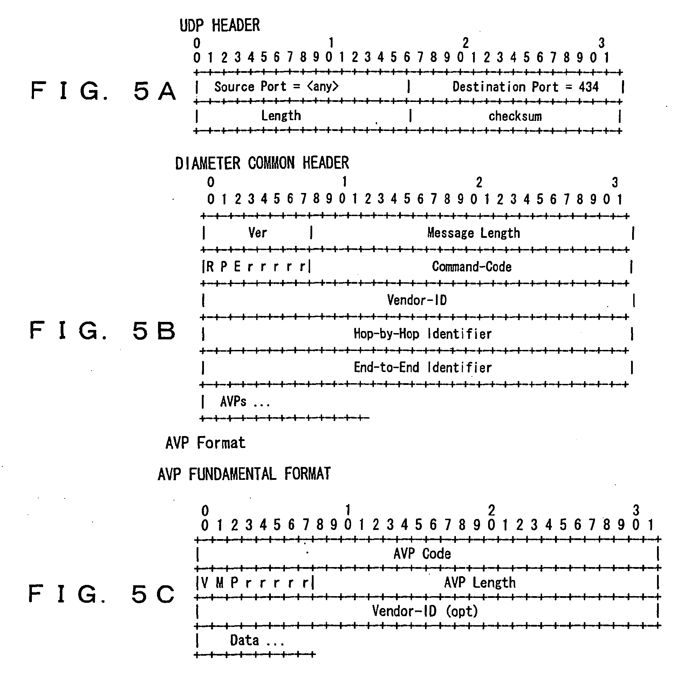

Figs. 4 and 5 show the structures of a mobile IP message, and a DIAMETER message. An IP header and a UDP header are used in common in these messages . The headers and an AVP format of the mobile IP message and the DIAMETER message in Fig. 4A are structured as shown in Figs. 4B to 5C.

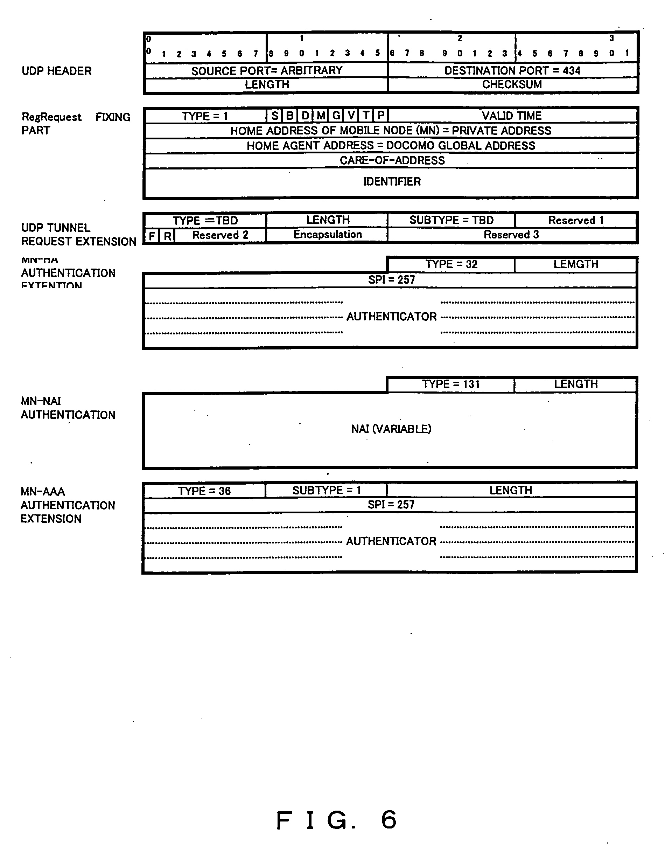

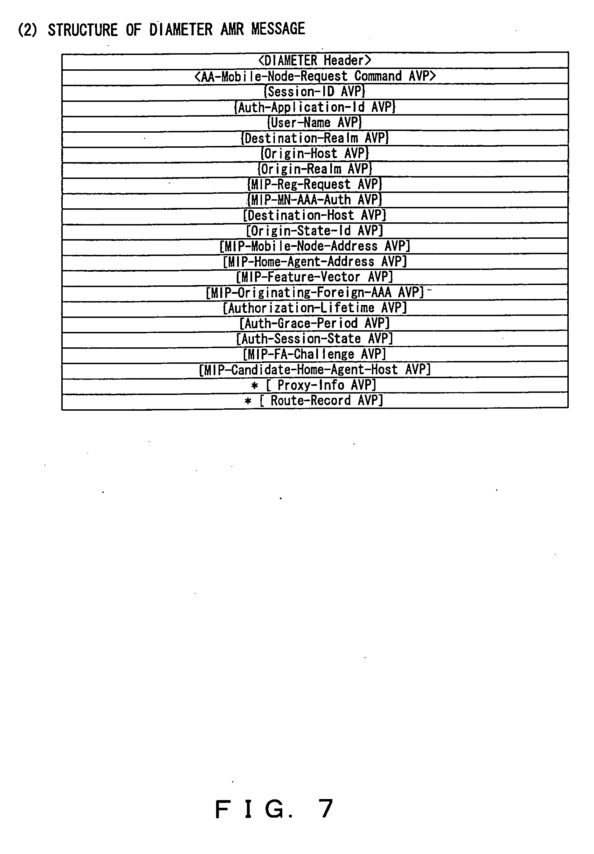

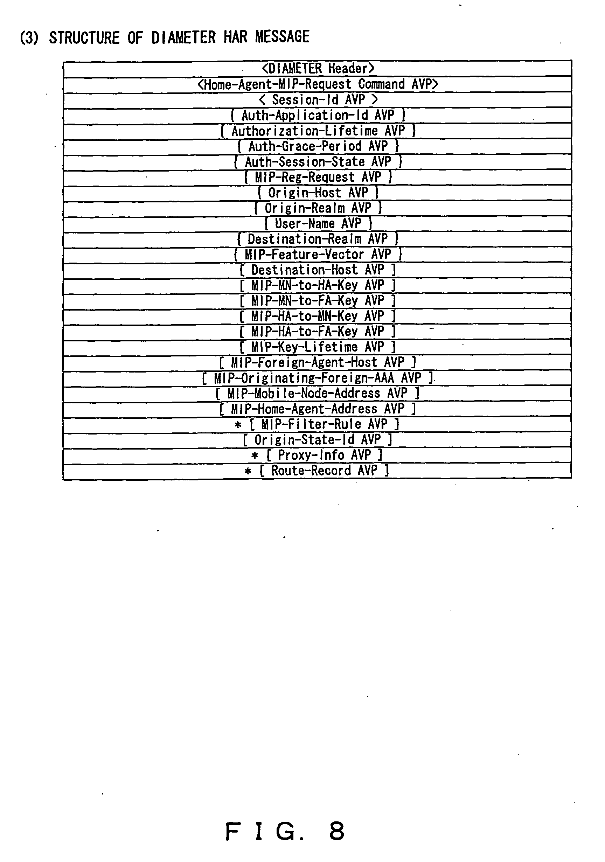

Additionally, Fig. 6 shows the structure of a location registration request (Reg.Request) message of mobile IP, Fig. 7 shows the structure of an authentication request (AMR: AA Mobile Node Request) message of DIAMETER, and Fig. 8 shows the structure of a home agent registration request (HAR: Home Agent MIP Request) message of the DIAMETER.

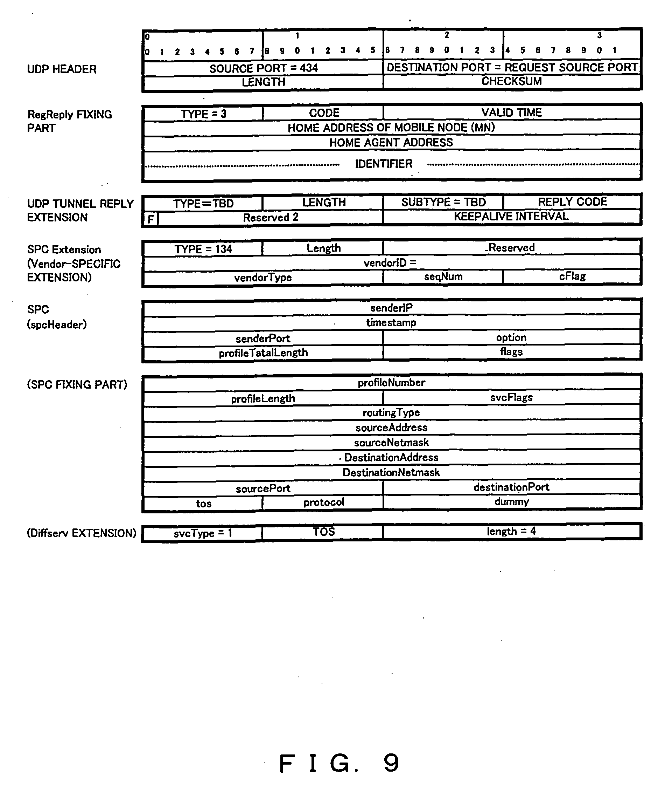

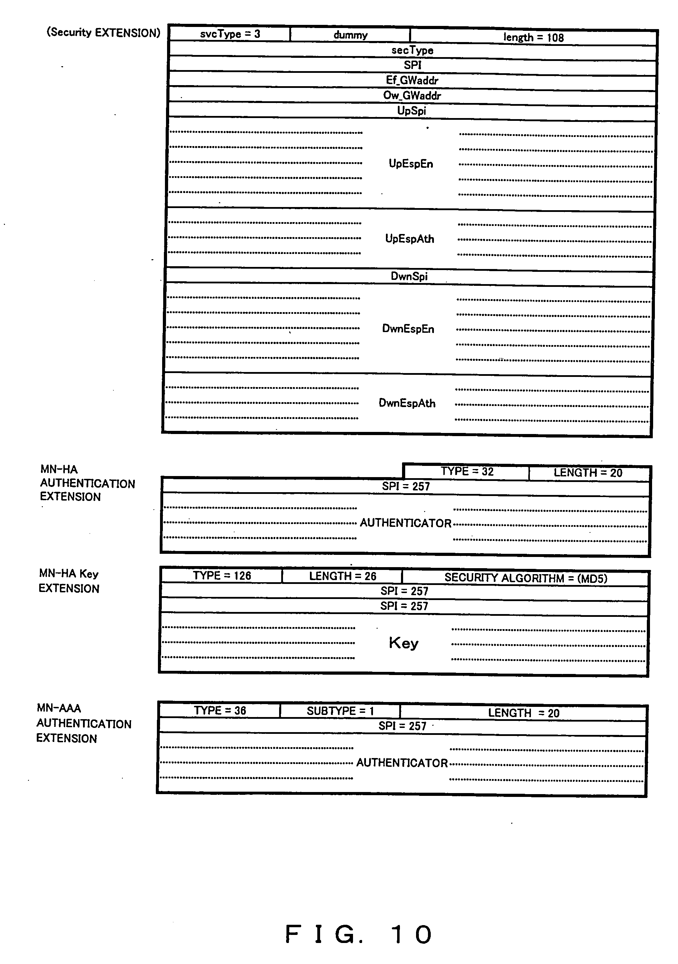

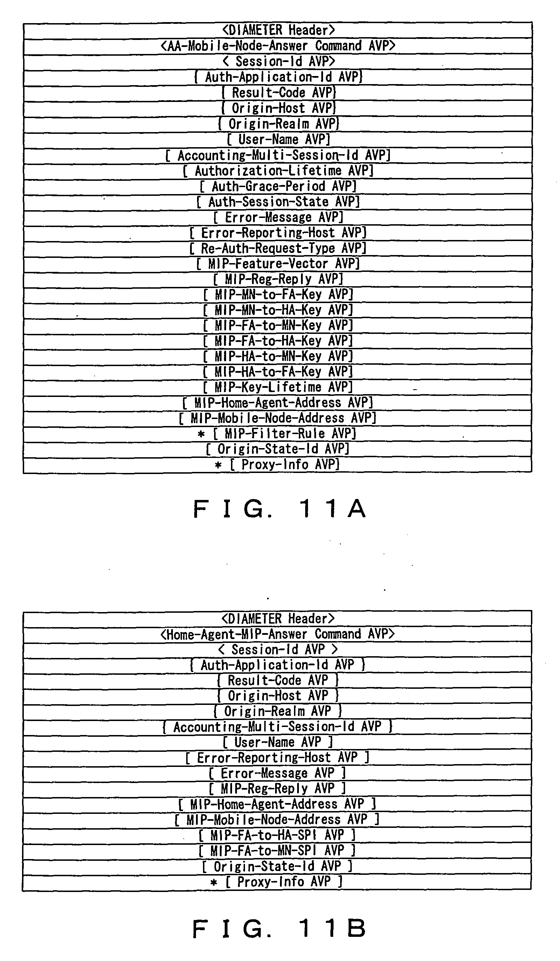

Figs. 9 and 10 show the structure of a location registration reply (Reg.Reply) message of the mobile IP, Fig. 11A shows the structure of an authentication answer (AMA: AA Mobile Node Answer) message of the DIAMETER, and Fig. 11B shows the structure of a home agent registration answer (HAA: Home Agent MIP Answer) message of the DIAMETER.

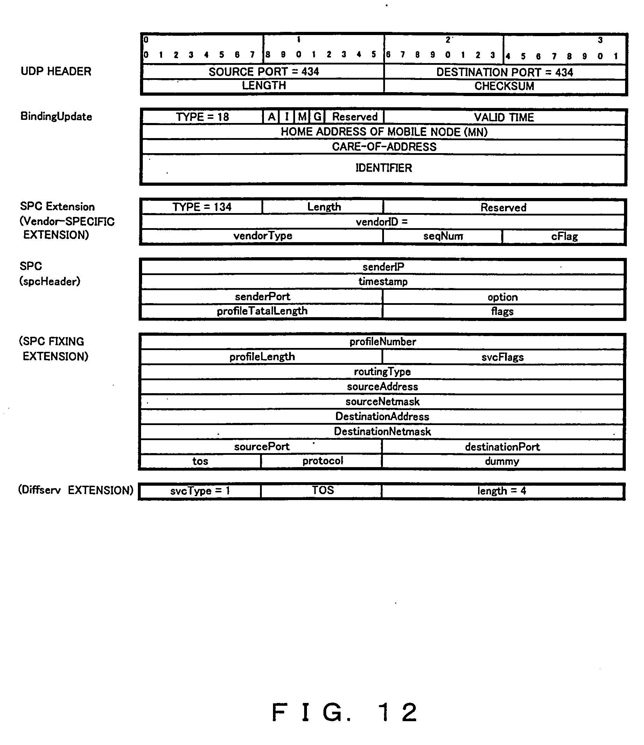

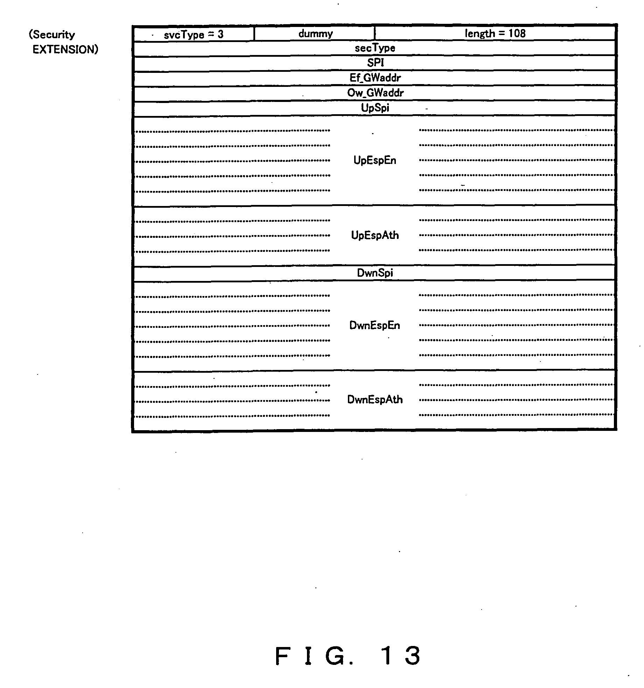

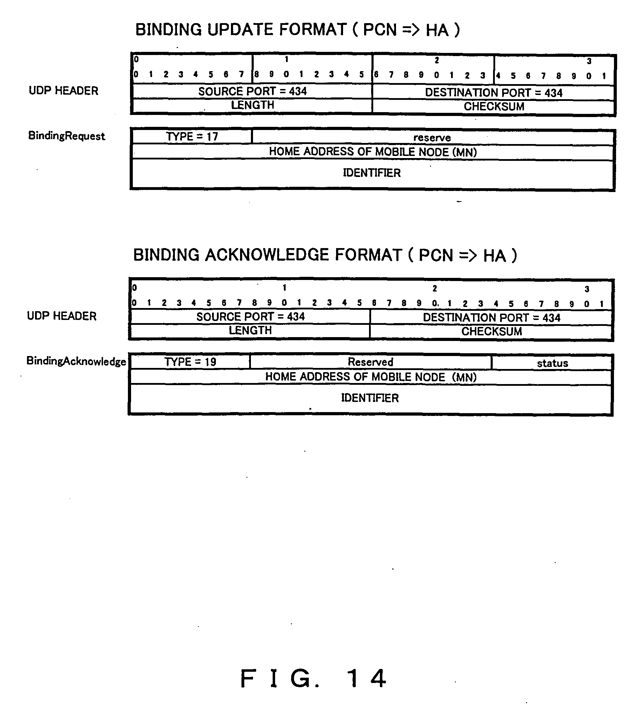

Figs. 12 and 13 show the structure of a binding update (BU) message of mobile IP, which is intended to optimize a path for directly transmitting a packet in the direction from a CN to an MN not via an HA. Fig. 14 shows the structure of a binding acknowledge (BA) message of the mobile IP.

### home agent (HA) 19

This is a function (hereinafter abbreviated to HA) for managing the location of a mobile node (MN 16) with a procedure of the mobile IP protocol 22 defined by RFC 3220. The home agent is sometimes called a mobile communications controlling device or a router.

A network device in the preferred embodiments according to the present invention is arranged as a security gateway within the communications carrier network or the enterprise network 11. The home agent (HA 19) is an agent that possesses a private address assigned by the enterprise network 12 as a home address. A packet transmitted to the home agent (HA 19), whose destination is the home address of the mobile node (MN 16), is encapsulated and transmitted to a care-of-address of the mobile node (MN 16), which corresponds to the home address. This address correspondence is managed by a table called a mobility binding. Additionally, the HA 19 notifies the mobile node (MN 16) of VPN information by setting a service profile in a location registration reply (Reg.Reply) message. The HA 19 in the preferred embodiments according to the present invention also serves as a VPN gateway function for performing IPSec encapsulation after UDPinIP encapsulation so as to support an IPinIP, IPSec, or an IPSec+UDP packet for which NAT (Network Address Translation) and NAPT (Network Address Port Translation) are performed, and comprises an MA protocol controlling unit (mobile agent protocol controlling unit) analyzing VPN information notified with the AAA protocol and the IP protocol, and an MA VPN controlling unit (Mobile Agent VPN controlling unit) setting up a tunnel at a security level specified by a network kernel based on analyzed VPN information.

### proxy correspondent node (PCN) 20

This is a network function (hereinafter abbreviated to a PCN) for establishing a VPN for a destination notified from the home agent (HA 19) with a mobility binding update process of the mobile IP protocol 22. The loopback within the enterprise network, and a tunnel between PCNs are set up using a binding update (BU) message from the home agent (HA 19), so that path optimization to the mobile node (MN 16) is made. The PCN in the preferred embodiments according to the present invention also serves as a security gateway function of IPinIP, IPSec, and IPSec+UDP, and comprises an MA protocol controlling unit analyzing VPN information notified with the mobile IP protocol, and an MA VPN controlling unit setting up a tunnel at a security level specified by a network kernel based on analyzed VPN information. In Fig. 3, the PCN 20 is arranged in the enterprise network 12.

### mobile node (MN) 16

The mobile node (MN 16) , which is a network device in the preferred embodiments according to the present invention, is a function (hereinafter abbreviated to an MN) that is defined by RFC 3220, and can move within a network while maintaining a session with the procedure of the mobile IP protocol 22. The mobile node (MN 16) in the preferred embodiments according to the present invention has a tunneling function of IPinIP, IPSec, and IPSec+UDP, and performs encryption/decryption, and encapsulation/decapsulation. The mobile node (MN 16) decapsulates an encapsulated packet that is transmitted to a care-of-address, and notifies an application corresponding to the home address of the packet. Furthermore, the MN encapsulates a user packet, which is notified from an application with the home address, by using the care-of-address, and transmits the packet to the correspondent node (CN). Additionally, the MN sets up an IPSec or an IPSec+UDP tunnel in addition to a normal IPinIP tunnel according to a security level set in a service profile notified with a location registration reply (Reg.Reply) message from the home agent (HA 19), and also sets up a similar tunnel as a tunnel (normally called a reverse tunnel) from the mobile node (MN 16) to the home agent (HA 19). The MN comprises an MN protocol controlling unit analyzing VPN information notified with the mobile IP protocol, and an MN VPN controlling unit setting up a tunnel at a security level specified by a network kernel based on analyzed VPN information. Explanation about the present invention is provided by taking a laptop personal computer, which can make a communication by using the mobile IP protocol, as an example.

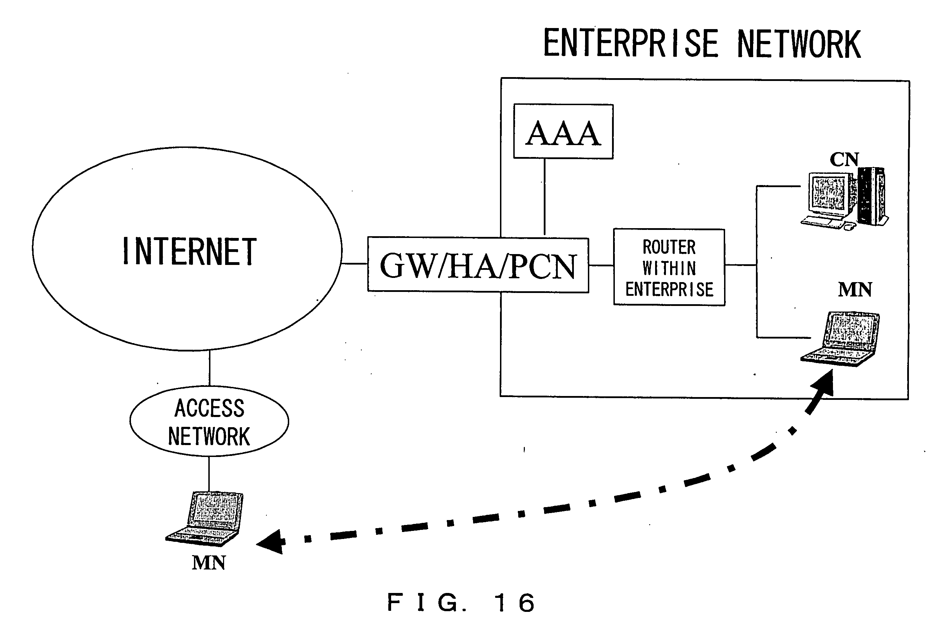

Figs. 16 to 22 show the configuration of an IP network composed of the authentication server and the network devices, which have the functions explained with reference to Figs. 3 to 15.

Fig. 16 is based on a network configured by an enterprise network operated with a private address, a public network (such as the Internet) operated with a global address, and an access network that assigns a global address to a node connected to the network based on a mutual connection contract with the enterprise network, and provides an accessing means to the enterprise network.

The system shown in Fig. 16 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) authenticating the mobile node (MN) within the enterprise network; and a home agent (HA) that exists within the enterprise network, and manages the location of the mobile node (MN).

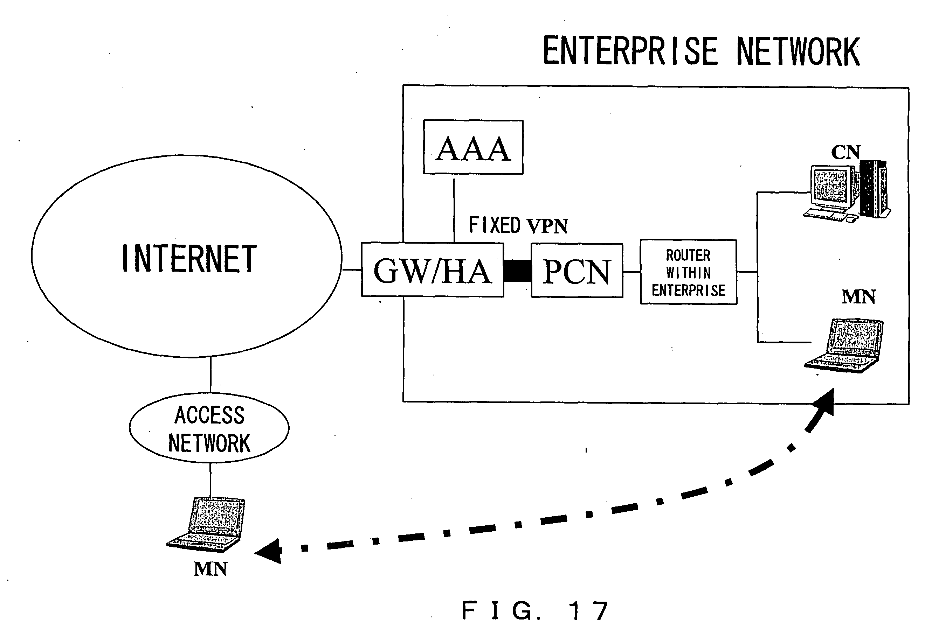

Fig. 17 is based on a network configured by an enterprise network operated with a private address, a public network (such as the Internet) operated with a global address, and an access network that assigns a global address to a node connected to the network based on a mutual connection contract with the enterprise network, and provides an accessing means to the enterprise network.

The system shown in Fig. 17 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) that exists in the enterprise network, and authenticates the mobile node (MN); a home agent (HA) that exists in a security gateway of the enterprise network, and manages the location of the mobile node (MN); and a proxy correspondent node (PCN) that exists in the enterprise network, and optimizes a path by using a binding update message from the home agent (HA).

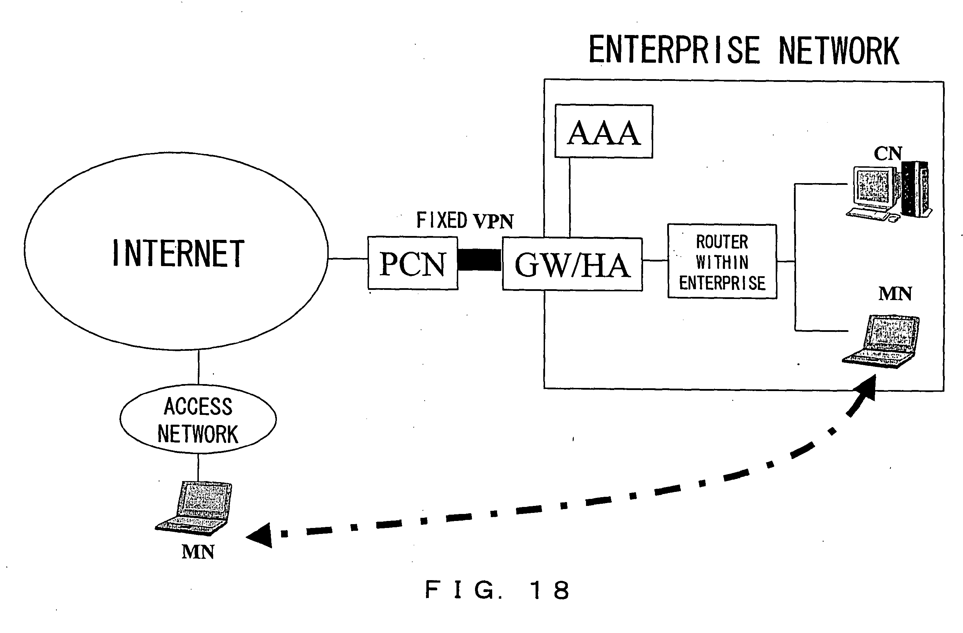

Fig. 18 is based on a network configured by an enterprise network operated with a private address, a public network (such as the Internet) operated with a global address, and an access network that assigns a global address to a node connected to the network based on a mutual connection contract with the enterprise network, and provides an accessing means to the enterprise network.

The system shown in Fig. 18 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) that exists in the enterprise network, and authenticates the mobile node (MN); a home agent (HA) that exists in a security gateway of the enterprise network, and manages the location of the mobile node (MN); and a proxy correspondent node (PCN) that exists in the enterprise network, and makes path optimization by using a binding update message from the home agent (HA) . When a service is started, a tunnel is set up between the HA and the PCN with IPSec (packet encryption and authentication technique standardized by the IETF) in consideration of security.

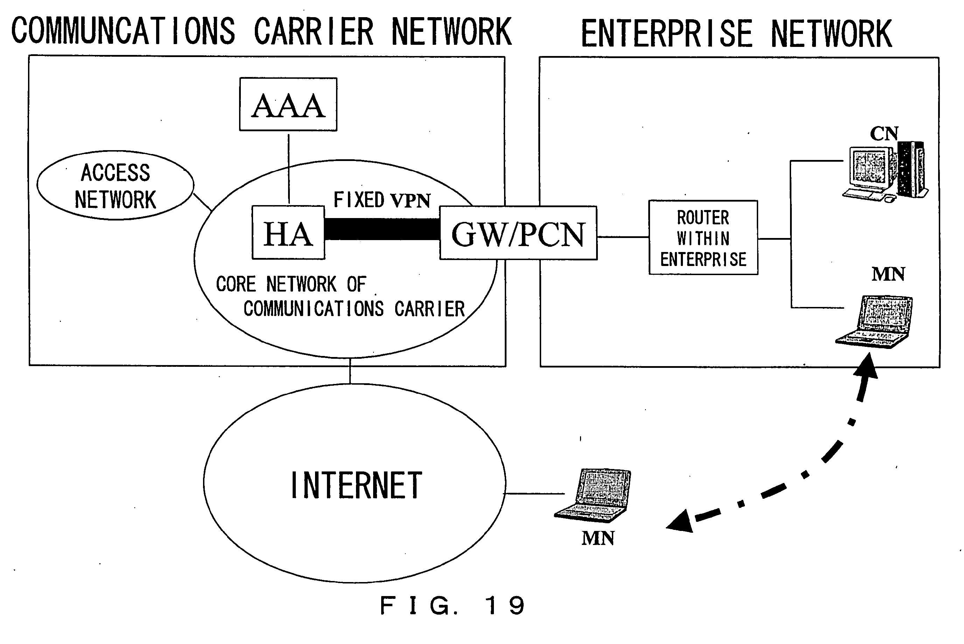

Fig. 19 is based on a network configured by an enterprise network operated with a private address, a public network (such as the Internet) operated with a global address, and a communications carrier network that assigns a global address to a node connected to the network based on a mutual connection contract with the enterprise network, and provides an accessing means to the enterprise network.

The system shown in Fig. 19 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) that exists in the communications carrier network, and authenticates the mobile node (MN); a home agent (HA) that exists in the communications carrier network, and manages the location of the mobile node (MN) with the private address of the enterprise network; a gateway device that exists in the enterprise network, and connects the enterprise network and the home agent (HA) with a VPN via the public network; and a proxy correspondent node (PCN) that exists in a security gateway of the enterprise network, and loops back a communication to the mobile node (MN) staying in the enterprise network according to an instruction of the home agent (HA) within the enterprise network. When a service is started, an IPSec tunnel is set up in consideration of security.

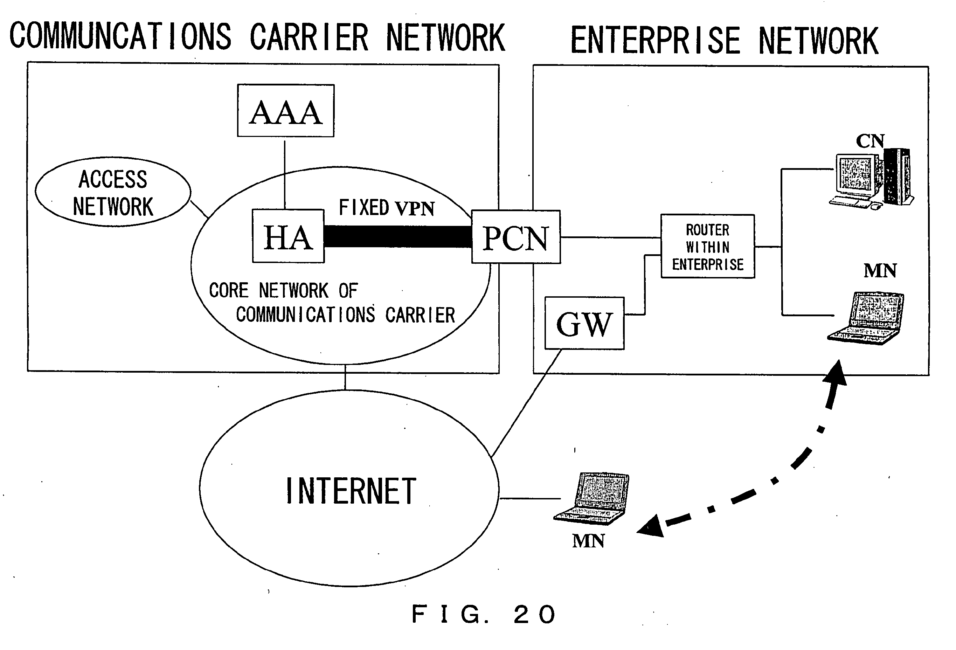

Fig. 20 is based on a network configured by an enterprise network operated with a private address, a public network (such as the Internet) operated with a global address, and a communications carrier network that assigns a global address to a node connected to the network based on a mutual connection contract with the enterprise network, and provides an accessing means to the enterprise network.

The system shown in Fig. 20 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) that exists in the communications carrier network, and authenticates the mobile node (MN); a home agent (HA) that exists in the communications carrier network, and manages the location of the mobile node (MN) with the private address of the enterprise network; a gateway device that exists in the enterprise network, and connects the enterprise network and the home agent (HA) with a VPN via the public network; and a proxy correspondent node (PCN) that exists in the gateway to the communications carrier network, and loops back a communication to the mobile node (MN) staying in the enterprise network according to an instruction of the home agent (HA) within the enterprise network. When a service is started, an IPSec tunnel is set up between the HA and the PCN in consideration of security.

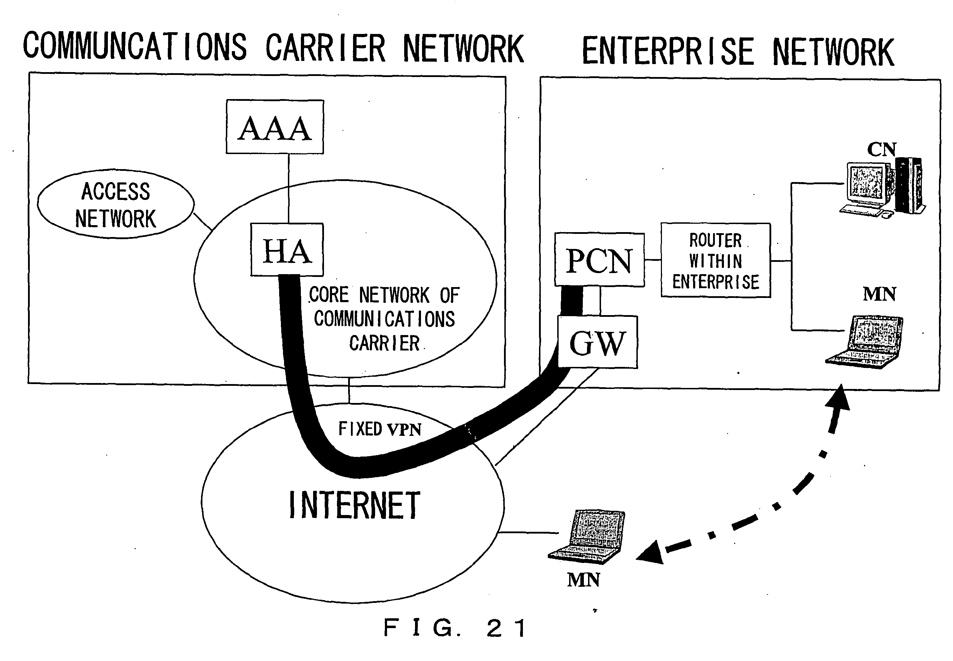

Fig. 21 is based on a network configured by an enterprise network operated with a private address, a public network (such as the Internet) operated with a global address, and a communication carrier network that assigns a global address to a node connected to the network based on a mutual connection contract with the enterprise network, and provides an accessing means to the enterprise network.

The system shown in Fig. 21 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) that exists in the communications carrier network, and authenticates the mobile node (MN); a home agent (HA) that exists in the communications carrier network, and manages the location of the mobile node (MN) with the private address of the enterprise network; a gateway device that exists in the enterprise network, and connects the enterprise network and the home agent (HA) with a VPN via the public network; and a proxy correspondent node (PCN) that exists in the enterprise network, and loops back a communication to the mobile node (MN) staying in the enterprise network according to an instruction of the home agent (HA) within the enterprise network. When a service is started, an IPSec tunnel is set up between the HA and the PCN in consideration of security.

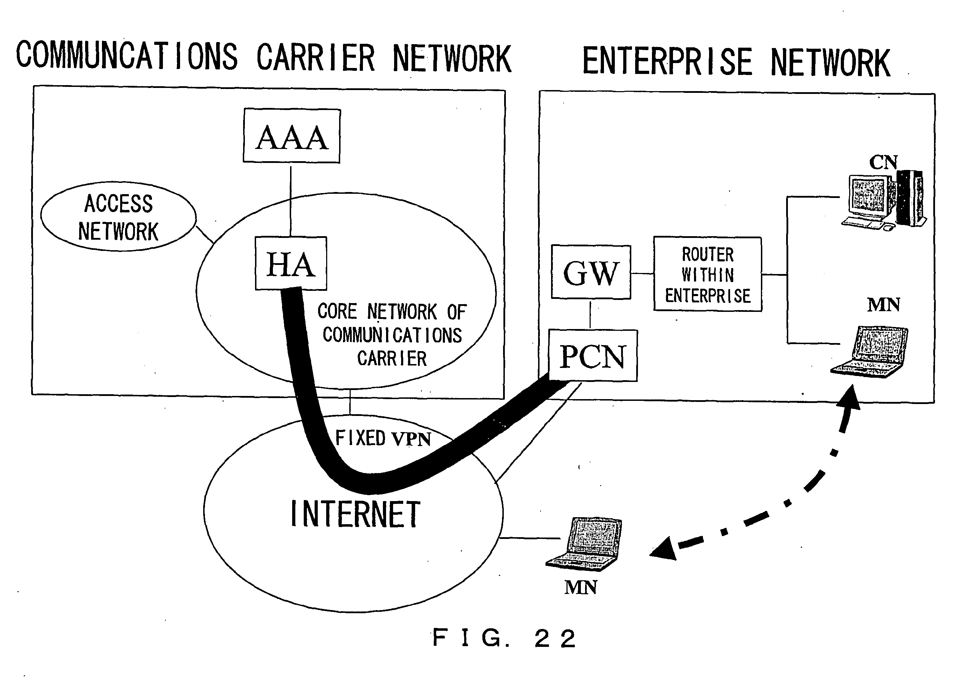

Fig. 22 is based on a network configured by an enterprise network operated with a private address, a public network (such as the Internet) operated with a global address, and a communications carrier network that assigns a global address to a node connected to the network based on a mutual connection contract with the enterprise network, and provides an accessing means to the enterprise network.

The system shown in Fig. 22 is a system configured by: a mobile node (MN) that has a private address within the enterprise network as a home address, which is an invariant address of the mobile IP protocol, moves between the enterprise network and the access network being a foreign network while holding the private (home) address, and continues a communication with the enterprise network; an authentication server (AAA) that exists in the communications carrier network, and authenticates the mobile node (MN); a home agent (HA) that exists in the communications carrier network, and manages the location of the mobile node (MN) with the private address of the enterprise network; a gateway device that exists in the enterprise network, and connects the enterprise network and the home agent (HA) with a VPN via the public network; and a proxy correspondent node (PCN) that exists in the enterprise network, and loops back a communication to the mobile node (MN) staying in the enterprise network according to an instruction of the home agent (HA) within the enterprise network. When a service is started, an IPSec tunnel is set up between the HA and the PCN in consideration of security.

### detailed descriptions of functional entities AAA

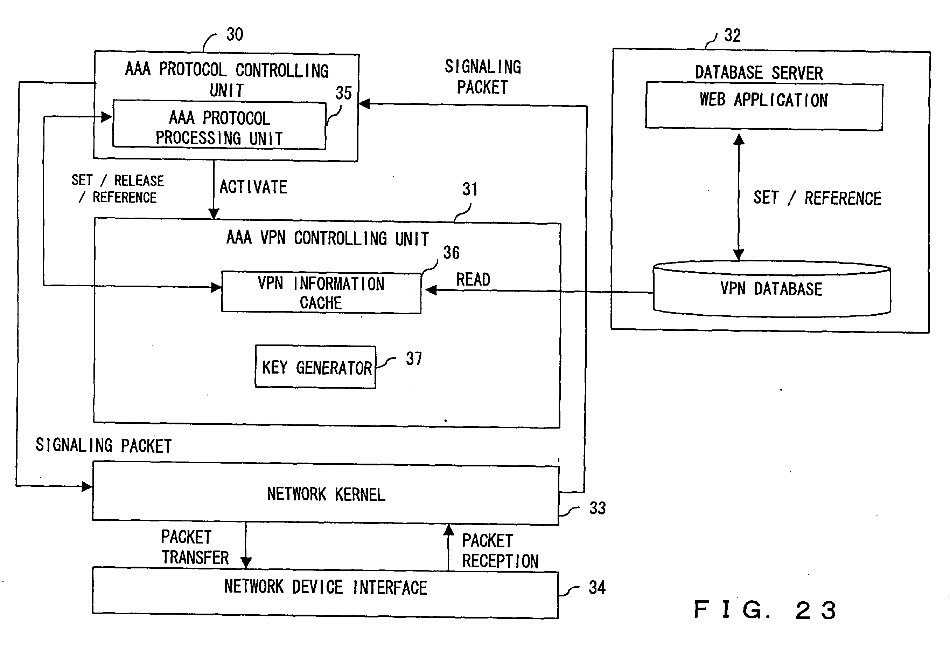

Fig. 23 is a block diagram exemplifying the functions of the AAA 18 shown in Fig. 3.

The AAA is configured by an AAA protocol controlling unit 30, an AAA VPN controlling unit 31, a database server 32, a network kernel 33, and a network device interface 34.

The AAA protocol controlling unit 30 is configured by an AAA protocol processing unit 35 controlling an AAA protocol.

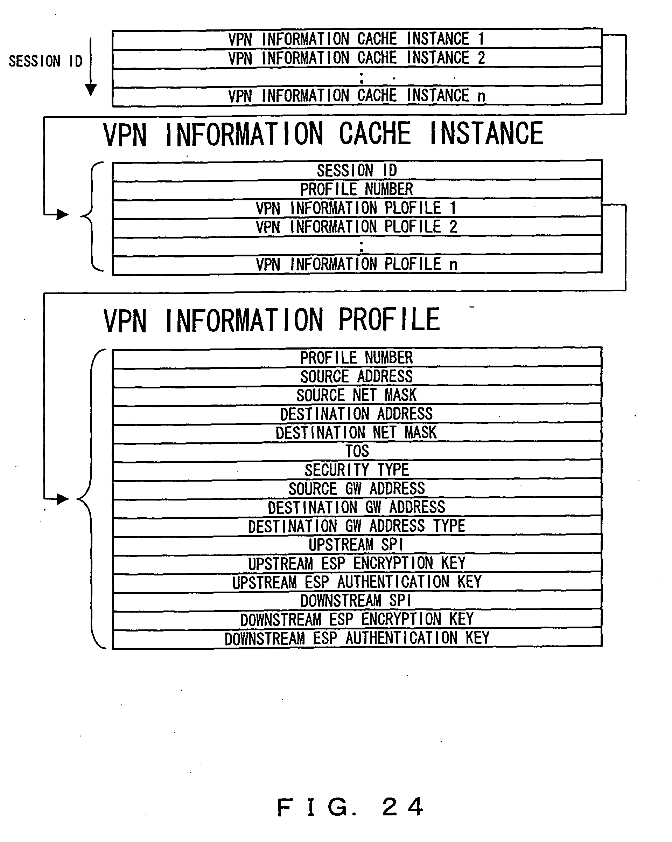

The AAA VPN controlling unit 31 is configured by a VPN information cache (shown in Fig. 24) caching VPN information extracted from the VPN database, and a key generator 37. A key generated by the key generator 37 is used, for example, to encrypt data that passes through an established VPN.

Fig. 24 exemplifies the structure of the VPN information cache.

The VPN information cache is, for example, a set of VPN information cache instances, and is retrieved with a unique session ID that includes information specific to a user in a network, and is valid while a user accesses the network. Each VPN information cache instance is configured by a session ID, which is a unique identifier, the number of profiles, which indicates the number of VPNs established by a corresponding user, and a VPN information profile including the establishment information of each of the VPNs. The VPN information profile is configured by a profile number, which is an identifier for uniquely identifying a VPN, source and destination IP addresses, which are intended to identify a packet to which a VPN is applied, their net masks, a TOS value set in a packet, a security type indicating whether AH (Authentication Header Protocol), ESP (Encapsulating Security Payload), or only encapsulation is used to set IPSec, gateway addresses at a source and a destination, which are an entry and an exit of an IPSec tunnel and referenced in IPSec tunnel mode, a destination GW type indicating whether or not a destination gateway can establish a dynamic VPN, SPIs (Security Parameter Indexes), which are security identifiers in upstream and downstream directions, an ESP encryption key, and an ESP authentication key.

The database server 32 is configured by the VPN database (in Fig. 15) and a WEB application.

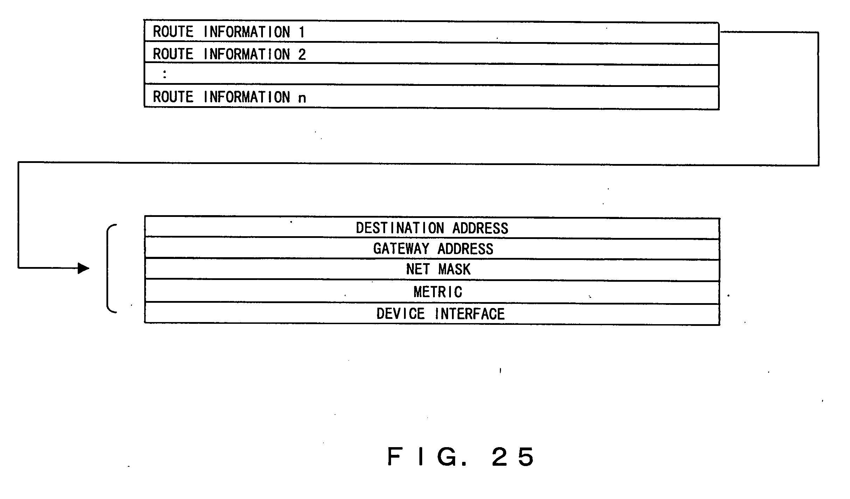

The network kernel 33 is an operating system controlling an IP packet transfer, and a physical interface, which is a connecting point to a network, and has a routing table (shown in Fig. 25) for determining the route of an IP packet transfer. The network kernel 33 performs queue controls for encapsulating, editing, and transmitting a packet, and the like. However, these functions depend on an operating system, and are not limited in the preferred embodiments according to the present invention.

Fig. 25 exemplifies the structure of the routing table. A normal routing table is configured by a destination address, a gateway address, a net mask, a metric, and an output interface. A destination network node is determined with the destination address and the metric. The preferred embodiments according to the present invention do not depend on the structure of the routing table. Hereinafter, a specific explanation is provided by taking as an example a network kernel that can set up a virtual network device interface at an output destination.

Additionally, the network kernel 33 has a function for decapsulating a packet upon receipt of the encapsulated packet. The network kernel 33 also has a function for decrypting an encrypted packet by referencing ESP information held by a tunnel controlling part, if the decapsulated packet includes an ESP header. Furthermore, the network kernel 33 performs UDP decapsulation if data decapsulated with IPSec has a UDP (User Datagram Protocol) format. These functions depend on the implementations of encapsulation and IPSec themselves, and are not the essentials. Therefore, only their summaries are provided.

The network device interface 34 is an interface with a network device. The network device interface 34 falls into a physical network device interface and a virtual network device interface depending on an implementation method.

The physical network device interface is an interface card of, for example, LAN, ISDN, ATM, etc. A control driver of the physical network device interface is called a "real device".

The virtual network device interface is an interface with a virtual network device. This interface is a virtual interface card that implements the functions of tunneling by software, IPSec, etc. according to a control similar to that of the physical network device interface. A driver of the virtual network device interface that has the functions such as tunneling, etc. is called a "virtual device". The network kernel 33 references the routing table, and transmits/receives packets to/from the virtual device, so that encapsulation/decapsulation are performed. In the explanation of the present invention, IPinIP is implemented by a virtual device tunnel, and IPSec and IPSec+UDP are implemented by a virtual device ipsec. As a matter of course, these functions may be implemented by hardware (physical network device interface).

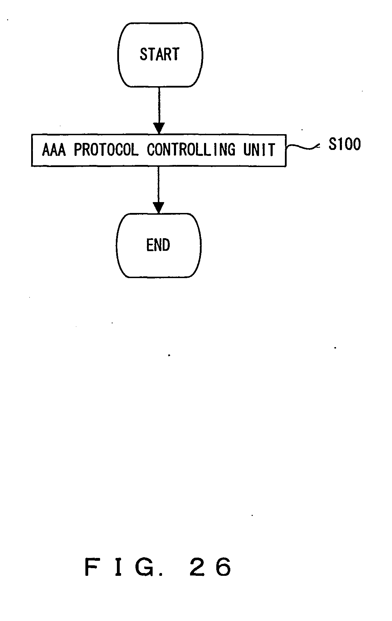

Figs. 26 to 28 are flowcharts showing the processes performed by the AAA. The processes performed by the AAA are explained with reference to these flowcharts.

Fig. 26 is a flowchart exemplifying the entire processing performed by the AAA.
S100: Upon receipt of a packet from the physical network interface 34, the network kernel 33 selects an AAA protocol signaling packet (DIAMETER) by retrieving an IP port number, and passes the information of the received packet to the AAA protocol controlling unit 30.

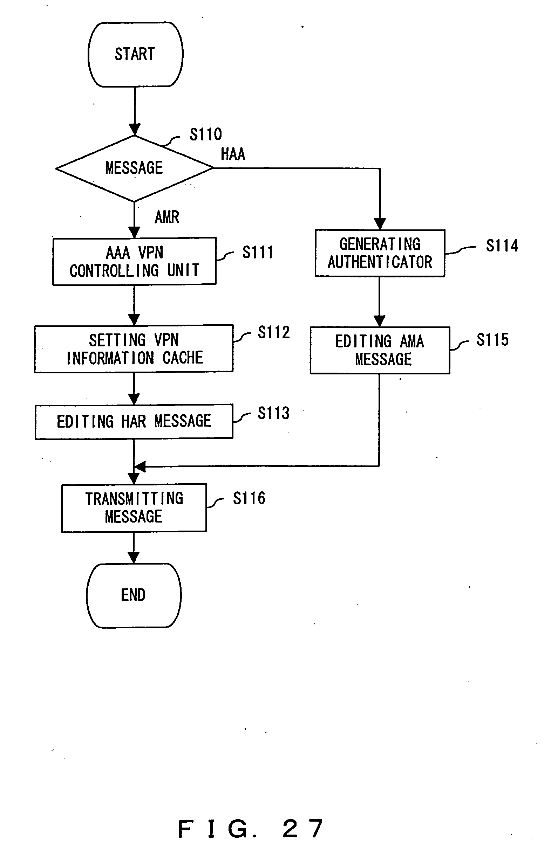

Fig. 27 is a flowchart exemplifying the process performed by the AAA protocol controlling unit 30 shown in Fig. 23.
S110: The AAA protocol processing unit 35 within the AAA protocol controlling unit 30 determines a received message according to a command code AVP of the AAA (DIAMETER) protocol received from the network kernel 33. If the received message is an AMR (AA Mobile Node Request), the process is branched to S111. If the received message is an HAA (Home Agent MIP Answer) , the process is branched to S114.
S111 : The AAA protocol processing unit 35 that receives the AMR activates the AAA VPN controlling unit 31.
S112: The AAA VPN controlling unit 31 reads VPN information from the VPN database within the database server 32, and sets the read VPN information in the VPN information cache 36.
S113: The AAA protocol processing unit 35 sets a location registration request message (Reg.Request) of the mobile IP protocol, in which a service profile is set in an SPC fixing part (shown in Fig. 9) as VPN information, in a home agent registration request message (HAR: Home Agent MIP Request) of the AAA protocol.
S114 : The AAA protocol processing unit 35 that receives the HAA activates the AAA VPN controlling unit 31, which then generates an authenticator for securing the legality of an MN that requests the location registration with the location registration request message (Reg.Request) of the mobile IP protocol.
S115: The AAA protocol processing unit 35 adds the authenticator to a location registration reply message (Reg.Reply) of the mobile IP protocol, in which the VPN information is set in the SPC fixing part (shown in Fig. 9), and sets the location request reply message in an authentication answer message (AMA). S116: The AAA protocol controlling unit 30 transmits the authentication answer message (AMA) , or a home agent registration request message (HAR) to the HA.

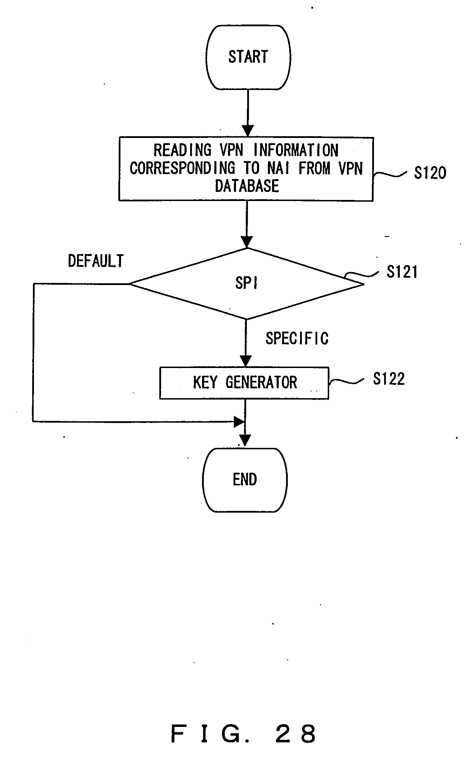

Fig. 28 is a flowchart exemplifying the process performed by the AAA VPN controlling unit 31 shown in Fig. 23. This process is started during the operation of S112 shown in Fig. 27.
S120: The AAA VPN controlling unit 31 inquires the database server 32 with an NAI (Network Access Identifier) of an MN through a database access language such as SQL, etc. The database server 32 reads corresponding VPN information from the VPN database. S121: The AAA VPN controlling unit 31 branches the process to S112 unchanged if an SPI (Security Parameter Index) read from the VPN database within the database server 32 is a default SPI. Otherwise, the AAA VPN controlling unit 31 branches the process to S122. The default SPI is assumed to be preset in the AAA at the time of initial configuration, or set from a local maintenance console of the AAA.
S122: The AAA VPN controlling unit 31 activates the key generator 37. The key generator 37 generates a random number according to a key length set in the VPN information read from the VPN database.

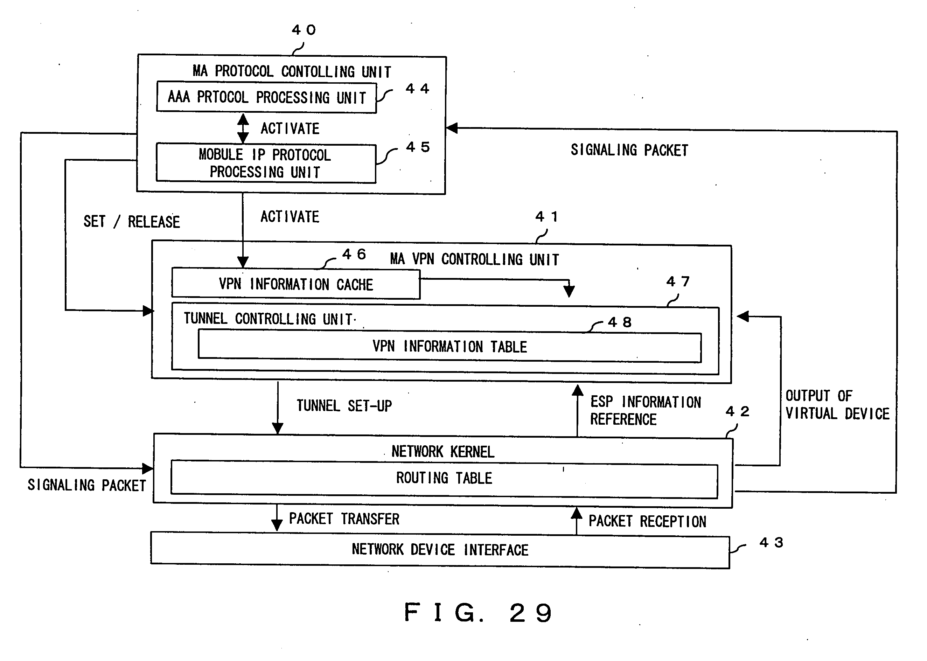

Fig. 29 is a block diagram exemplifying the functions of a mobile agent (MA), which is the HA 19 and the PCN 20 in Fig. 3. A process or an agent, which processes a mobile IP protocol, is collectively called a mobile agent (MA).

These network devices are configured by an MA protocol controlling unit 40, an MA VPN controlling unit 41, a network kernel 42, and a network device interface 43.

The MA protocol controlling unit 40 is configured by an AAA protocol processing unit 44 controlling the AAA protocol, and a mobile IP protocol processing unit 45 controlling the mobile IP.

The MA VPN controlling unit 41 is configured by the VPN information cache 46 (shown in Fig. 24) caching VPN information notified with the AA protocol and the mobile IP protocol, and a tunnel controlling unit 47.

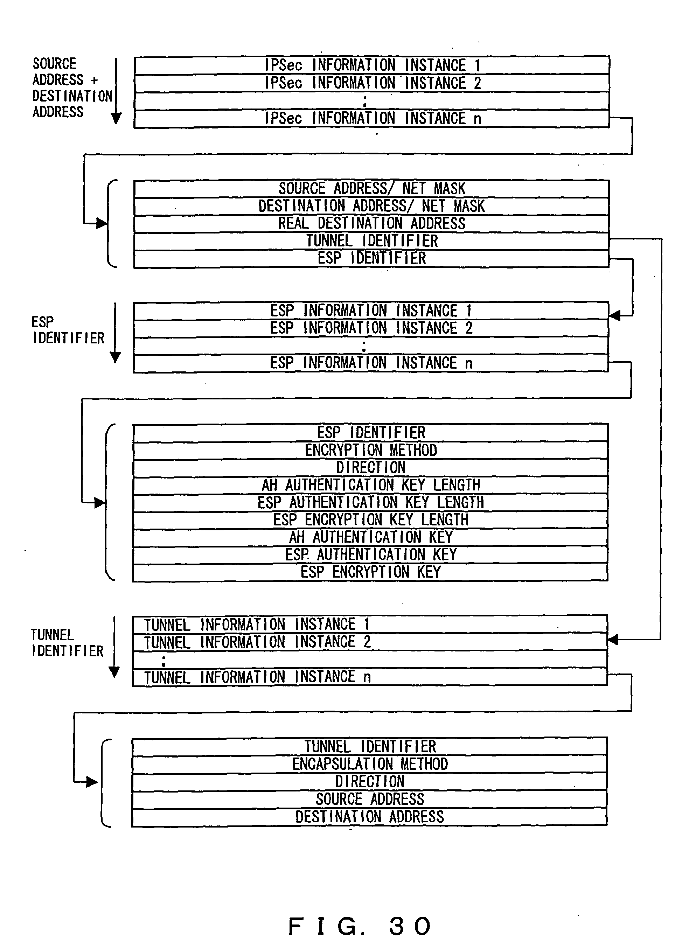

The tunnel controlling unit 47 rewrites an output device of the routing table for an IP address of a destination according to a VPN type set in the VPN information cache 46. If the VPN type is IPinIP, the output device is rewritten to a tunnel virtual device. If the VPN type is IPSec or IPSec+UDP, the output device is rewritten to an ipsec virtual device. Additionally, a VPN type, source and destination IP addresses along with their net masks, a security type, gateway addresses of the source and destination, SPIs (Security Parameter Indexes), which are security identifiers in upstream and downstream directions, an ESP encryption key, an ESP authentication key, and an IP port number (portNumber) at the time of UDP encapsulation are set in the VPN information table 48 (shown in Fig. 30). A packet output to the virtual device by the network kernel 42 is encrypted/decrypted, and encapsulated/decapsulated with a reference made to the VPN information table 48.

Fig. 30 exemplifies the VPN information table.

The VPN information table shown in Fig. 30 is configured, for example, by IPSec information, ESP information, and tunnel information. The IPSec information consists of a set of IPSec information instances, and is identified with a pair of source and destination addresses. An IPSec information instance is configured by a source address/net mask, a destination address/net mask, a real destination address, which is an actual transfer destination of a packet, an identifier of tunnel information applied to the packet, and an identifier of ESP information applied to the packet. The ESP information consists of a set of ESP information instances, each of which is configured by an ESP identifier for uniquely identifying ESP information, an encryption method, direction, an AH authentication key length, an ESP authentication key length, an ESP encryption key length, an AH authentication key, an ESP authentication key, and an ESP encryption key. The tunnel information consists of a set of tunnel information instances, each of which is configured.by a tunnel identifier for uniquely identifying tunnel information, an encapsulation method, direction, and source and destination addresses, which are an entry and an exit of a tunnel.

The VPN information cache 46, the network kernel 42, and the network device interface 43 are already described in the detailed explanation of the AAA.

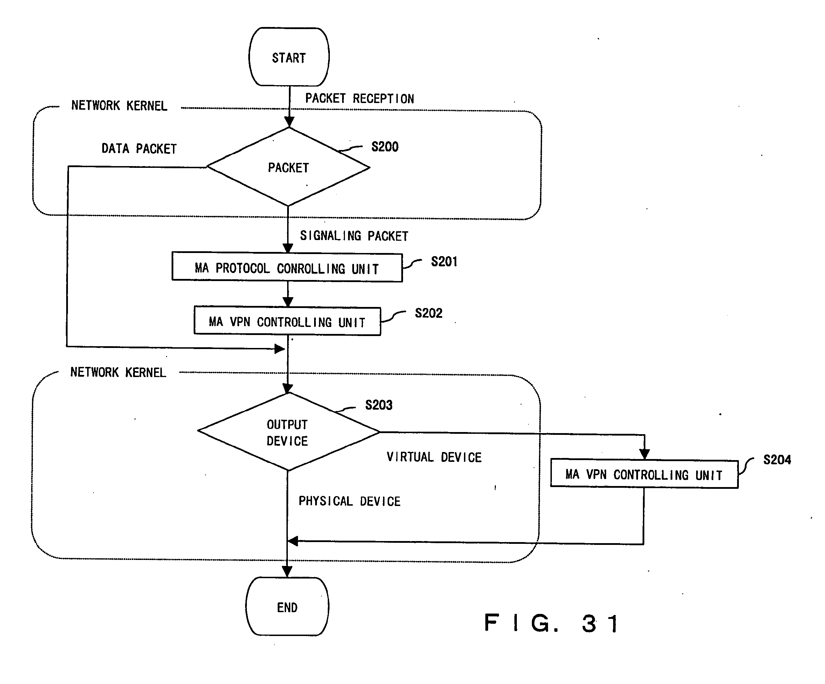

Fig. 31 to 37 are flowcharts showing the processes performed by the MA (Mobile Agent). Hereinafter, the processes performed by the MA are explained with reference to these flowcharts. Here, a process or an agent, which processes a mobile IP protocol, is collectively referred to as a mobile agent.

Fig. 31 is a flowchart exemplifying the entire processing performed by the MA.
S200: After the network kernel 42 decapsulates, encrypts, and decyrpts a packet as summarized earlier upon receipt of the packet from the network device interface 43, it determines whether the packet is either a signaling packet or a data packet.

Whether or not a packet is a signaling packet is determined by whether or not the packet is received with a port number specified by the MA protocol controlling unit 40. If the packet is a signaling packet, the process is branched to S201. Otherwise, the process is branched to S203.
S201: Information of the received packet is passed to the MA protocol controlling unit 40, and processes of the AAA protocol for the AAA, and the mobile IP protocol for the MN are performed based on a port number.
S202: The MA protocol controlling unit 40 activates the MA VPN controlling unit 41, which sets VPN information. S203: The network kernel 42 determines an interface at an output destination of the received packet by referencing the routing table. If the output destination is a virtual device, the network kernel 42 encapsulates and encrypts the packet. The network kernel 42 again references the routing table with an address of the encapsulated packet, and determines the output device. If the output destination is a physical device, the network kernel 42 transmits the packet to that device.

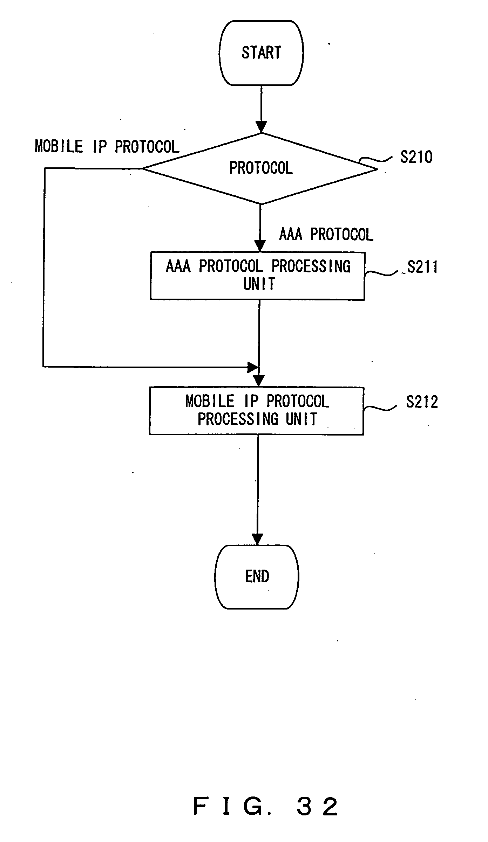

Fig. 32 is a flowchart exemplifying the process performed by the MA protocol controlling unit 40 shown in Fig. 29.
S210: The MA protocol controlling unit 40 shown in Fig. 29 examines the IP port number of a packet received from the network kernel 42 . If the port number is a port number of the AAA protocol, the process is branched to S211. If the port number is a port number of the mobile IP protocol, the process is branched to S212.
S211: The AAA protocol processing unit is activated. After the process of the AAA protocol is terminated, the mobile IP protocol, which is added to the AAA protocol as part of the information, is extracted, and the process is transferred to S212.
S212: The mobile IP protocol processing unit 45 is activated, and the process is terminated.

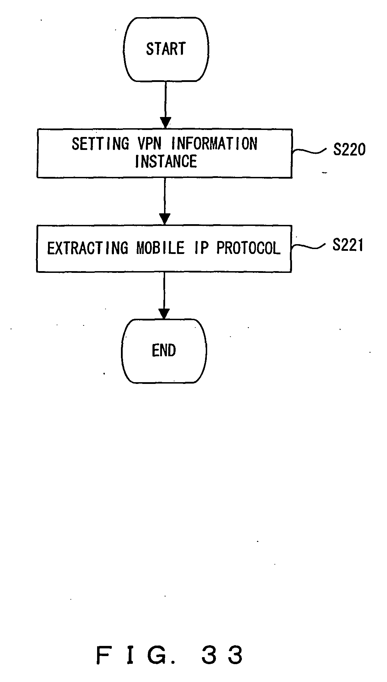

Fig. 33 is a flowchart exemplifying the process performed by the AAA protocol processing unit 44 shown in Fig. 29.
S220: The AAA protocol processing unit 44 extracts VPN information from the AAA protocol received from the network kernel 42, and activates the MA VPN controlling unit 41. The MA VPN controlling unit 41 sets the VPN information extracted by the AAA protocol processing unit 44 in the VPN information cache 46. If the cache is set or updated for a reference made by a mobile IP protocol processing unit to be described later, a flag indicating that the cache is updated is set in a shared memory.
S221: After a process of the AAA protocol is terminated, the mobile IP protocol, which is added to the AAA protocol as part of the information, is extracted.

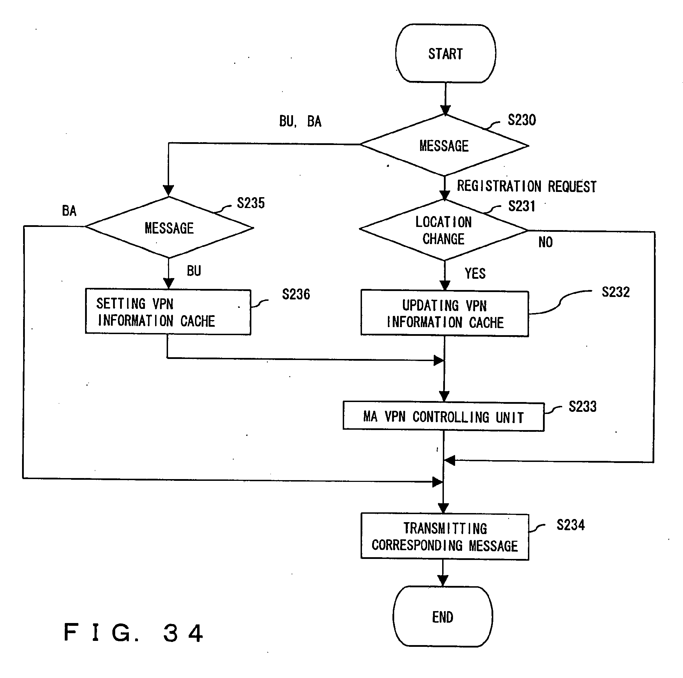

Fig. 34 is a flowchart exemplifying the process performed by the mobile IP protocol processing unit 45 shown in Fig. 29.
S230: The type of a received mobile IP protocol message is determined. If the type of the message is a location registration request (Reg.Request), the process is branched to S231. If the type of the message is a binding update (BU) or a binding acknowledge (BA), the process is branched to S235.
in case of a location registration request (Reg.Request) S231: If a mobile agent (MA) that receives the registration request is a home agent (HA), the mobile IP protocol processing unit 45 makes a comparison between a care-of-address of the registration request message and a former care-of-address of a mobility binding table. If they mismatch, the process is branched to S232.
S232: After the mobile IP protocol processing unit 45 notifies the MA VPN controlling unit 41 of VPN information notified with an authentication answer message (AMA) by the AAA protocol processing unit 44, the MA VPN controlling unit 41 updates the VPN information cache with the notified VPN information.
S233: The MA protocol controlling unit 40 activates the MA VPN controlling unit 41.
S234: If the received message is a location registration request (Reg.Request), the mobile IP protocol processing unit 45 transmits a location registration reply (Reg.Reply). If the received message is a binding update (BU) , the mobile IP protocol processing unit 40 transmits a binding acknowledge (BA).
in case of a binding update (BU) or a binding acknowledge (BA)
S235: If the received message is a BU, the mobile IP protocol processing unit 45 branches the process to S236. If the received message is a BA, the mobile IP protocol processing unit 45 branches the process to S234. If the mobile agent (MA) is operating as a PCN, the mobile IP protocol processing unit 45 receives all BU messages addressed to CNs under the control of the PCN as a proxy.
This mechanism is implemented, for example, with a method disclosed by Japanese Patent Application No. 2000-32372.
S236: If the MA that requests the process is a PCN, the mobile IP protocol processing unit 45 sets VPN information, which is set in a BU message, in the VPN information cache, or replaces the VPN information cache with the VPN information.

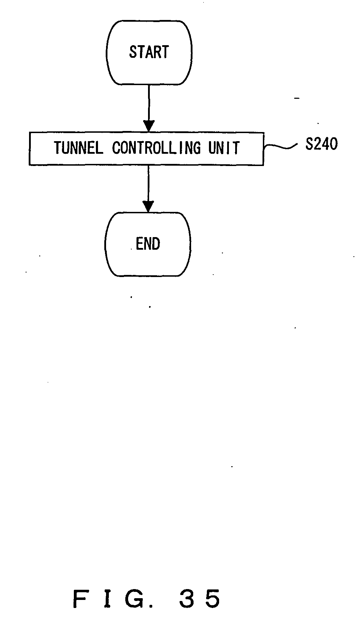

Fig. 35 is a flowchart exemplifying the process performed by the MA VPN controlling unit 41 shown in Fig. 29.
S240: The MA VPN controlling unit 31 activates the tunnel controlling unit 47 in order to establish a VPN.

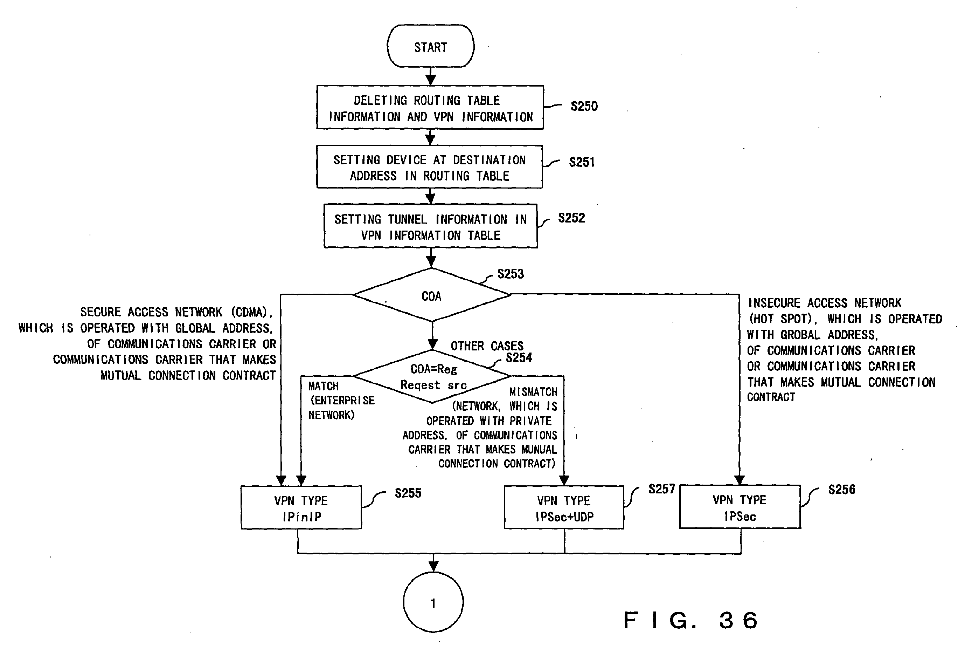

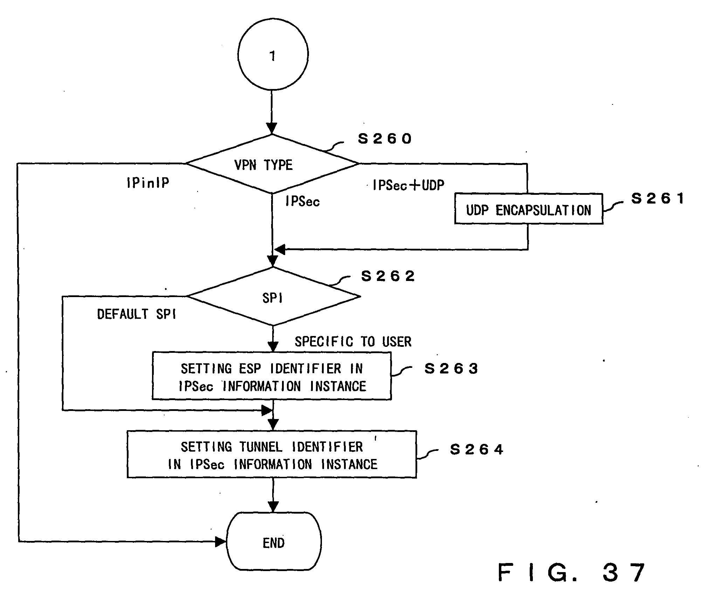

Figs. 36 and 37 are flowcharts exemplifying the processes performed by the tunnel controlling unit 47 shown in Fig. 29.
S250: For a periodical location registration, the tunnel controlling unit 47 deletes routing table information already set in the network kernel 42, and corresponding information in the VPN information table 48 based on information of a VPN information instance so as to switch to a new VPN.
S251: The tunnel controlling unit 47 sets the routing table of the network kernel 42 according to a VPN type set in a VPN information profile of a VPN information instance. If the VPN type is IPinIP, a packet is output to a physical device as an output device interface of the routing table. If the VPN type is IPSec or IPSec+UDP, a packet is output to an IPSec virtual device as the output device interface of the routing table.
S252: The tunnel controlling unit 47 sets tunnel information in the VPN information table 48.
S253: If the communication is a communication to a secure access network (security of an access network of a communications carrier, which is configured by a CDMA communications system, is recognized to be very high in this case), which is operated with a global address, of a communications carrier or a communications carrier that makes a mutual connection contract according to a care-of-address of the location registration request message (Reg.Request), the tunnel controlling unit 47 branches the process to S255. If the communication is a communication to an insecure access network (for example, a hot spot of a wired LAN, etc., which is restricted to only within a store, etc. is considered) , which is operated with a global address, of a communications carrier or a communications carrier that makes a mutual contract, the tunnel controlling unit 47 branches the process to S256. In other cases, the tunnel controlling unit 47 branches the process to S254.
S254: The tunnel controlling unit 47 makes a comparison between the source address of the location registration request message (Reg.Request) and its care-of-address. If they match, the tunnel controlling unit 47 recognizes the access as an access from an enterprise network. If they mismatch, the tunnel controlling unit 47 recognizes the access as an access from an access network, which is operated with a private address, of a communications carrier that makes a mutual connection contract, and branches the process to S257. The determination process using an address may be replaced by an inquiry made to a DNS (Domain Name System), or a process using a domain comparison.
S255: The tunnel controlling unit 47 sets IPinIP as a VPN type.
S256: The tunnel controlling unit 47 sets IPSec as a VPN type.
S257: The tunnel controlling unit 47 sets IPSec+UDP as a VPN type.
S260: If the VPN type is IPinIP, the tunnel controlling unit 47 terminates the process. If the VPN type is IPSec, the tunnel controlling unit 47 branches the process to S262. If the VPN type is IPSec+UDP, the tunnel controlling unit 47 branches the process to S261.
S261: The network kernel 42 performs UDP encapsulation with the port number of a VPN information instance.
S262: The network kernel 42 references an SPI within a VPN information profile of the VPN information instance. If the SPI is an SPI specific to a user, the network kernel 42 branches the process to S263. If the SPI is a default SPI, the network kernel 42 branches the process to S264. The default SPI is assumed to be preset within a mobile agent (MA) at the time of initial configuration, or set from a local maintenance console of the mobile agent (MA).
S263: The network kernel 42 sets an ESP identifier in an IPSec information instance.
S264: The network kernel 42 sets a tunnel identifier in the IPSec information instance.

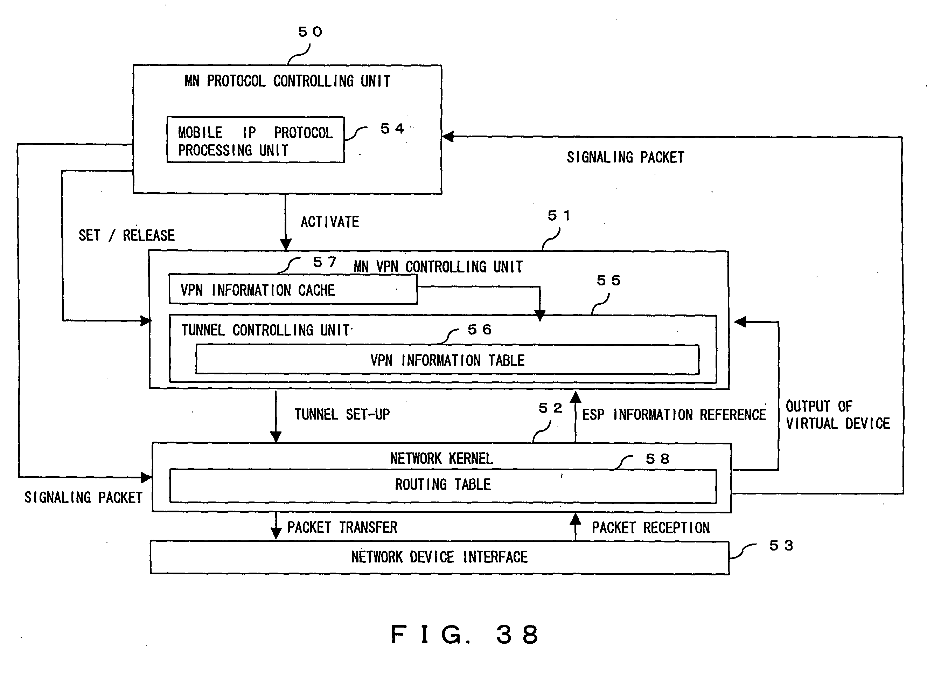

Fig. 38 is a block diagram exemplifying the functions of the MN 16 shown in Fig. 3.

A network device named an MN is configured by an MN protocol controlling unit 50, an MN VPN controlling unit 51, a network kernel 52, and a network device interface 53.

The MN protocol controlling unit 50 is configured by a mobile IP protocol processing unit 54 controlling the mobile IP. The MN VPN controlling unit 51 is configured by a tunnel controlling unit 55. The tunnel controlling unit 55 rewrites an output device of a routing table 58 for a destination IP address according to a VPN type set in a VPN information table 58. If the VPN type is IPinIP, the output device is rewritten to a tunnel virtual device. If the VPN type is IPSec or IPSec+UDP, the output device is rewritten to an IPSec virtual device. VPN information is set in the VPN information table 56 read from a VPN information cache 57 (shown in Fig. 24).

A packet output from the network kernel 52 to the virtual device is encrypted/decrypted, and. encapsulated/decapsulated with a reference made to the VPN information table 56. Since the VPN information table 56, the network kernel 52, and the network device interface 53 are already described in the detailed explanation of the AAA, their details are omitted here.

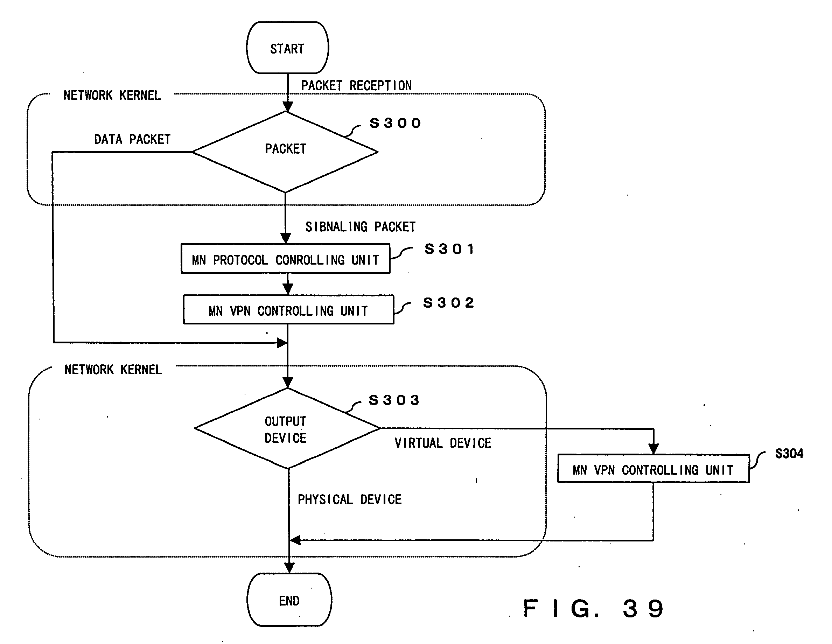

Figs. 39 to 43 are flowcharts showing the processes performed by the MN. Hereinafter, the processes performed by the MN are explained with reference to these flowcharts.

Fig. 39 is a flowchart exemplifying the entire processing performed by the MN.
S300: After the network kernel 52 decapsulates and decrypts a packet as summarized earlier upon receipt of the packet from the physical network interface 53, it determines whether the packet is either a signaling packet or a data packet. Whether or not the packet is a signaling packet is determined by whether or not the packet is received with an IP port number specified by the MN protocol controlling unit 50. If the packet is a signaling packet, the process is branched to S301. Otherwise, the process is branched to S303.
S301: The MN protocol controlling unit 50 receives the signaling packet from the network kernel 52, and performs a process of the mobile IP protocol.
S302: The MN VPN controlling unit 51 is activated, and VPN information is set.
S303: The network kernel 52 determines an interface at an output destination of the received packet by referencing the routing table. If the output destination is a virtual device, the packet is encapsulated and encrypted. The network kernel 42 again determines an output device with the destination of the encapsulated packet by referencing the routing table. If the output destination is a physical device, the packet is transmitted to that device.

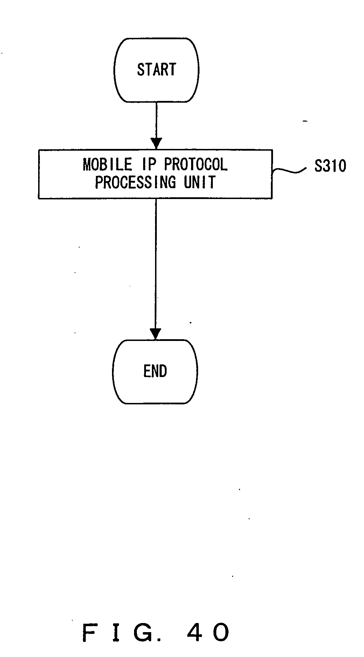

Fig. 40 is a flowchart-exemplifying the process performed by the MN protocol controlling unit 50 shown in Fig. 38.
S310: The IP port number of a received packet is examined. If the port number is a number of the mobile IP protocol, the mobile IP protocol processing unit is activated, and the process is terminated.

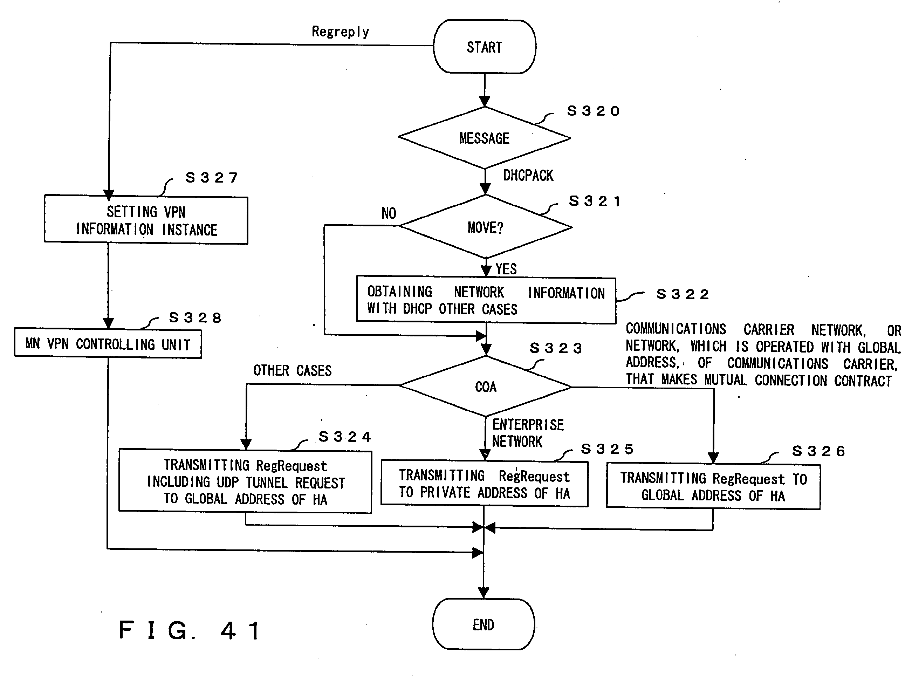

Fig. 41 is a flowchart exemplifying the process performed by the mobile IP protocol processing unit 54 shown in Fig. 38.
S320: The mobile IP protocol processing unit 54 examines the type of a received message. If the type is DHCP, the mobile IP protocol processing unit 54 branches the process to S321 . If the type is a location registration reply message (Reg.Reply), the mobile IP protocol processing unit 54 branches the process to S327.
S321: The mobile IP protocol processing unit 54 examines an address notified with a DHCP message. If the address matches the care-of-address of the MN, the mobile IP protocol processing unit 54 branches the process to S323. If the address mismatches the care-of-address, the protocol processing unit 54 branches the process to S322.
S322: The mobile IP protocol processing unit 54 obtains an IP address, which is the care-of-address, and a domain name of a network from a DHCPACK message.
S323: The mobile IP protocol processing unit 54 examines the address obtained with the DHCP message. If the address matches an address of an enterprise network, the mobile IP protocol processing unit 54 branches the process to S325. If the address matches an address of an access network, which is operated with a global address, of a communication carrier or a communications carrier that.makes a mutual connection contract, the mobile IP protocol processing unit 54 branches the process to S326. If the address matches an address of an access network, which is operated with a local address, of a communications carrier that makes a mutual connection contract, the mobile IP protocol processing unit 54 branches the process to S324. The determination process using an address may be replaced by a process using an inquiry made to a DNS (Domain Name System), or a process using a domain comparison.
S324: The mobile IP protocol processing unit 54 transmits a location registration request message (Reg.Request) including a UDP tunnel request to a global address of an HA, and terminates the process.
S325: The mobile IP protocol processing unit 54 transmits the location registration request message (Reg.Request) to a private address of the HA, and terminates the process.
S326: The mobile IP protocol processing unit 54 transmits the location registration request message (Reg.Request) to the global address of the HA, and terminates the process.
S327: The mobile IP protocol processing unit 54 sets VPN information, which is set in a location registration reply message (Reg. Reply) , in the VPN information cache 57.
S328: The mobile IP protocol processing unit 54 activates the MN VPN controlling unit 51, and terminates the process.

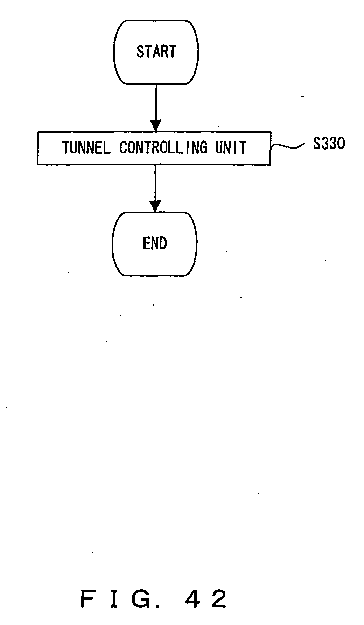

Fig. 42 is a flowchart exemplifying the process performed by the MN VPN controlling unit 51 shown in Fig. 38.
S330: The MN VPN controlling unit 51 activates the tunnel controlling unit 55 in order to establish a VPN, and terminates the process.

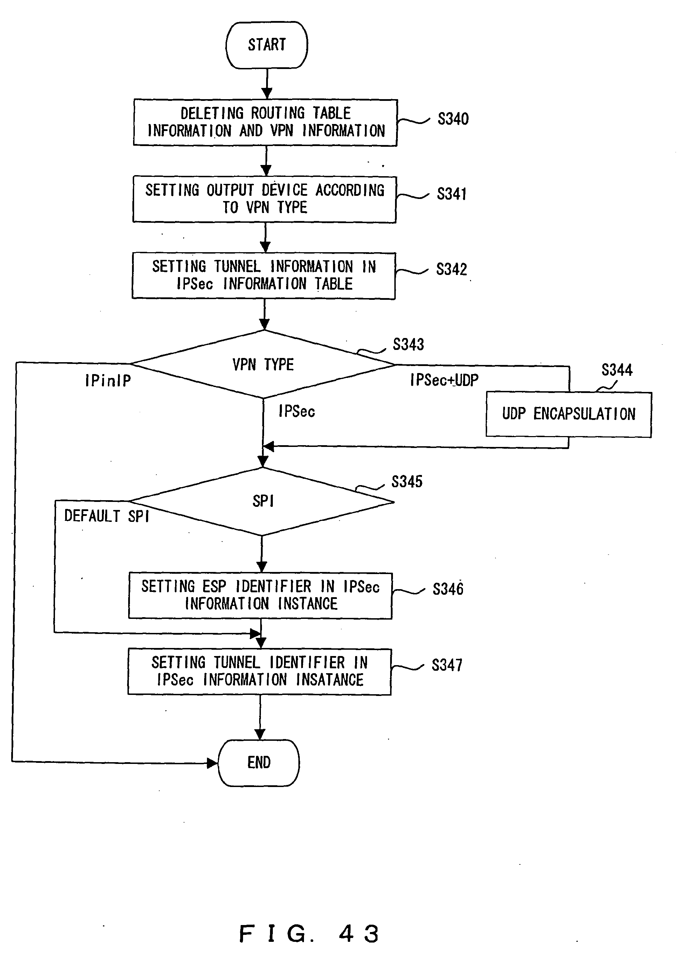

Fig. 43 is a flowchart showing the process performed by the tunnel controlling unit 55 shown in Fig. 38.
S340: For a periodical location registration, the tunnel controlling unit 55 deletes routing table information already set in the network kernel, and corresponding information in the VPN information table 56 based on information of a VPN information instance so as to switch to a new VPN.
S341: The tunnel controlling unit 55 sets an output device according to a VPN type set in a VPN information profile of the VPN information instance. If the VPN type is IPinIP, the packet is output to a physical device. If the VPN type is IPSec or IPSec+UDP, the packet is output to an IPSec virtual device.
S342: The tunnel controlling unit 55 sets a tunnel information instance of the IPSec information table by referencing the VPN information profile of the VPN information instance.
S343: The tunnel controlling unit 55 references the VPN type of the VPN information instance. If the VPN type is IPinIP, the tunnel controlling unit 55 terminates the tunneling process. If the VPN type is IPSec, the tunnel controlling unit 55 branches the process to S345. If the VPN type is IPSec+UDP, the tunnel controlling unit 55 branches the process to S344.
S344: The network kernel 52 performs UDP encapsulation with an IP port number of the VPN information instance.
S345: The network kernel 52 references an SPI within the VPN information profile of the VPN information instance. If the SPI is an SPI specific to a user, the network kernel 52 branches the process to S346. If the SPI is a default SPI, the network kernel 52 branches the process to S347. The default SPI is assumed to be preset in the MN at the time of initial configuration, or set from a local maintenance console of the MN.
S346: The network kernel 53 sets an ESP identifier in an IPSec information instance.
S347: The network kernel 52 sets a tunnel identifier in the IPSec information instance.

Hereinafter, how to establish a VPN when the MN accesses a network is explained by taking some examples. Subsequent preferred embodiments are explained by assuming that an HA is arranged in a communications carrier network. Also the case where the HA is arranged in an enterprise network is simi lar. Encapsulation and decapsulation in a network device that terminates a tunnel are explained in detail in a VPN establishment method used when an access is made from the same site within an enterprise network. Because the operations of the VPN establishment method are similar to those in the other preferred embodiments, their explanation is omitted in the other preferred embodiments.

### - VPN establishment method used when an access is made from the same site within an enterprise network

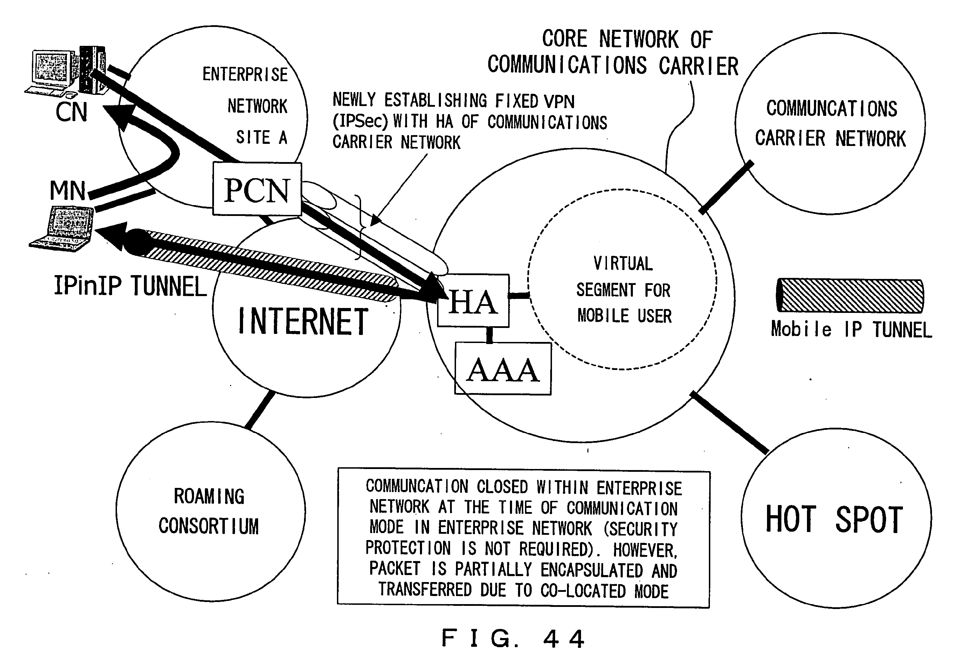

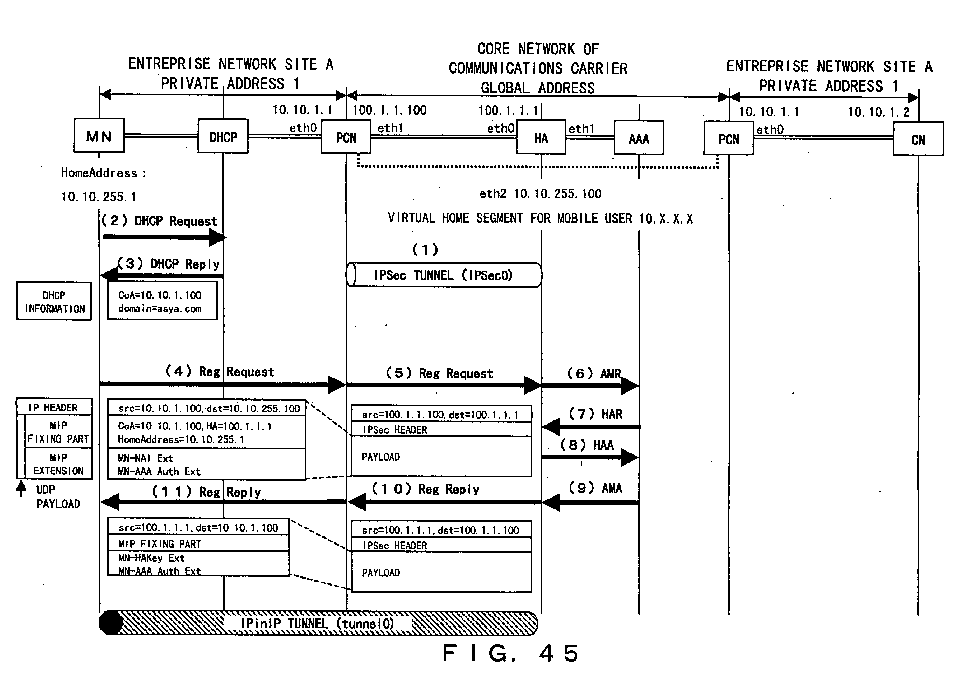

Figs. 44 and 45 explain the case where a communication is made within an enterprise network, according to a preferred embodiment of the present invention.

Fig. 44 shows VPN establishment and packet routing in the case where a communication is made from an MN staying at a site A within an enterprise network to a CN existing at the same site within the enterprise network. A sequence for establishing an IPinIP VPN in a location registration procedure of the MN staying in a certain site within an enterprise network is shown in Fig. 45. To the MN shown in Fig. 45, 10.10.255.1 is assigned as a home address, and a virtual home segment, which is a private network, is set as an enterprise network for the mobile IP in an HA arranged in a communications carrier network. A private address 10.10.255.100 is set as a gateway address to the virtual home segment.

Between the PCN and the HA, IPSec is statically set up, and available routes are set in the routing tables of the HA and the PCN (1).

The MN obtains an IP address [10.10.1.100] that can be routed within the network, and a domain name [asya. com] by transmitting DHCPREQUEST to a DHCP server, and by receiving DHCPACK (2) and (3).

A location registration request message (Reg.Request), in which its source address is the private address [10.10.1.100] of the enterprise network, which is assigned by the DHCP, as a care-of-address, its destination address being the private address [10.10.255.100] of the HA, and an NAI extension and an AAA authentication header (extension?) are included, is transmitted to the HA (4).

Since the IPSec VPN is statically established between the PCN and the HA, the routing table is referenced, and the packet is transmitted to an IPSecO virtual interface in the PCN. This is because the destination address is the private address [10.10.255.100] of the HA. When the IPSecO virtual interface receives the packet, the packet is encrypted with an encryption algorithm specified by the setting of the IPSec. Then, IPSec encapsulation for adding an IP header and an IPSec header is performed by respectively using the global address [100.1.1.100] of the PCN and the global address [100.1.1.1] of the HA as source and destination addresses, and the routing table is referenced, so that the packet is transmitted from a real interface eth1 to the HA.

The HA that receives the location registration request message (Reg.Request) from the MN references the routing table, and receives the packet with the real interface eth0. This is because the destination address of the packet is the global address [100.1.1.1] of the HA. The HA then references the IPSec header, and decrypts the encrypted original packet. The destination address of the decrypted packet is the private address [10.10.255.10], which is an interface address of the HA. Therefore, the HA terminates the packet, and passes the location registration request message (Reg. Request) to the MA protocol controlling unit, which is an application. The HA analyzes the location registration request message (Reg.Request), and transmits an authentication request message (AMR) to an AAA according to a result of the analysis.

The AAA accesses the VPN database with the NAI included in the AMR message, and extracts VPN information specific to this user. Since the network of the care-of-address of the MN is the enterprise network, VPN information in which IPinIP is set as a VPN type is set in a service profile. The location registration request message (Reg.Request), in which the service profile is set in an SPC fixing part (shown in Fig. 9) , is set in a home agent registration request message (HAR) , which is then transmitted to the HA (7).

The HA sets the VPN information notified with the home agent registration request message (HAR) in the VPN information cache, sets a location registration reply (Reg.Reply) including the service profile in a home agent registration acknowledge message (HAA), and transmits the message to the AAA (8).

Upon receipt of the home agent registration answer message (HAA) including the location registration reply (Reg.Reply) of the mobile IP protocol, in which the VPN information is set in the SPC fixing part (shown in Fig. 9), the AAA adds an authenticator to the location registration reply (Reg.Reply), and transmits an authentication answer (AMA) to the HA (9).

The HA sets the home address [10.10.255.1] and the care-of-address [10.10.1.100] of the MN in a mobility binding table. The HA then returns the location registration reply (Reg.Reply), in which the service profile including the VPN information set for an IPi nIP tunnel is set, sets up a tunnel for transmitting the packet, whose destination address is the home address [10.10.255.1] of the MN, to the care-of-address [10.10.255.100] of the MN in the routing table, and establishes an IPinIP VPN in the direction from the HA to the MN (10) and (11).

Upon receipt of the location registration reply (Reg.Reply), the MN establishes an IPinIP VPN in the direction from the MN to the HA according to the service profile.

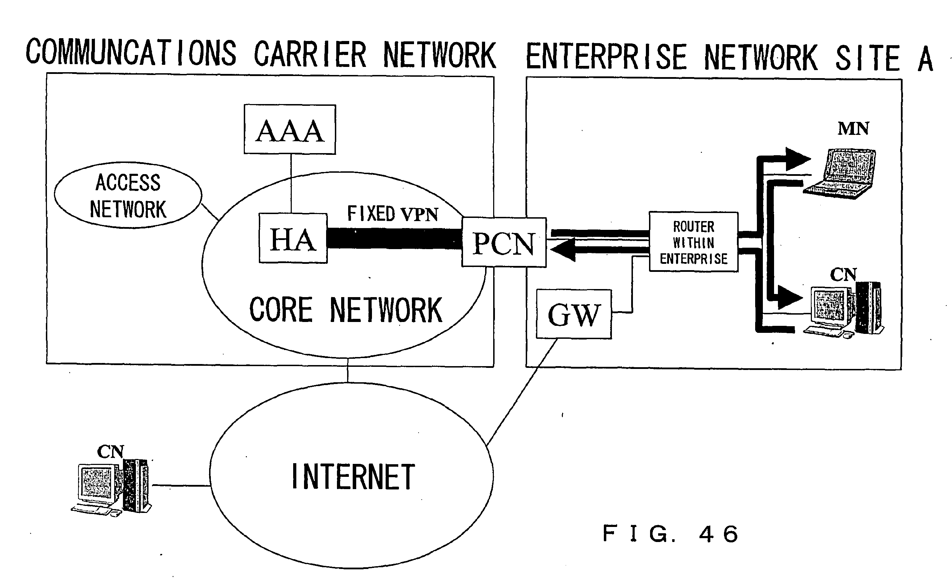

Figs. 46 to 48 explain a path switching method within an enterprise network.

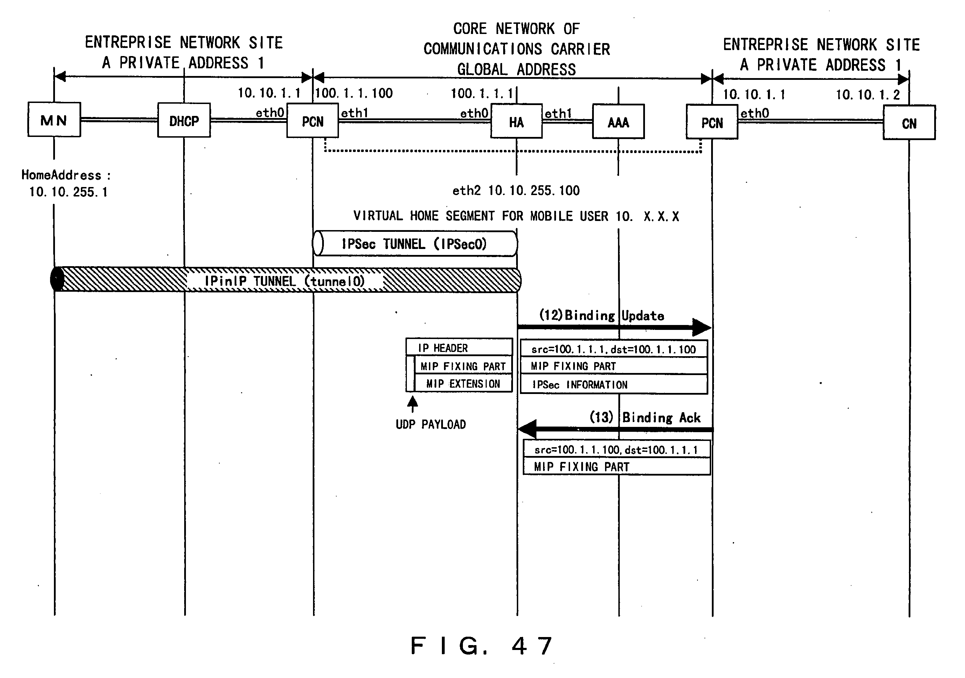

When a communication is made between an MN and a CN within an enterprise network as shown in Fig. 46, a packet in the direction from the CN to the MN is not transferred to an HA, and looped back by a PCN within the enterprise network, so that the communication closed within the enterprise network can be made. A sequence for instructing the PCN to loop back a packet by the HA, and for optimizing a path is shown in Fig. 47.

In Fig. 47, a binding update message (BU) is first transmitted from the HA to the PCN (12).

The PCN sets notified home address [10.10.255.1] and care-of-address [10.10.1.100] in a mobility binding table. A tunnel is set up in a routing table so that a packet whose destination address is the home address of the MN is transmitted to the care-of-address of the MN. The PCN returns a binding acknowledge message (BA) (13) .

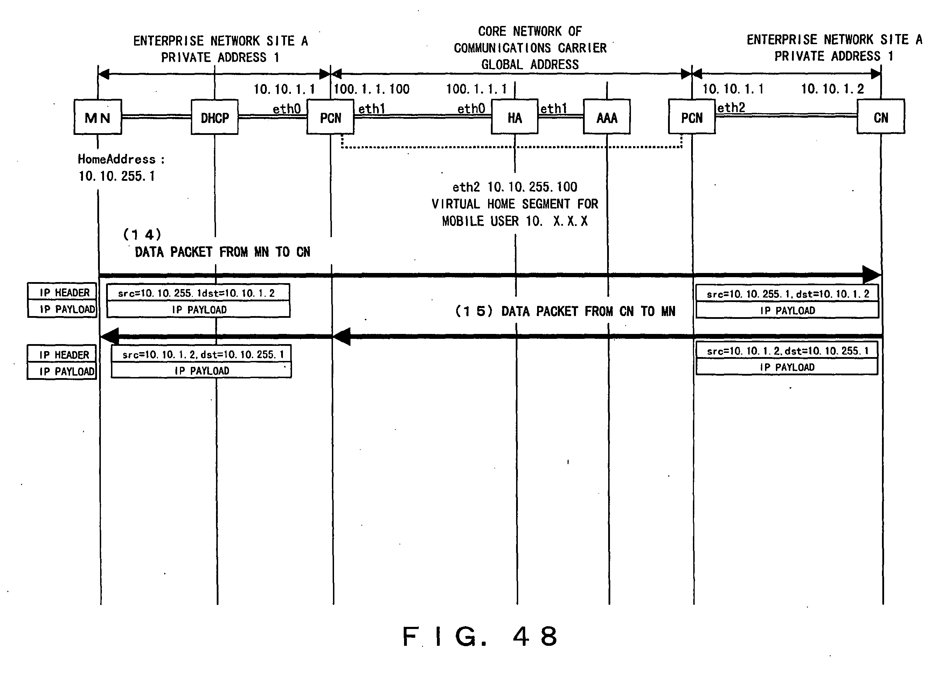

After the path is optimized, a data packet in the direction from the CN to the MN is routed from the CN to the PCN, looped back by the PCN, and transmitted to the MN. Routing of a data packet after path optimization is shown in Fig. 48.

A packet in the direction from the MN to the CN is transferred to the CN via the PCN by respectively using the home address [10.10.255.1] of the MN and the private address [10.10.2.100] of the CN as source and destination addresses.

A packet in the direction from the CN to the MN is transferred to the PCN by respectively using the private address [10.10.1.2] of the CN and the home address [10.10.255.1] of the MN as source and destination addresses. The PCN references the mobility binding table, encapsulates the packet with the mobile IP protocol by respectively using the private address [10.10.2.1(1.2?)] of the CN and the care-of-address [10.10.1.100] of the MN as source and destination addresses, and transfers the packet to the MN (15). - VPN establishment method applying existing equipment for a communication between sites when an access is made from a different site within an enterprise network

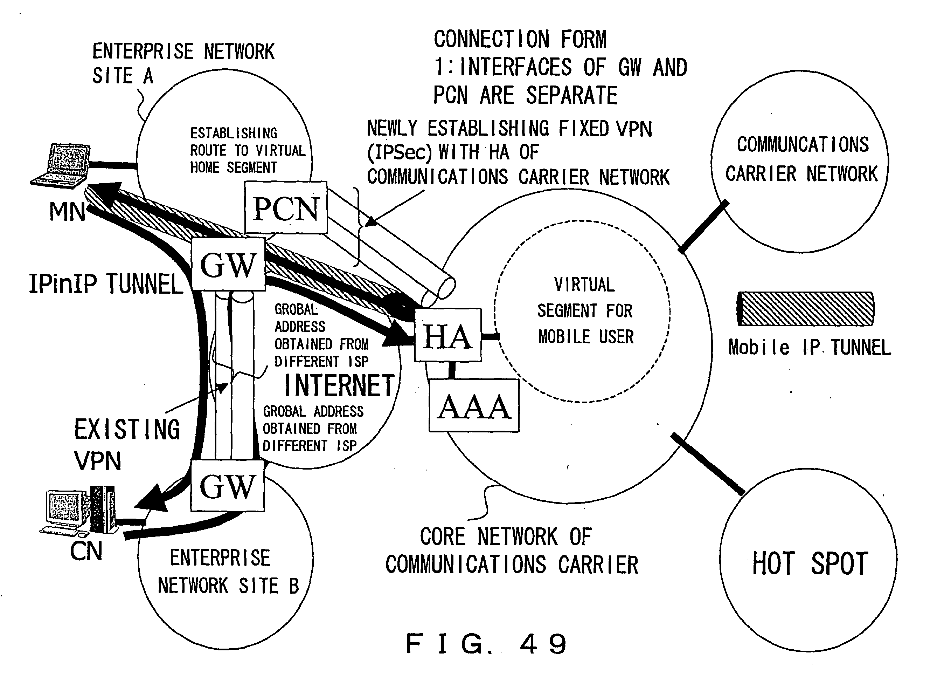

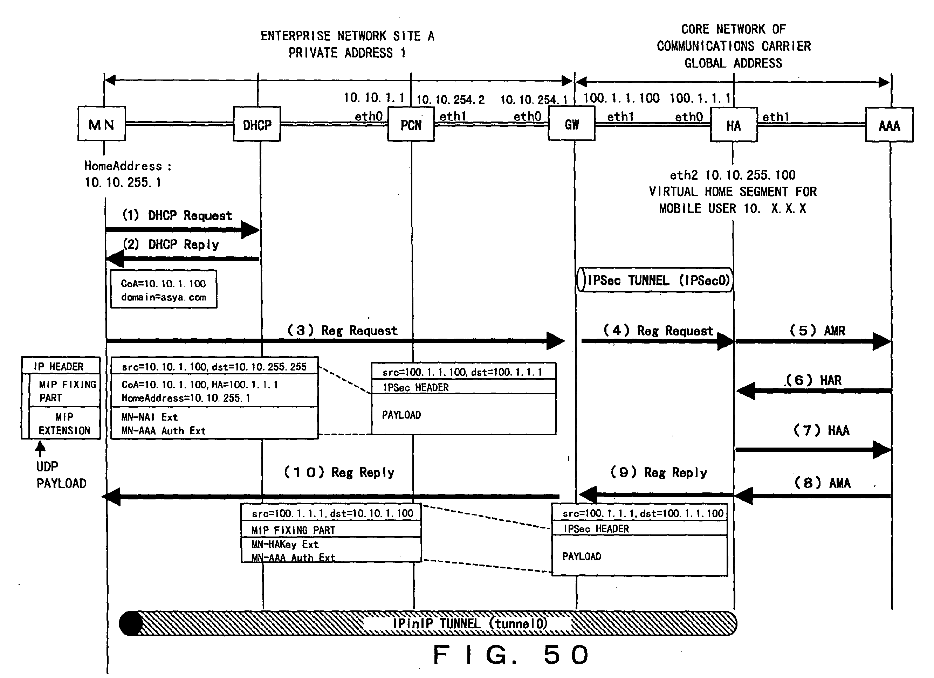

Figs. 49 and 50 explain a communication between sites within the same management domain.

VPN establishment and packet routing in the case where a communication is made from an MN staying at a site A within an enterprise network to a CN existing in a different site B within an enterprise network in a network configuration in which an existing VPN. established between a GW at the site A within the enterprise network and a GW at the site B within the enterprise network is used for a communication between the enterprise networks, and a VPN is newly established only between the PCN at the site A within the enterprise network A and an HA arranged in a communications carrier network is shown in Fig. 49. A sequence for establishing an IPinIP VPN in a location registration procedure of the MN staying at the site A within the enterprise network is shown in Fig. 50.

In Fig. 50, the MN obtains an IP address [10.10.1.100] and a domain name [asya . com] by using DHCP (1) and (2) .

A location registration request message (Reg.Request) that has the private address [10.10.1.100] of the enterprise network, which is assigned with the DHCP, as a source address, also has the global address [100.1.1.1] of the HA as a destination address, and includes an NAI extension and an AAA authentication header is transmitted to the HA (3).

Since an IPSec VPN is statically established between the GW within the enterprise network and the HA, the GW within the enterprise network performs IPSec encapsulation by respectively using the global address [100.1.1.100] of the GW within the enterprise network and the global address [100.1.1.1] of the HA as the source and destination addresses, and transfers the packet to the HA (4).

The HA that receives the location registration request message (Reg. Request) from the MN performs IPSec decapsulation, and transmits an authentication request message (AMR) to an AAA (5).

The AAA accesses a VPN database with the NAI included in the AMR message, and extracts VPN information specific to this user. Because the network of the care-of-address of the MN is the enterprise network, the VPN information, in which IPinIP is set as a VPN type, is set in a service profile. The location registration request message (Reg.Request), in which the service profile is set in an SPC fixing part (shown in Fig. 9), is set in a home agent registration request message (HAR) , which is then transmitted to the HA (6).

The HA sets the VPN information notified with the home agent registration request message (HAR) in the VPN information cache, sets a location registration reply (Reg.Reply) including the service profile in a home agent registration answer message (HAA), and transmits the answer message to the AAA (7).

Upon receipt of the home agent registration answer message (HAA) including the location registration reply (Reg. Reply) of the mobile IP protocol, in which the VPN information is set in the SPC fixing part (shown in Fig. 9), the AAA adds an authenticator to the registration reply (Reg.Reply), and transmits an authentication answer (AMA) to the HA (8).

The HA returns the location registration reply (Reg.Reply) in which IPinIP is set as the VPN type, and establishes an IPinIP VPN in the direction from the HA to the MN (9) and (10).

Upon receipt of the location registration reply (Reg.Reply), the MN establishes an IPinIP VPN in the direction from the MN to the HA according to the service profile.

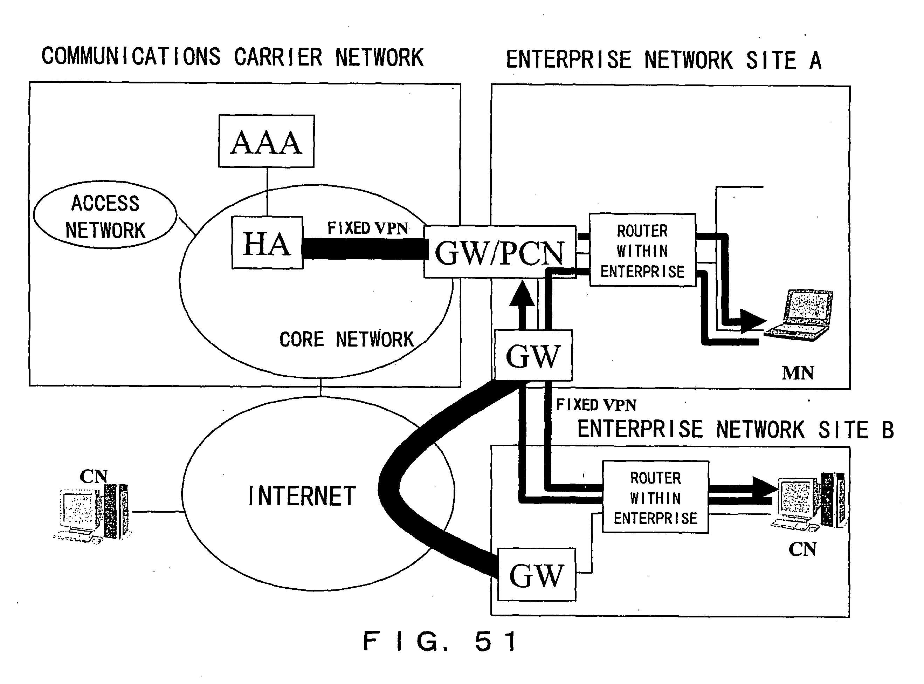

Figs. 51 to 53 explain a path switching method within an enterprise network.

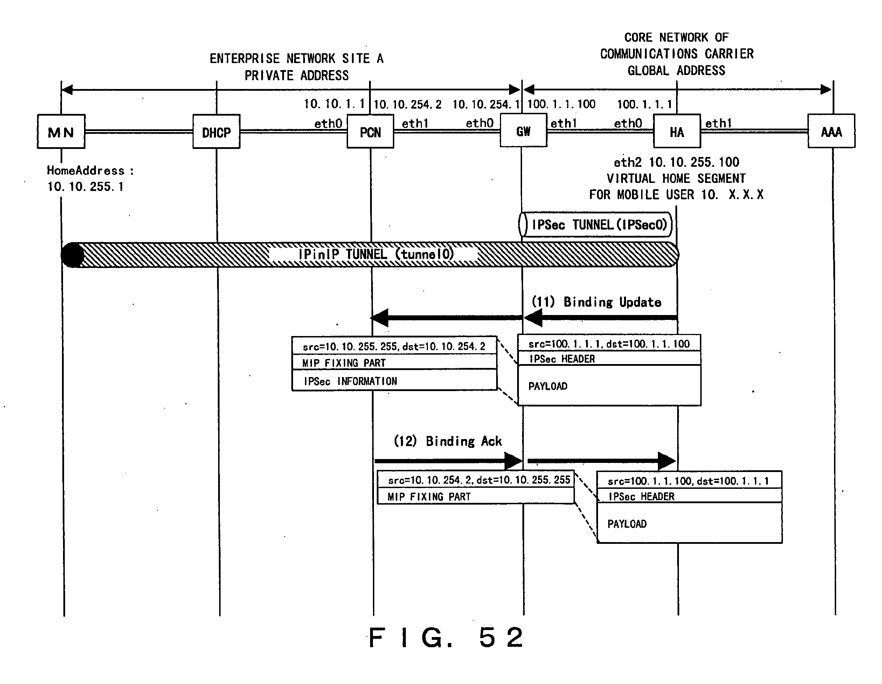

When a communication is made between an MN within an enterprise network and a CN, also within an enterprise network, as shown in Fig. 51, a packet sent from the CN to the MN is not transferred to an HA, but rather, passes through a VPN established between GWs within the enterprise networks, and is looped back by the PCN within the enterprise network, so that the communication closed within the enterprise network can be made. A sequence for instructing the PCN to loop back a packet by the HA, and for optimizing a path is shown in Fig. 52.

In Fig. 52, a binding update message (BU) is first transmitted from the HA to the PCN (11). The message is transferred with IPSec tunneling between a communications carrier network and the GW within the enterprise network.

The PCN sets the notified home address and care-of-address in a mobility binding table. The PCN then sets a tunnel in a routing table so that a packet whose destination address is the home address of the MN is transmitted to the care-of-address of the MN. Then, the PCN returns a binding acknowledge message (BA) to the HA (12).

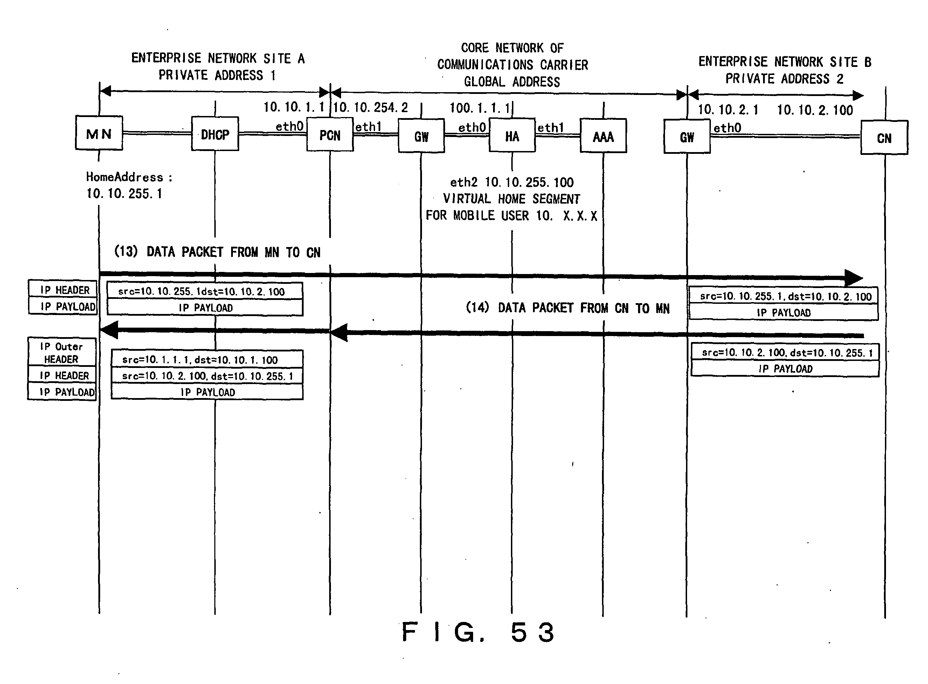

After the path is optimized, a data packet sent from the CN to the MN is routed from the CN to the PCN, looped back by the PCN, and transmitted to the MN. Routing of a data packet after the path optimization is shown in Fig. 53.

In Fig. 53, a packet sent from the MN to the CN is transferred to the CN via the existing VPN within the enterprise network by respectively using the home address [10.10.255.1] of the MN and the private address [10.10.2.100] of the CN as source and destination addresses (13).

A packet sent from the CN to the MN, is transmitted to the PCN by respectively using the private address [10.10.2.100] of the CN and the home address [10.10.255.1] of the MN as source and destination addresses . The PCN references a mobility binding table, encapsulates the packet with the mobile IP protocol by respectively using the private address [10.10.2.100] of the CN and the care-of-address [10.10.1.100] of the MN as source and destination addresses, and transfers the packet to the MN (14).

### - VPN establishment method for each site in a communication between sites when an access is made from a different site within an enterprise network

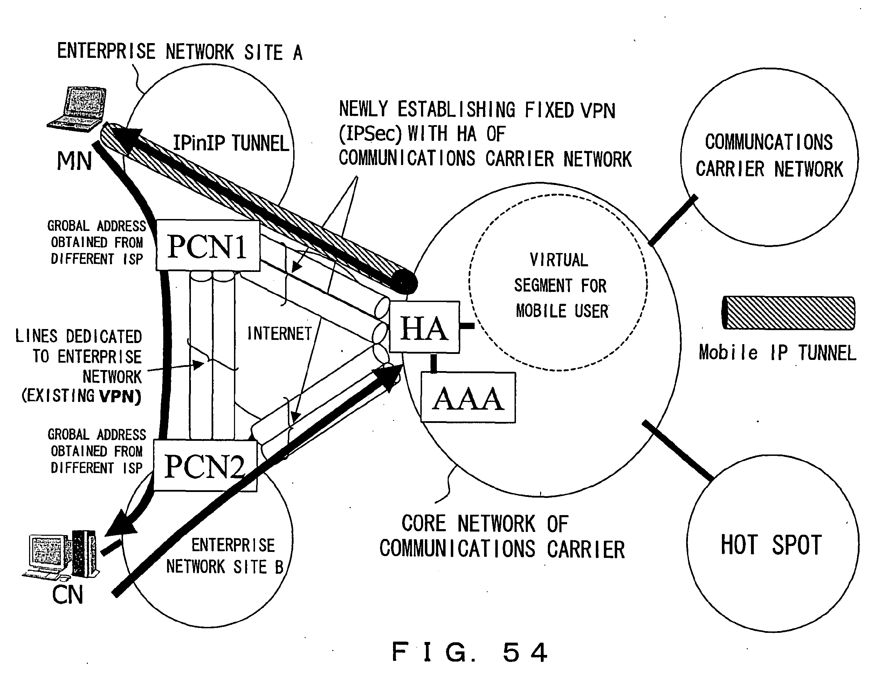

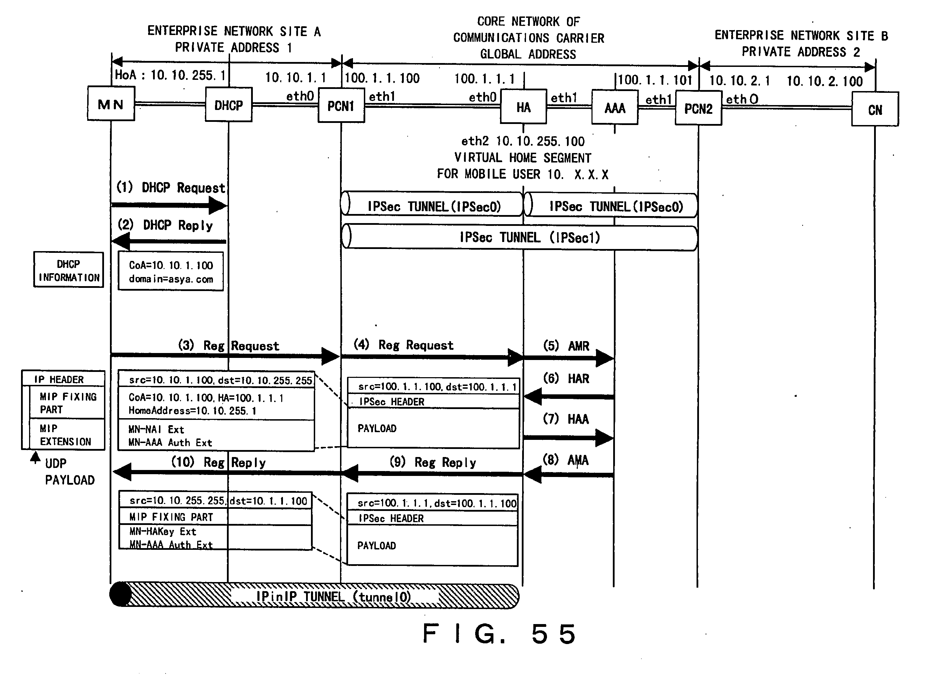

Figs. 54 and 55 explain a communication between sites within the same management domain.

IPinIP VPN establishment and packet routing in the case where a communication is made from an MN staying at a site A within an enterprise network to a CN existing at a site B within an enterprise network in a network in which an existing VPN established between a GW at the site A within the enterprise network and a GW at the site B within the enterprise network is used for a communication between the enterprise networks, PCNs 1 and 2 are respectively arranged at the sites A and B within the enterprise networks, and VPNs are established between the PCNs 1 and 2 and the HA are shown in Fig. 54. A sequence for establishing an IPinIP VPN in a location registration procedure of the MN staying at the site A within the enterprise network is shown in Fig. 55.

In Fig. 55, an IP address [10.10.1.100] and a domain name [asya. com] are first obtained with DHCP (1) and (2).

A location registration request message (Reg.Reqeust) that has the private address [10.10.1.100] of the enterprise network, which is assigned by the DHCP, as a source address, also has the global address [100.1.1.1] of the HA as a destination address, and includes an NAI extension and an AAA authentication header is transmitted to the HA (3).

Since an IPSec VPN is statically established between the PCN 1 and the HA, the PCN 2 performs IPSec. encapsulation by respectively using the global address [100.1.1.100] of the PCN 2 and the global address [100.1.1.1] of the HA as source and destination addresses, and transfers the packet to the HA (4).

The HA that receives the location registration request message (Reg. Request) from the MN performs IPSec decapuslation, and transmits an authentication request message (AMR) to an AAA (5).

The AAA accesses a VPN database with the NAI included in the AMR message, and extracts VPN information specific to this user. Since the network of the care-of-address of the MN is the enterprise network, the AAA sets the VPN information in which IPinIP is set as a VPN type in a service profile. The AAA then sets the location registration request message (Reg.Request), in which the service profile is set in an SPC fixing part ( shown in Fig . 9), in a home agent registration request message (HAR), and transmits the message to the HA (6).

The HA sets the VPN information notified with the home agent registration request message (HAR) in the VPN information cache, sets a location registration reply (Reg.Reply) including the service profile in a home agent registration answer message (HAA), and transmits the answer message to the AAA (7).

Upon receipt of the home agent registration answer message (HAA) including the location registration reply (Reg.Reply) of the mobile IP protocol, in which the VPN information is set in the SPC fixing part (shown in Fig. 9), the AAA adds an authenticator to the registration reply (Reg.Reply), and transmits an authentication answer (AMA) to the HA (8).

The HA returns the location registration reply (Reg. Reply) in which IPinIP is set as the VPN type, and establishes an IPinIP VPN in the direction from the HA to the MN (9) and (10).

Upon receipt of the location registration reply (Reg.Reply), the MN establishes an IPinIP VPN in the direction from the MN to the HA according to the service profile.

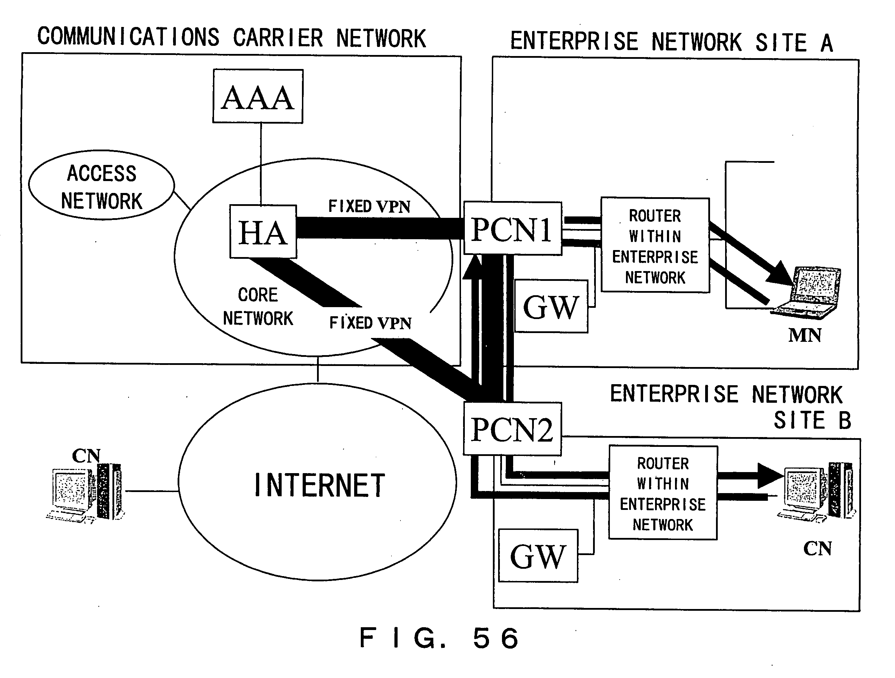

Figs. 56 to 58 explain a path optimization method between PCNs 1 and 2.

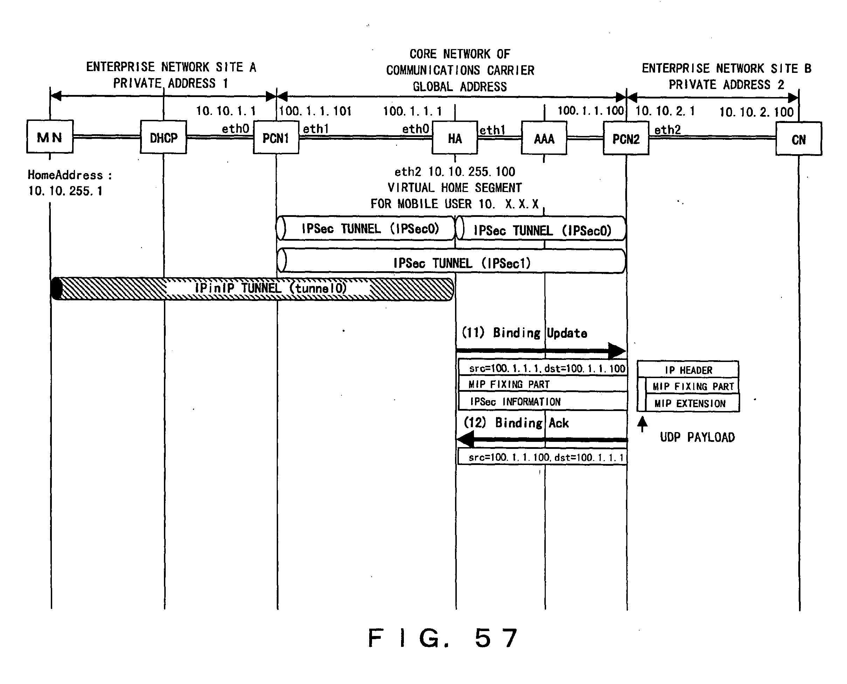

When a communication is made between an MN staying at a site A within an enterprise network and a CN existing at a site B within an enterprise network as shown in Fig. 56, a packet in the direction from the CN to the MN is not transferred to an HA, passes through a VPN established between GWs within the enterprise networks, and is looped back by the PCN 1 at the site A(?) within the enterprise network, so that the communication closed within the enterprise network can be made. A sequence for instructing the PCN to loop back the packet by the HA, and for optimizing a path is shown in Fig. 57.

In Fig. 57, a binding update message (BU) is transmitted from the HA to the PCN 1 on the CN side (11).

The PCN 1 sets notified home address and care-of-address in a mobility binding table, and sets a tunnel in a routing table so that a packet whose destination address is the home address of the MN is transmitted to the PCN 2. Then, the PCN 2 transmits a binding acknowledge message (BA) (12).

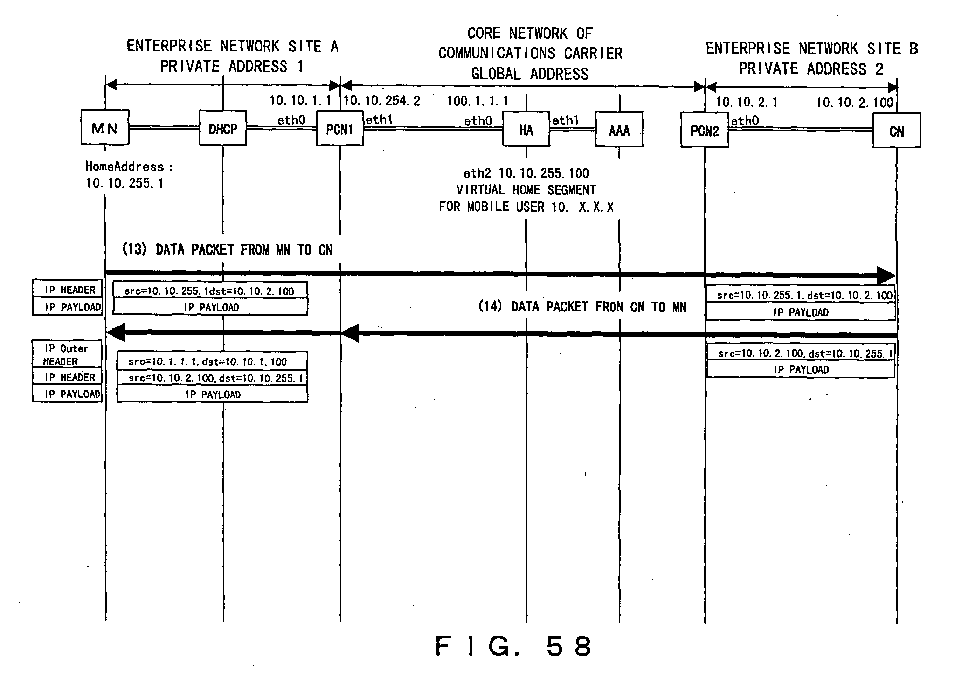

After the path is optimized, a data packet in the direction from the CN to the MN is routed from the CN to the PCN 2 via the PCN 1 with the VPN established between the GWs within the enterprise networks, and transmitted to the MN. Routing of a data packet after the path optimization is shown in Fig. 58.

A packet in the direction from the MN to the CN is transferred to the CN via the PCN 1 by respectively using the home address [10.10.255.1] of the MN and the private address [10.10.2.100] of the CN as source and destination addresses (13).

A packet in the direction from the CN to the MN is transmitted to the PCN 2 by respectively using the private address [10.10.2.100] of the CN and the home address [10.10.255.1] of the MN as source and destination addresses. The PCN 2 (1?) references the mobility binding table, encapsulates the packet with the mobile IP protocol by respectively using the private address [10.10.2.100] of the CN and the care-of-address [10.10.1.100] of the MN as source and destination addresses, and transfers the packet to the MN (14).

### - VPN establishment method used when an access is made from a secure access network (such as a CDMA communications network) of a communications carrier

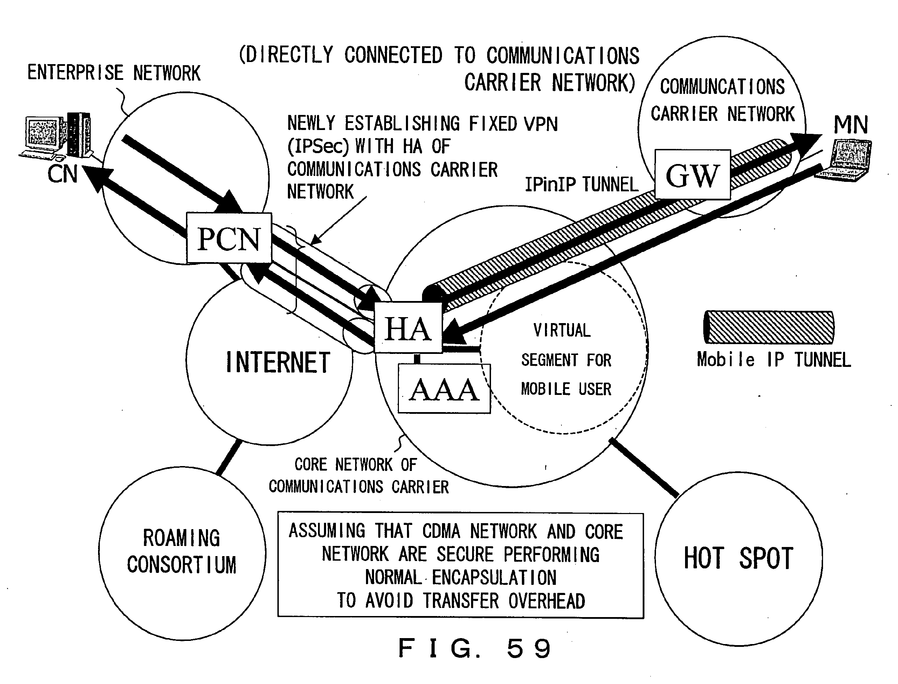

Figs. 59 to 61 explain a communication made via a mobile communications carrier.

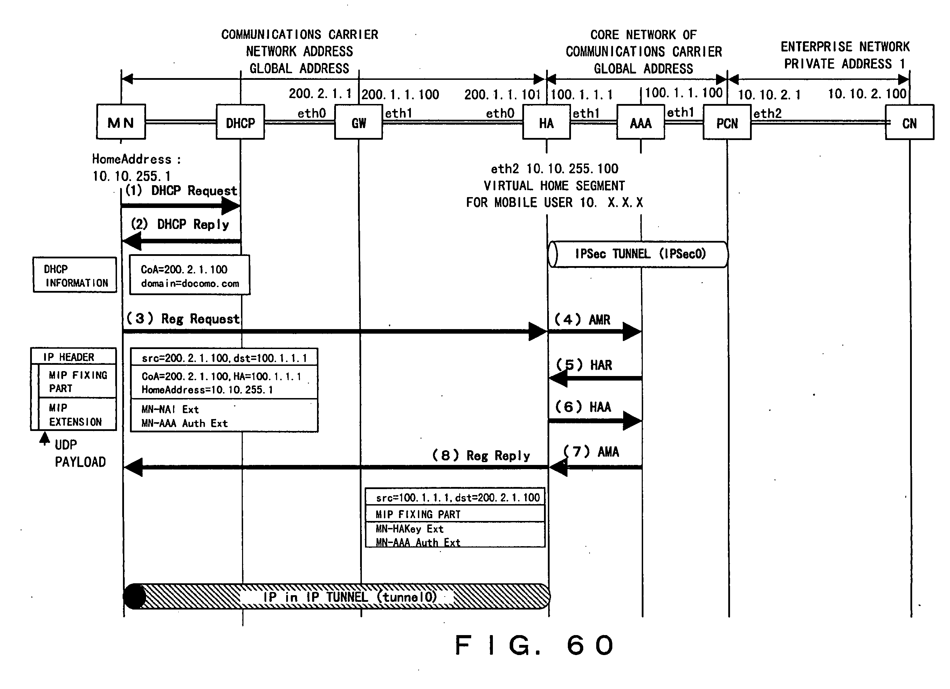

VPN establishment and packet routing in the case where a communication is made between a CN existing in an enterprise network and an MN staying in a foreign network, which is a communications carrier network whose security is guaranteed, in a network in which the MN stays in the communications carrier network whose security is guaranteed by the communications carrier, and an IPSec VPN is established between a PCN arranged in the enterprise network and an HA arranged in the communications carrier network are shown in Fig. 59. A sequence for establishing an IPinIP VPN in a location registration procedure of the MN staying in the foreign network, which is a communications carrier network whose security is guaranteed, is shown in Fig. 60.

In Fig. 60, the MN obtains an IP address [200.2.1.100] and a domain name [docomo.com] with DHCP (1) and (2).

A location registration request message (Reg.Request) that has the address [200.2.1.100] of the communications carrier network, which is assigned with the DHCP, as a source address, also has a global address [200.1.1.101] of the HA as a destination address, and includes an NAI extension and an AAA authentication header is transmitted to the HA (3).

The HA that receives the location registration request message (Reg.Requst) from the MN transmits an authentication request message (AMR) to an AAA (4).

The AAA accesses a VPN database with the NAI included in the AMR message, and extracts VPN information specific to this user. Since the network of the care-of-address of the MN is the secure communications carrier network, the VPN information, in which IPinIP is set as a VPN type, is set in a service profile. The location registration request message (Reg.Request), in which the service profile is set in an SPC fixing part (shown in Fig. 9), is set in a home agent registration request message (HAR) , which is then transmitted to the HA (5).

The HA sets the VPN information notified with the home agent registration request message (HAR) in the VPN information cache, sets a location registration reply (Reg.Reply) including the service profile in a home agent registration answer message (HAA), and transmits the answer message to the AAA (6).

Upon receipt of the home agent registration answer message (HAA) including the location registration reply (Reg.Reply) of the mobile IP protocol, in which the VPN information is set in the SPC-fixing part (shown in Fig. 9), the AAA adds an authenticator to the registration reply (Reg.Reply), and transmits an authentication answer (AMA) to the HA (7).

The HA returns the location registration reply (Reg. Reply) in which IPinIP is set as the VPN type, and establishes an IPinIP VPN in the direction from the HA to the MN (8).

Upon receipt of the location registration reply (Reg.Reply), the MN establishes an IPinIP VPN in the direction from the MN to the HA according to the service profile.

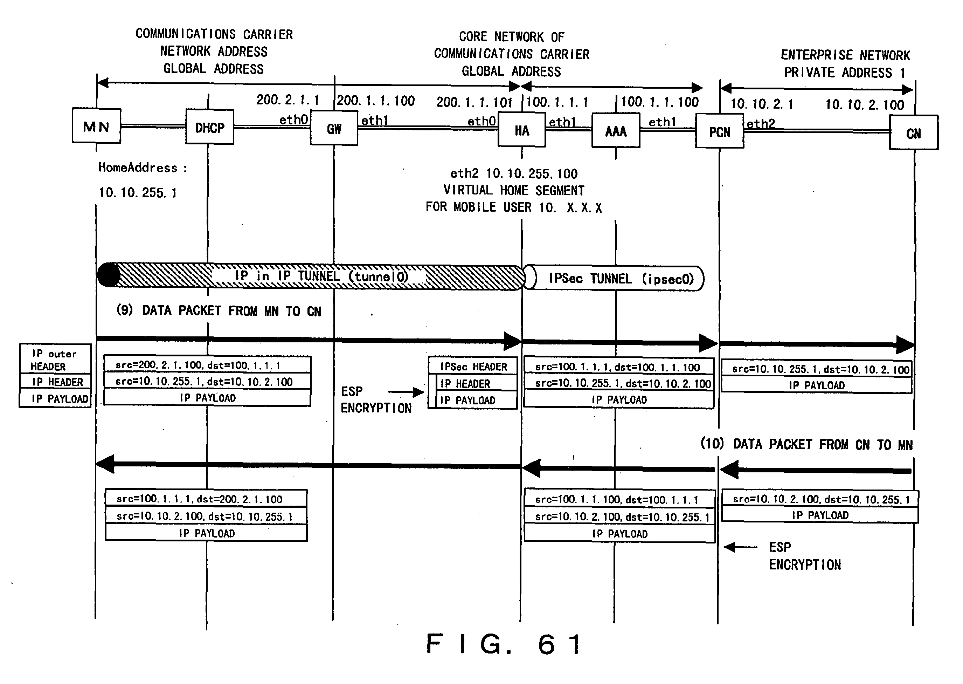

With the VPN established as described above, a communication between the MN and the CN is made via the HA. A data packet exchange sequence is shown in Fig. 61. Fig. 61 shows a connection sequence from the communications carrier network.

In Fig. 61, a packet sent from the MN to the CN, whose source address of an outer IP header is set as the address [200.2.1.100] assigned by the communications carrier network in co-located mode of the MN, whose destination address is set as the address [100.1.1.1] of the HA, whose source address of an internal IP header is set as the home address [10.10.255.1] of the MN, and whose destination address is set as the private address [10.10.2.100] of the CN is generated, and transmitted to the HA. Since an IPSec VPN is statically established between the PCN and the HA, the HA performs IPSec encapsulation by respectively using the global address [100.1.1.1] of the HA and the global address [100.1.1.100] of the PCN as source and destination addresses, and transfers the packet to the PCN. The PCN performs IPSec decapsulation, and transmits the packet to the CN (9).

A packet sent from the CN to the MN is transmitted to the PCN by respectively using the private address [10.10.2.100] of the CN and the home address [10.10.255.1] of the MN as source and destination addresses. The PCN performs IPSec encapsulation by respectively using the global address [100.1.1.100] of the PCN and the global address [100.1.1.1] of the HA as source and destination addresses, and transmits the packet to the HA. The HA performs IPSec decapsulation and mobile IP protocol encapsulation, and transmits the packet to the MN (10).

### - VPN establishment method used when an access is made from an insecure access network (such as a hot spot) of a communications carrier

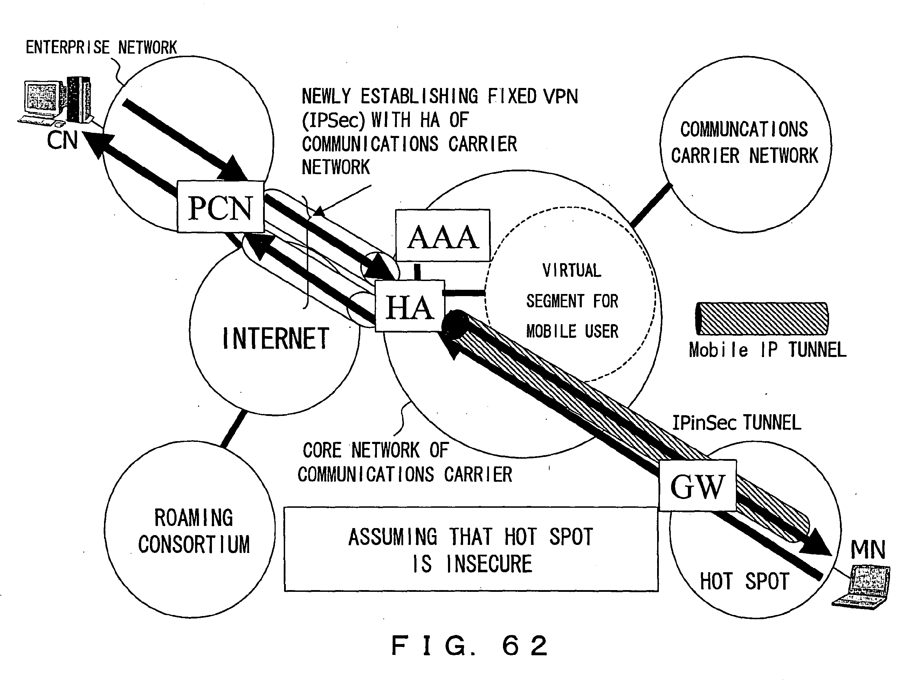

Figs. 62 to 64 explain the operations of a communication made from a hot spot directly connected to a mobile communications carrier network.

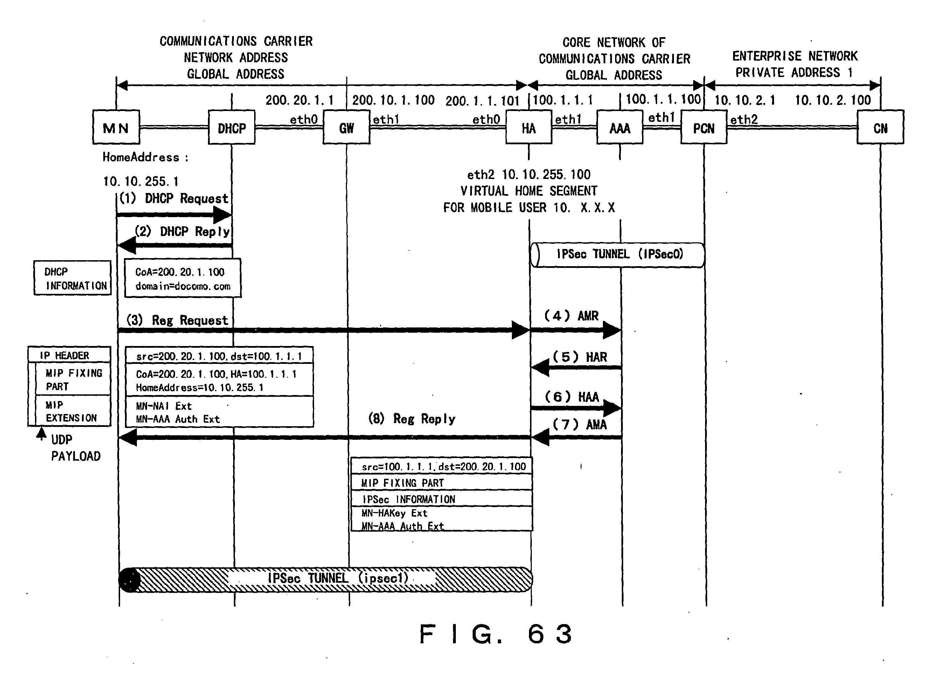

VPN establishment and packet routing in the case where a communication is made between a CN existing within an enterprise network and an MN staying in a foreign network, which is a hot spot network whose security is not guaranteed, in a network in which the MN stays in the hot spot whose security is not guaranteed by the communications carrier, and an IPSec VPN is established between a PCN arranged in the enterprise network and an HA arranged in the communications carrier network is shown in Fig. 62. A sequence for establishing an IPSec VPN in a location registration procedure of the MN staying in the hot spot whose security is not guaranteed is shown in Fig. 63.

In Fig. 63, the MN obtains an IP address [200.20.1.100] and a domain name [docomo.com] with DHCP (messages?) (1) and (2).

A location registration request message (Reg.Request) that has the address [200.20.1.100] of the communications carrier network, which is assigned with the DHCP, as a source address, also has a global address [100.1.1.1] of the HA as a destination address, and includes an NAI extension and an AAA authentication header is transmitted to the HA (3).

The HA that receives the location registration request message (Reg.Requst) from the MN transmits an authentication request message (AMR) to an AAA.

The AAA accesses a VPN database with the NAI included in the AMR message, and extracts VPN information specific to this user. Since the network of the care-of-address of the MN is the insecure communications carrier network, the AAA sets the VPN information, in which IPSec is set as a VPN type, in a service profile. The AAA then sets the location registration request message (Reg.Request), in which the service profile is set in an SPC fixing part (shown in Fig. 9) , in a home agent registration request message (HAR) , and transmits the home agent registration request message to the HA (5).

The HA sets the VPN information notified with the home agent registration request message (HAR) in the VPN information cache, sets a location registration reply (Reg.Reply) including the service profile in a home agent registration answer message (HAA), and transmits the answer message to the AAA (6).

Upon receipt of the home agent registration answer message (HAA) including the location registration reply (Reg.Reply) of the mobile IP protocol, in which the VPN information is set in the SPC fixing part (shown in Fig. 9), the AAA adds an authenticator to the registration reply (Reg.Reply), and transmits an authentication answer (AMA) to the HA (7).

The HA returns the location registration reply (Reg. Reply) , in which IPSec is set as the VPN type, and establishes an IPSec VPN from the HA to the MN (8).

Upon receipt of the location registration reply (Reg.Reply) , the MN establishes an IPSec VPN in the direction from the MN to the HA according to the service profile.

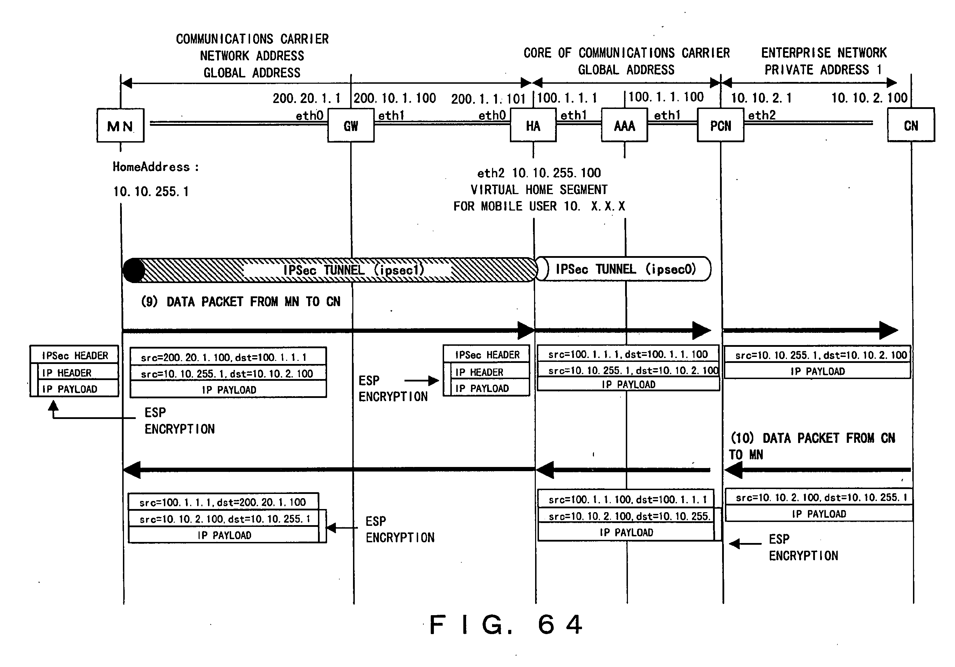

With the VPN established as described above, a communication between the MN and the CN is made via the HA. A data packet exchange sequence is shown in Fig. 64.

A packet sent from the MN to the CN, whose source address of an outer IP header is the address. [200.20.1.100] assigned by the communications carrier network in co-located mode of the MN, whose destination address is the global address [100.1.1.1] of the HA, whose source address of an internal IP header is the home address [10.10.255.1] of the MN, and whose destination address is the private address [10.10.2.100] of the CN is generated, and transmitted to the HA. Since an IPSec VPN is statically established between the PCN and the HA, the HA performs IPSec encapsulation by respectively using the global address [100.1.1.1] of the HA and the global address [100.1.1.100] of the PCN as source and destination addresses, and transfers the packet to the PCN. The PCN performs IPSec decapsulation, and transmits the packet to the CN (9).

A packet sent from the CN to the MN is transmitted to the PCN by respectively using the private address [10.10.2.100] of the CN and the home address [10.10.255.1] of the MN as source and destination addresses. The PCN performs IPSec encapsulation by respectively using the global address [100.1.1.100] of the PCN and the global address [100.1.1.1] of the HA as source and destination addresses, and transmits the packet to the HA. The HA performs IPSec decapsulation and mobile IP protocol encapsulation, and transmits the packet to the MN (10).

### - VPN establishment method used when an access is made from an access network of a different communications carrier that makes a roaming contract with a communications carrier

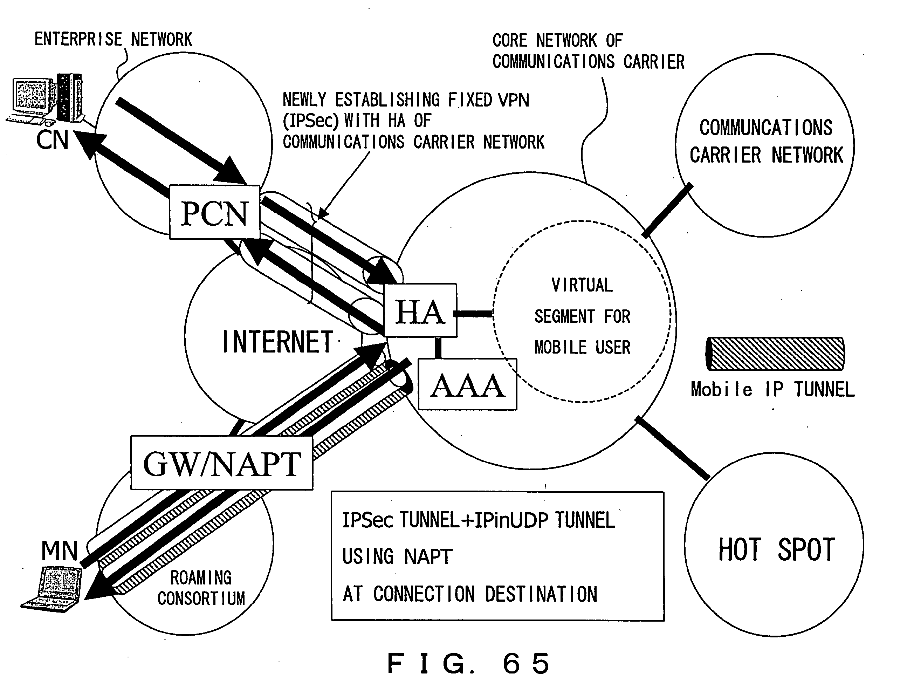

Figs. 65 to 67 explain the operations of a communication made from a roaming partner.

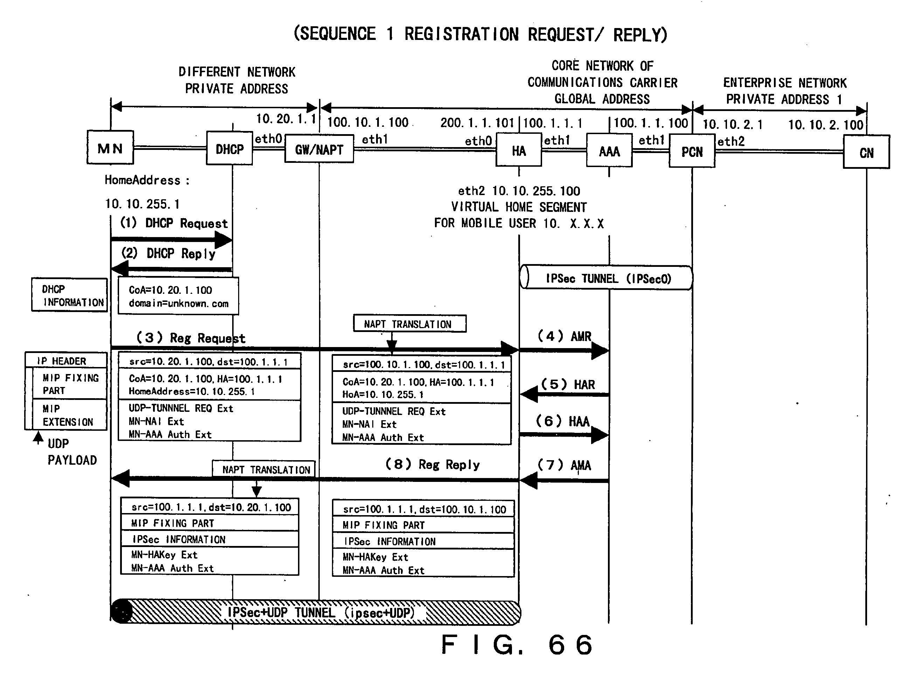

VPN establishment and packet routing in the case where a communication is made between a CN existing in an enterprise network and an MN staying in a foreign network, which is an access network of a different communications carrier that makes a roaming contract in a network in which the MN is staying in the access network of the different communications carrier that makes the roaming contract with the communications carrier, and an IPSec VPN is established between a PCN arranged in the enterprise network and an HA arranged in the communications carrier network are shown in Fig. 65. A sequence for establishing an IPSec+UDP VPN in a location registration procedure of the MN staying in the access network of the different communications carrier that makes the roaming contract with the communications carrier is shown in Fig. 66.

In Fig. 66, the MN obtains an IP address [10.20.1.100] and a domain name [unknown.com] with DHCP (messages?) (1) and (2).

A location registration request message (Reg.Request) that has the address [10.20.1.100] assigned with the DHCP by the communications carrier network of the roaming partner as a source address, also has the global address [100.1.1.1] of the HA as a destination addresses, and includes an NAI extension and an AAA authentication header is transmitted to the HA (3).

The HA that receives the location registration request message (Reg.Requst) from the MN transmits an authentication request message (AMR) to an AAA (4).

The AAA accesses a VPN database with the NAI included in the AMR message, and extracts VPN information specific to this user. Since the network of the care-of-address of the MN is neither the enterprise network, the secure communications carrier network, nor the insecure communications carrier network, the network is determined to be the access network of the other communications carrier that makes the roaming contract, and VPN information in which IPSec+UDP is set as a VPN type is set in a service profile. The location registration request message (Reg.Request), in which the service profile is set in an SPC fixing part (shown in Fig. 9), is set in a home agent registration request message (HAR) , which is then transmitted to the HA (5).

The HA sets the VPN information notified with the home agent registration request message (HAR) in the VPN information cache, sets a location registration reply (Reg.Reply) including the service profile in a home agent registration answer message (HAA), and transmits the answer message to the AAA (6).

Upon receipt of the home agent registration answer message (HAA) including the location registration reply (Reg. Reply) of the mobile IP protocol, in which the VPN information is set in the SPC fixing part (shown in Fig. 9), the AAA adds an authenticator to the registration reply (Reg.Reply), and transmits an authentication answer (AMA) to the HA (7).

The HA returns the location registration reply (Reg. Reply) in which IPSec+UDP is set as the VPN type, and establishes an IPSec+UDP VPN in the direction from the HA to the MN (8).

Upon receipt of the location registration reply (Reg. Reply) , the MN establishes an IPSec+UDP VPN in the direction from the MN to the HA according to the service profile.

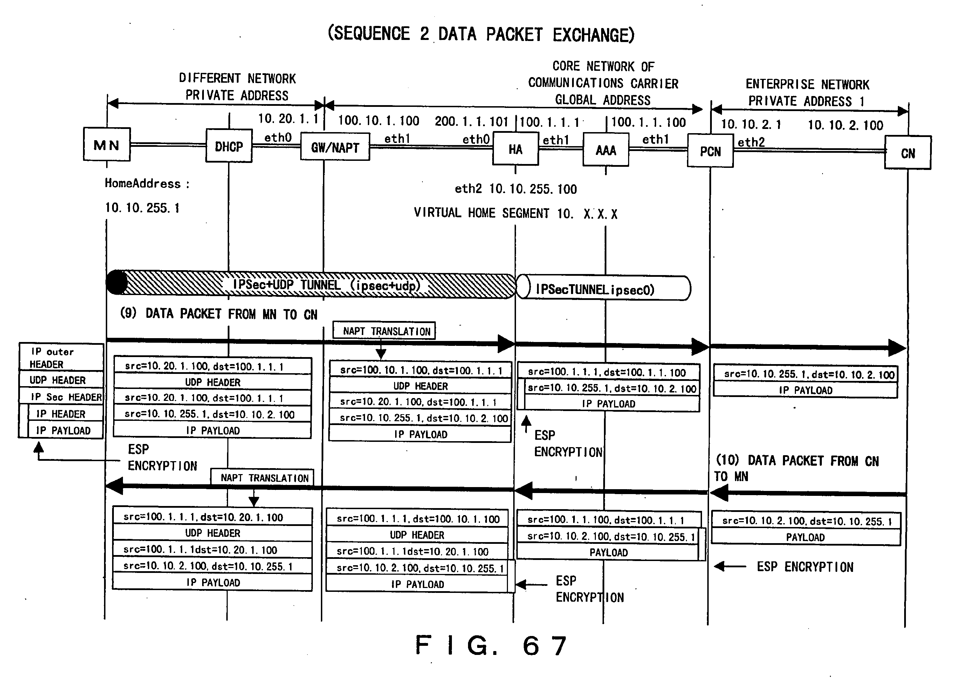

With the VPN established as described above, a communication between the MN and the CN is made. A data packet exchange sequence is shown in Fig. 67.

As a packet sent from the MN to the CN, a packet whose source address of an outer IP header is the address [10.20.1.100] assigned by the communications carrier network in co-located mode of the MN, whose destination address is the global address [100.1.1.1] of the HA, whose source address of an internal IP header is the home address [10.10.255.1] of the MN, and whose destination address is the private address [10.10.2.100] of the CN is generated, and transmitted to the HA. The source address is rewritten to a global address [100.10.1.100] of the GW with an NAT/NAPT function of the GW, and the packet is transferred to the HA. Since an IPSec VPN is statically established between the PCN and the HA, the HA performs IPSec+UDP encapsulation by respectively using the global address [100.1.1.1] of the HA and the global address [100.1.1.100] of the PCN as source and destination addresses, and transfers the packet to the PCN. The PCN performs IPSec+UDP decapsulation, and transmits the packet to the CN (9).

A packet in the direction from the CN to the MN is transmitted to the HA by respectively using the private address [10.10.2.100] of the CN and the home address [10.10.255.1] of the MN as source and destination addresses. The PCN performs IPSec encapsulation by respectively using the global address [100.1.1.100] of the PCN and the global address [100.1.1.1] of the HA as source and destination addresses, and transmits the packet to the HA. The HA performs IPSec+UDP decapsulation and mobile IP protocol encapsulation, and transmits the packet to the MN. The destination address is then rewritten to the private address [10.10.1.100] of the GW with the NAT/NAPT function of the GW, and the packet is transferred to the MN (10).

### - communication made from one foreign network to another

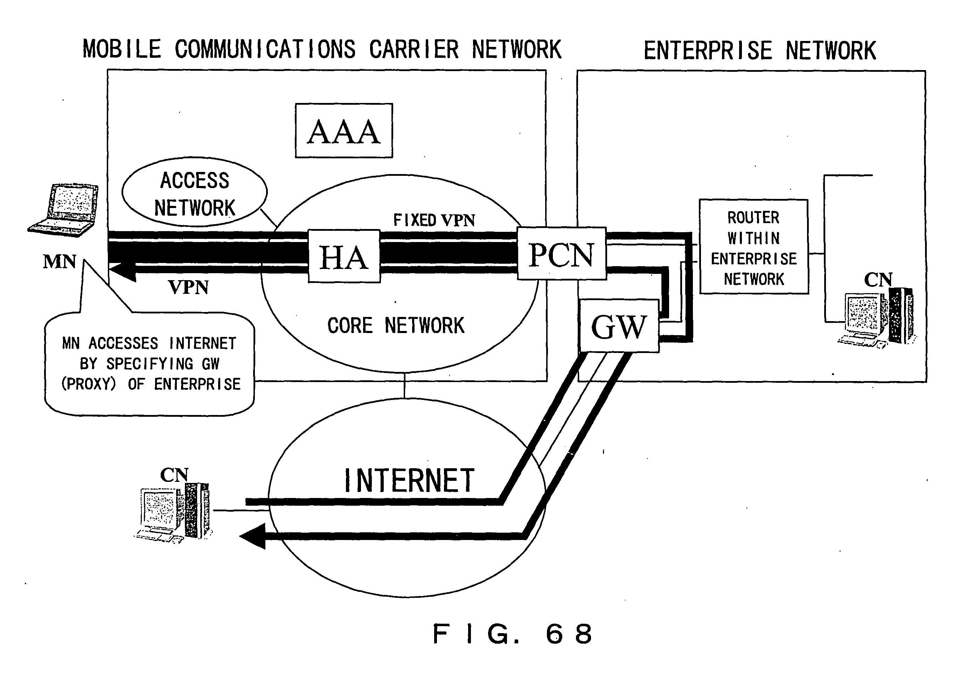

Fig. 68 explains the operations performed in the case where a connection is made to the Internet via a proxy within an enterprise network.

This preferred embodiment shows packet routing in the case where an MN staying in a foreign network makes a communication with a network outside an enterprise network. A packet route between the foreign networks is shown in Fig. 68.

The MN transmits a packet to the foreign network by using a GW within the enterprise network as a proxy address. A packet from the foreign network is transmitted to the MN via the GW of the enterprise network.

### - path optimization when an access is made from a secure access network (such as FOMA and CDMA) of a communications carrier to an enterprise network

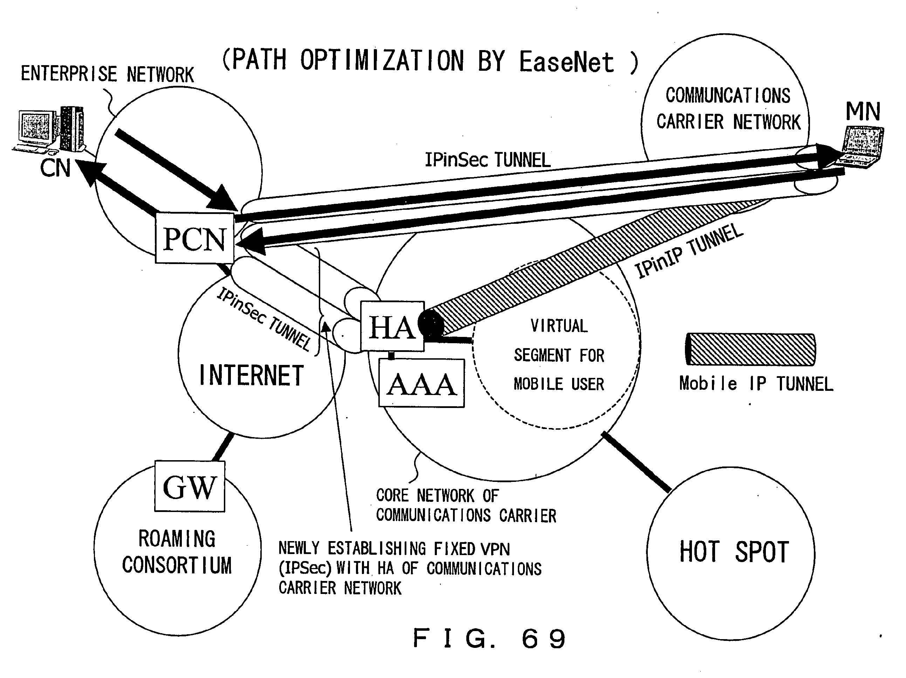

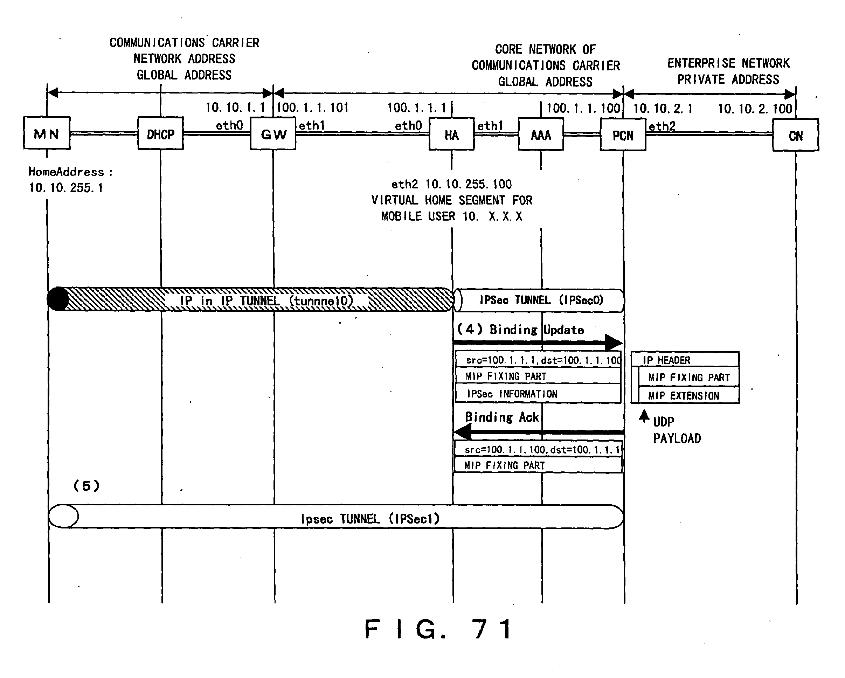

Figs. 69 and 71 explain the operations of a communication made via a mobile communications carrier network.

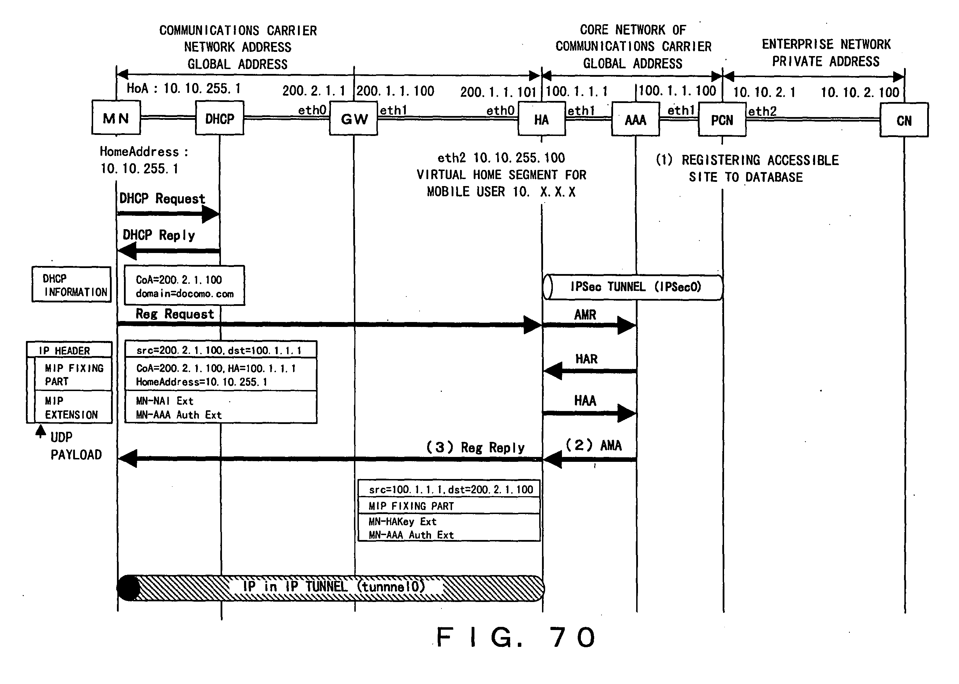

An IPSec VPN establishing method with which a communication is directly made between an MN and a PCN not via an HA by applying the mechanism of path optimization of EaseNet (disclosed by Japanese Patent Application No. 2000-50220); when a communication is made from the MN of a secure access network of a communications carrier to a CN within an enterprise network in the case where an IPSec VPN is established between the PCN of the enterprise network and an HA arranged in the communications carrier network, and an access network connected to a core network of the communications carrier is a secure access network (such as CDMA) of the communications carrier in Fig. 69 is shown in Fig. 70.

The enterprise registers an accessible site in the secure access network (such as CDMA) of the communications carrier with IPSec as a service profile (1).

When the MN is connected to the secure access network (such as CDMA) of the communications carrier, EaseNet downloads VPN information to the HA based on the preset service profile at the time of authentication.

VPN information of all of sites specified with a location registration reply message are distributed to the MN (2) and (3).

The HA distributes the VPN information to a PCN at each of the specified sites with a binding update message (4).

With the distributed VPN information, the PCN and the MN directly establish an IPSec VPN for a partner node. In this way, a communication between the MN and a specified site within the enterprise network can be made not via the HA.

When the MN moves, a VPN is reestablished with a procedure similar to that at the time of authentication.

### - path optimization when an access is made from an insecure access network (such as a hot spot) of a communications carrier to an enterprise network

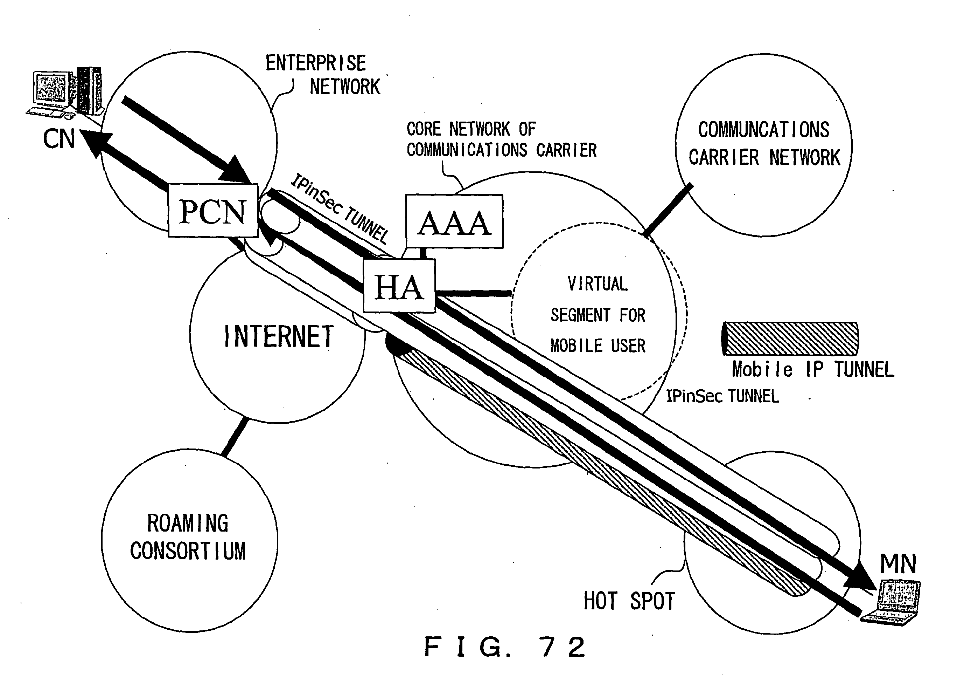

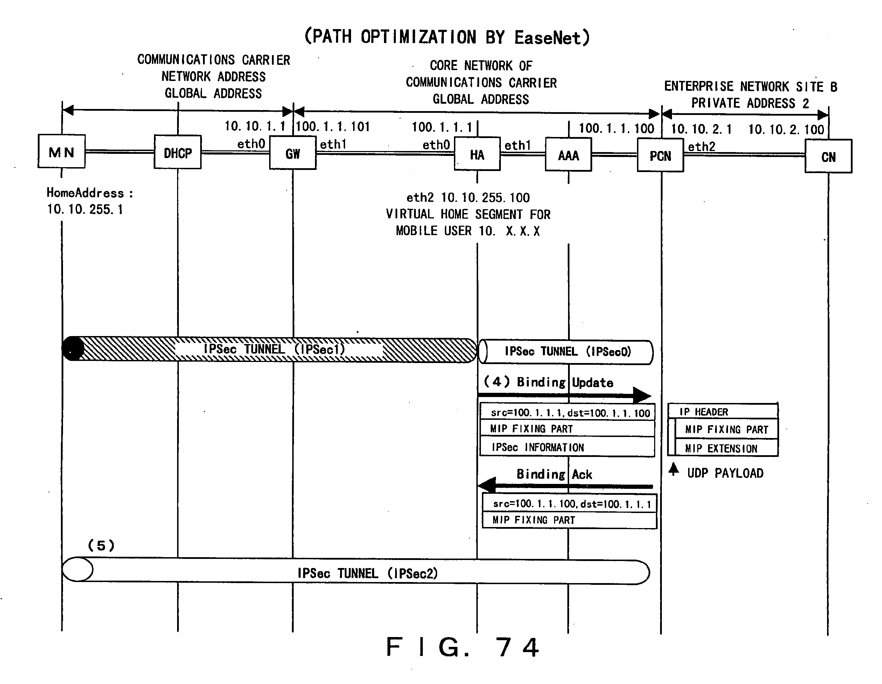

Figs. 72 to 74 explain the operations of a communication made from a hot spot directly connected to a mobile communications carrier network.

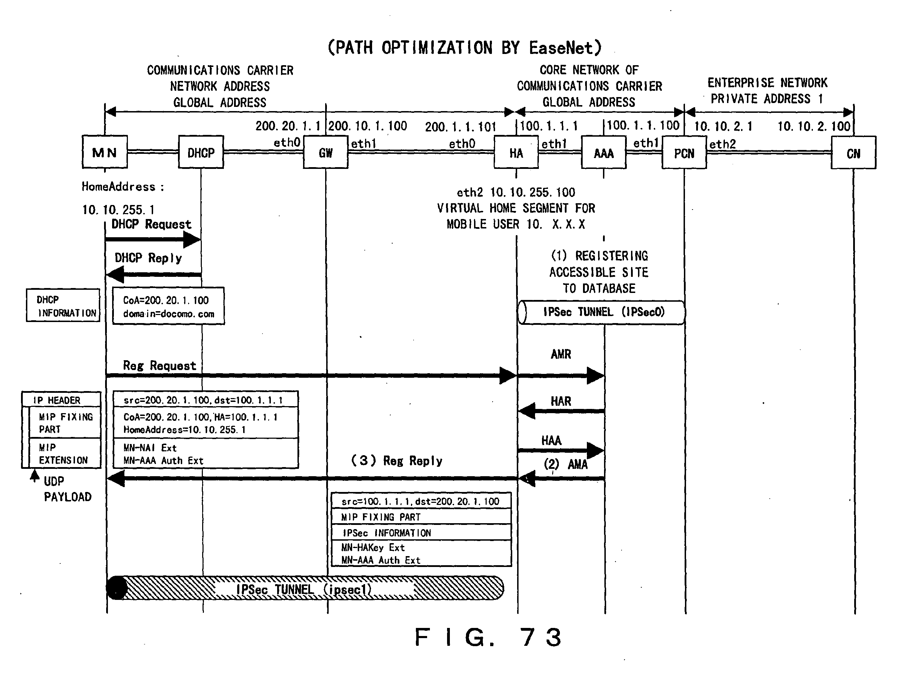

An IPSec VPN establishing method with which a communication is directly made between an MN and a CPN not via an HA by applying the mechanism of path optimization of Ease Net (disclosed by Japanese Patent Application No. 2000-50220), when a communication is made from the MN in an insecure access network of a communications carrier to a CN within an enterprise network in the case where an IPSec VPN is established between a PCN of the enterprise network and an HA arranged in the communications carrier network, and an access network connected to a core network of the communications carrier is an insecure access network (such as a hot spot) of the communications carrier in Fig. 72 is shown in Fig. 73.

The enterprise registers an accessible site in the insecure access network (such as a hot spot) of the communications carrier with IPSec as a service profile (1).

When the MN is connected to the insecure access network (such as a hot spot) of the communications carrier, EaseNet downloads VPN information to the HA based on the preset service profile.

VPN information of all of sites specified with a location registration reply message are distributed to the MN (2) and (3).

The HA distributes the VPN information to a PCN at each of the specified sites with a binding update message (4).

With the distributed VPN information, the PCN and the MN directly establish an IPSec VPN for a partner node. In this way, a communication between the MN and a specified site within the enterprise network can be made not via the HA.

When the MN moves, a VPN is reestablished with a procedure similar to that at the time of authentication. - path optimization when an access is made from an access network of a different communications carrier that makes a roaming contract with a communications carrier to an enterprise network

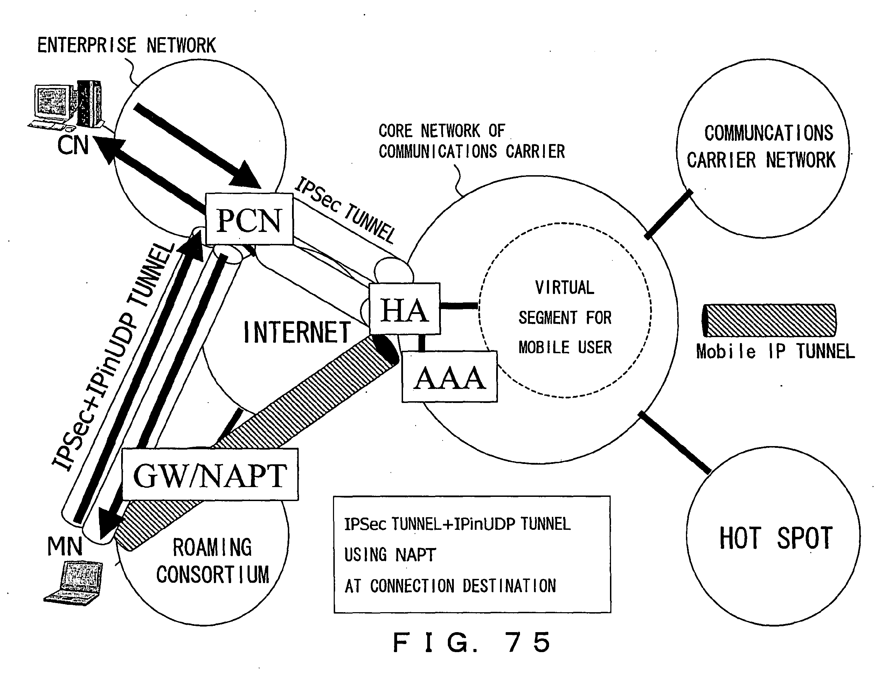

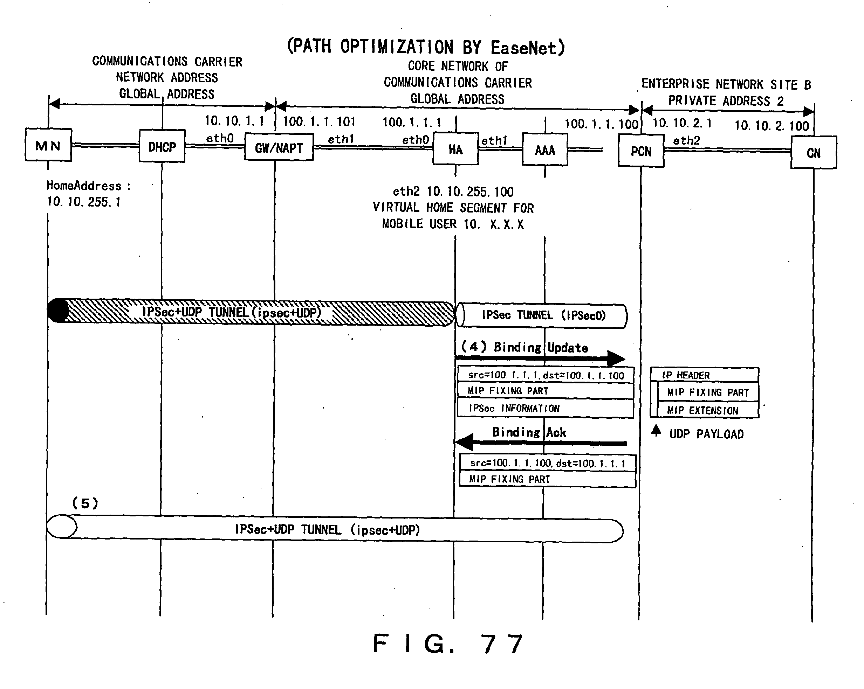

Fig. 75 to 77 explain the operations of a communication made from a roaming partner.

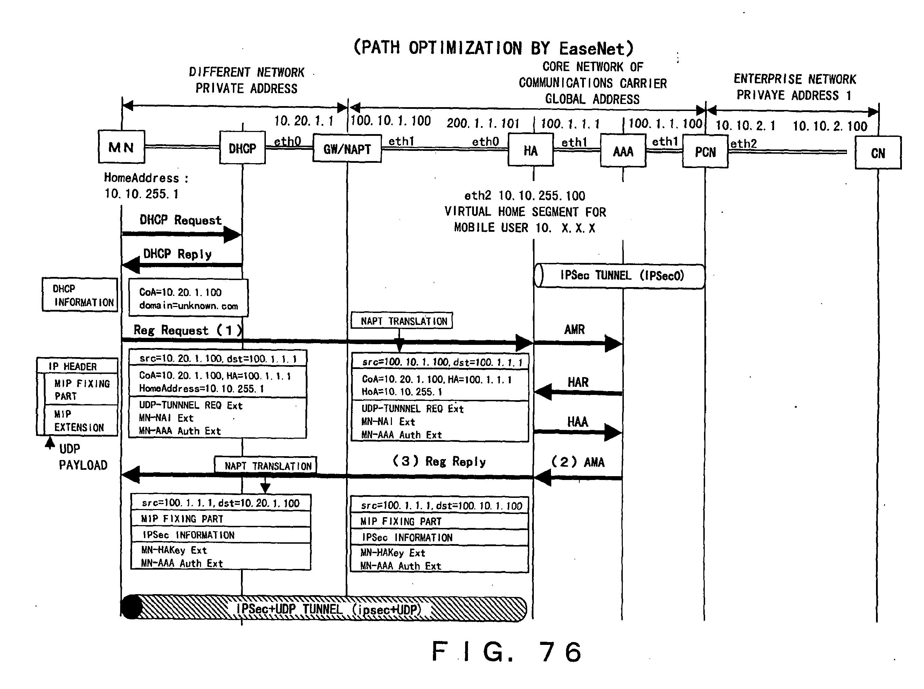

An IPSec+UDP VPN establishing method with which a communication is directly made between an MN and a CPN not via an HA by applying the mechanism of path optimization of EaseNet (disclosed by Japanese Patent Application No. 2000-50220), when a communication is made from the MN in a secure access network of a communications carrier to a CN within an enterprise network in the case where an IPSec VPN is established between a PCN of the enterprise network and an HA arranged in the communications carrier network, and an access network connected to a core network of the communications carrier is an access network of another communications carrier that makes a roaming contract with the communications carrier in Fig. 75 is shown in Fig. 76.

The enterprise registers the access network of the other communications carrier, which makes the roaming contract with the communications carrier, as an accessible location with IPSec+UDP as a service profile.

When the MN is connected to the access network of the other communications carrier that makes the roaming contract with the communications carrier, EaseNet downloads VPN information to the HA based on the preset service profile.

VPN information of all of sites specified with a location registration reply message are distributed to the MN (1), (2) and (3).

The HA distributes the VPN information to a PCN at each of the specified sites with a binding update message (4).

With the distributed VPN information, the PCN and the MN directly establish an IPSec+UDP VPN for a partner node. In this way, a communication between the MN and a specified site within the enterprise can be made not via the HA.

When the MN moves, a VPN is reestablished with a: procedure similar to that at the time of authentication.

According to the present invention, a virtual private network is established in a procedure for establishing a session that can be communicated even when a first mobile means moves, so that a mobile communication and a virtual private network can be established at the same time. Accordingly, a communication environment can be created quickly, for example, at the time of a handoff resultant from the move of the first means. Consequently, a smooth handoff can be implemented. Additionally, the first means can make a communication while fixedly holding a first address, whereby the first means can make a communication by using the same address in whichever network it visits. Accordingly, the first address can be continuously used when a transmission is attempted to be made to the first means, which leads to improvements in convenience.

Additionally, to implement this, a home agent that comprises a means for establishing a virtual private network between a mobile node and the home agent itself, and allows the mobile node to enter the virtual private network by notifying the mobile node of information that is obtained by authenticating the mobile node and required to establish the virtual private network is arranged, thereby eliminating the need for a separate procedure to make the mobile node enter the virtual private network.

Furthermore, secrecy of a network in which a mobile node is staying is detected from a care-of-address or a domain, which is transmitted from the mobile node, and a communications protocol having high secrecy is set if the secrecy is weak. This reduces the possibility that important information leaks out.

A mobile node comprises a means for obtaining information of a network in which the mobile node itself is staying, and changes a communications protocol for starting a communication according to the nature of the network in which the mobile node itself is staying. This can also prevent important information from leaking out.

Especially, a mobile node uses one tunnel for a communication, which serves both as a tunnel for a mobile IP communication, and as a tunnel for a communication of a private network, so that a handoff can be smoothly performed.

## Claims

1. A virtual private network system, which controls a communication with a second address, is connected to a first network, and makes a communication via a second network with a first address used in the first network being a private network, comprising:
first mobile means for making a communication by fixedly holding the first address; and
second means for obtaining a correspondence between the first address of said first means and the second address for making a communication via the second network, and authenticating said first means and forming a virtual private network between a communicating device accessing the first network and said second means via the second network in a procedure for establishing a session that can be communicated even when said first means moves.

2. The virtual private network system according to claim 1, further comprising
means for optimizing a communications path between said first means and a node, when said first means makes a communication with the node connected to the first network.

3. The virtual private network system according to claim 1, wherein
a virtual private network is established beforehand between said second means and the first network.

4. The virtual private network system according to claim 1, wherein
a protocol that enables a mobile communication is a mobile IP.

5. The virtual private network system according to claim 4, wherein
said second means notifies said first means of information about a virtual private network, and establishes a virtual private network between said first means and said second means in a tunnel set-up procedure of the mobile IP between said first means and said second means itself.

6. The virtual private network system according to claim 5, wherein
co-located mode of said first means is used to set the mobile IP, and to establish the virtual private network .

7. The virtual private network system according to claim 6, wherein
the second network is configured by a public network and a mobile communications network possessed by a communications carrier, and an IPinIP tunnel is set up between said first means and said second means if the mobile communications network accessed by said first means is a secure access network.

8. The virtual private network system according to claim 6, wherein
the second network is configured by a public network and a mobile communications network possessed by a communications carrier, and an IPSec tunnel is set up between said first means and said second means if the mobile communications network accessed by said first means is an insecure access network.

9. The virtual private network system according to claim 6, wherein
the second network is configured by a public network, a first mobile communications network possessed by a first communications carrier, and a second mobile communications network possessed by a second communications carrier, and an IPSec+UDP tunnel is set up between said first means and said second means when said first means accesses the first network from the first mobile communications network via the second mobile communications network and the public network.

10. The virtual private network system according to claim 1, wherein
a fixed virtual private network is established beforehand between said second means and the first network.

11. A home agent enabling a communication between a mobile node and a node connected to a private network according to a mobile IP, comprising:
means for establishing a virtual private network between the mobile node and the home agent;
means for authenticating an access of the mobile node; and
means for notifying the mobile node of information about the virtual private network, which is obtained from said authenticating means.

12. A router enabling a communication between a mobile node and a node connected to a private network, comprising:
means for detecting a care-of-address or a domain of a location registration request transmitted from the mobile node; and
a communications controlling means for causing a communication between the mobile node and the node to be made via the router with a communications protocol having low secrecy between the mobile node and the router if a detected care-of-address or domain indicates a network that can guarantee secrecy of a communication, or with a communications protocol having high secrecy between the mobile node and the router if the care-of-address indicates a network that cannot fully guarantee the secrecy of the communication.

13. A router enabling a communication between a mobile node and a node connected to a private network, comprising:
means for making a comparison between a care-of-address and a source address of a location registration request transmitted from the mobile node; and
a communications controlling means for causing a communication between the mobile node and the node to be made via the router with a communications protocol having low secrecy between the mobile node and the router if the care-of-address does not indicate a predetermined communications carrier and matches the source address, or with a communications protocol having high secrecy between the mobile node and the router if the care-of-address mismatches the source address.

14. The router according to claim 13, wherein
the communications protocol having high secrecy between the mobile node and the router is an IPSec+UDP tunnel.

15. A mobile node enabling a communication with a node connected to a private network, comprising:
obtaining means for obtaining information of a network to which the mobile node itself currently belongs; and
controlling means for performing a control to transmit a location registration request message to a private address of a router that manages a location of the mobile node if the obtained information of the network indicates a private network, to transmit a location registration request message to a global address of the router if the obtained information of the network indicates a predetermined communications carrier network, or to transmit a location registration request message including a request to set up a communications path having high secrecy to the global address of the router in other cases.

16. The mobile node according to claim 15, wherein
the communications protocol having high secrecy between the mobile node and the router is an IPSec+UDP tunnel.

17. A mobile node in a system enabling a communication between a mobile node and a node connected to a private network, comprising:
means for setting up a tunnel for a mobile IP communication; and
means for setting up a tunnel for a communication of the private network in a set-up procedure of the tunnel for the mobile IP communication, wherein
the mobile node makes a communication by using one tunnel for a communication, which serves both as a tunnel for a mobile IP communication and as a tunnel for a private network communication.

18. A communications controlling method for use in a virtual private network system, which controls a communication with a second address, is connected to a first network, and makes a communication via a second network with a first address used in the first network being a private network, comprising:
arranging a mobile node making a communication by fixedly holding a first address; and
arranging a router which obtains a correspondence between the first address of the mobile node and the second address for making a communication via the second network, and authenticates the mobile node and forms a virtual private network between a communicating device accessing the first network and the router via the second network in a procedure for establishing a session that can be communicated even when the mobile node moves.

19. The communications controlling method according to claim 18, further comprising
optimizing a communications path between the mobile node and a node when the mobile node makes a communication with the node connected to the first network.

20. The communications controlling method according to claim 18, wherein
a virtual private network is established beforehand between a home agent and the first network.

21. The communications controlling method according to claim 18, wherein
a protocol that enables a mobile communication is a mobile IP.

22. The communications controlling method according to claim 21, wherein
a home agent notifies the mobile node of information about a virtual private network, and establishes a virtual private network between the mobile node and the router in a mobile IP tunnel set-up procedure with the mobile terminal.

23. The communications controlling method according to claim 21, wherein
co-located mode of the mobile node is used to set the mobile IP, and to establish the virtual private network.

24. The communications controlling method according to claim 22, wherein
the second network is configured by a public network and a mobile communications network possessed by a communications carrier, and an IPinIP tunnel is set up between the home agent and the mobile node if the mobile communications network accessed by the mobile node is a secure access network.

25. The communications controlling method according to claim 22, wherein
the second network is configured by a public network and a mobile communications network possessed by a communications carrier, and an IPSec tunnel is set up between the home agent and the mobile node if the mobile communications network accessed by the mobile node is an insecure access network.

26. The communications controlling method according to claim 22, wherein
the second network is configured by a public network, a first mobile communications network possessed by a first communications carrier, and a second mobile communications network possessed by a second communications carrier, and an IPSec+UDP tunnel is set up between the router and the mobile node if the mobile node accesses the first network from the first mobile communications network via the public network to the second mobile communications network.

27. The communications controlling method according to claim 17, wherein
a fixed virtual private network is established beforehand between the router and the first network.

28. A communications controlling method for use in a router enabling a communication between a mobile node and a node connected to a private network, comprising:
detecting a care-of-address of a location registration request transmitted from the mobile node; and
causing a communication between the mobile node and the node to be made with a communications protocol having low secrecy if a detected care-of-address indicates an access network whose communication secrecy can be guaranteed by a communications carrier, or with a communications protocol having high secrecy if the detected care-of-address indicates an access network whose communication secrecy cannot be fully guaranteed by a communications carrier.

29. A communications controlling method for use in a router enabling a communication between a mobile node and a node connected to a private network, comprising:
making a comparison between a care-of-address and a source address of a location registration request transmitted from the mobile node;
and
causing a communication between the mobile node and the node to be made with a communications protocol having low secrecy if the care-of-address matches the source address, or with a communications protocol having high secrecy if the care-of-address mismatches the source address.

30. A communications controlling method for use in a mobile node enabling a communication with a node connected to a private network, comprising:
obtaining information of a network to which the mobile node itself currently belongs; and
performing a control to transmit a location registration request message to a private address of a router that manages a location of the mobile node if the obtained information of the network indicates a private network, a control to transmit a location registration request message to a global address of the router if the obtained information of the network indicates an access network of a communications carrier that makes a mutual connection contract with the private network, or a control to transmit a location registration request message including a request to set up a communications path having high secrecy to the global address of the home agent in other cases.

31. A communications controlling method for use in a mobile node in a system enabling a communication between a mobile node and a node connected to a private network according to a mobile IP, comprising:
setting up a tunnel for a mobile IP communication; and
setting up a tunnel for a communication of the private network in a set-up procedure of the tunnel for the mobile IP communication, wherein
the mobile node makes a communication with one tunnel for a communication, which serves both as a tunnel for a mobile IP communication and as a tunnel for a private network communication.
